# EUROPEAN PATENT APPLICATION

(11) **EP 4 847 594 A1**
(43) Date of publication of application: **02.12.2026**
(21) Application number: 25179931.8
(22) Date of filing: 30.05.2025
(51) Int. Cl.: C11D 3/37

(54) **FABRIC AND HOME CARE COMPOSITIONS**

(71) Applicant: The Procter & Gamble Company, Cincinnati, OH 45202 (US)
(72) Inventor: SI, Gang, Newcastle upon Tyne, NE12 9BZ (GB); GORCZYNSKA-COSTELLO, Katarzyna, Newcastle upon Tyne, NE12 9BZ (GB); HUELSKOETTER, Frank, 65824 Schwalbach am Taunus (DE); SCHOEN, Florian, 67056 Ludwigshafen am Rhein (DE); JEHN-RENDU, Christian, 67056 Ludwigshafen am Rhein (DE); KUENNE, Holger, 67056 Ludwigshafen am Rhein (DE); GRIMM-LENZ, Jana, 67056 Ludwigshafen am Rhein (DE)
(74) Representative: P&G Patent Belgium UK

(57) **Abstract**

The present invention relates to a fabric and home care composition comprising a graft polymer.

## Description

### FIELD OF THE INVENTION

Fabric and home care compositions comprising a graft polymer.

### BACKGROUND OF THE INVENTION

Polymers are widely used in fabric and home care compositions to deliver various benefits, including cleaning, whiteness, dye transfer prevention, and more. Many conventional polymers used in fabric and home care compositions are either non-biodegradable or poorly biodegradable, which has raised some environmental concerns. Various attempts have been made to incorporate more biodegradable polymers into fabric and home care compositions. However, achieving a balance between enhanced biodegradability, performance and stability remains a challenge.

Fabric and home care composition comprising graft polymers comprising polyalkylene oxide backbone and polyvinyl ester side chains grafted onto the backbone are known:
WO2007138053 discloses amphiphilic graft polymers based on water-soluble polyalkylene oxides as a graft base and side chains formed by polymerization of a vinyl ester component, no information about biodegradability of the respective graft polymers is disclosed herein.
WO2021160851 discloses graft polymer comprising a block copolymer backbone as a graft base, wherein said block copolymer backbone is obtainable by polymerization of at least two monomers selected from the group of ethylene oxide, 1,2-propylene oxide, 1,2-butylene -oxide, 2,3-butylene oxide, 1,2-pentene oxide or 2,3-pentene oxide. The inventive graft polymers reach 28-70% biodegradability within 28 days in OECD301F test.
WO2023019153 disclosed graft polymer comprising polyethylene oxide backbone, wherein the molecular weight of the polymer backbone Mn in g/mol is within 500 to 5000, preferably not more than 3500, more preferably not more than 3000, even more preferably not more than 2500, and most preferably not more than 2000, such as not more than 1800. The inventive polymers disclosed have polyethylene oxide backbone Mn of 600 or 1500 and reach to 47-72% biodegradability within 28 days in OECD301F test.

The inventors have surprisingly found a new class of graft polymers which show further enhanced biodegradability. The graft polymers also show good cleaning, whiteness, and dye transfer prevention when used in fabric and home care composition. The graft polymers also show good stability in fabric and home care composition.

### SUMMARY OF THE INVENTION

The present invention provides a fabric and home care composition comprising a graft polymer, wherein the graft polymer comprises:
(A) a polymer backbone (A) as a graft base, wherein the polymer backbone (A) has the structure:

   R¹-O-[P-O]ₓ-[Q-O]_{y}-[P-O]_{z}-R²

   wherein:
   - P, Q: is, each independently, selected from CH₂-CH₂, CH₂-CH(CH₃), CH₂-CH(CH₂CH₃), CH(CH₃)-CH(CH₃), CH₂-CH(CH₂CH₂CH₃), CH(CH₃)-CH(CH₂CH₃);
   - x, y, z: is, each independently, an average number between 0 and 450, and the sum of x, y, z is between 10 and 450, preferably between 20 and 200, preferably between 30 and 120, more preferably between 40 to 90, such as 80, 70, 60;
   - R¹, R²: is, each independently, selected from H or -(C=O)-R³; with at least one of the R¹ or R² being -(C=O)-R³;
   - R³: is, each independently, a C₁-C₂₀ alkyl; and
(B) polymeric sidechains (B) grafted onto the polymer backbone (A), wherein the polymeric sidechains (B) comprise at least one structural unit -[B1]- and optionally one or more structural unit selected from -[B2]-, -[B3]- and -[B4]-, wherein:
   - -[B1]-: is -CH₂-CH(O-CO-R³)-, wherein R³ is, each independently, C₁-C₂₂ alkyl;
   - -[B2]-: is -CH₂-CH(W)-, wherein W is an organic group that comprises at least one nitrogen atom, selected from an organic group comprising a pyrrolidone ring, a piperidone ring, or a caprolactam ring.
   - -[B3]-: is -CH₂-CH(OH)-.
   - -[B4]-: is 0 to 5 wt% of -CH₂-CH(Y)-, wherein Y is H or an organic group comprising 1 to 20 carbon atoms, wherein -[B4]- is different from - [B1]-, -[B2]-, -[B3]-, the weight percent being based on the sum of - [B1]-, -[B2]-, -[B3]- and -[B4]-.

### DETAILED DESCRIPTION OF THE INVENTION

### Fabric and home care composition

Any fabric and home care composition are suitable. Fabric and home care compositions are typically suitable for: (a) the care of finished textiles, cleaning of finished textiles, sanitization of finished textiles, disinfection of finished textiles, detergents, stain removers, softeners, fabric enhancers, stain removal or finished textiles treatments, pre and post wash treatments, washing machine cleaning and maintenance, with finished textiles intended to include garments and items made of cloth; (b) the care of dishes, glasses, crockery, cooking pots, pans, utensils, cutlery and the like in automatic, in-machine washing, including detergents, preparatory post treatment and machine cleaning and maintenance products for both the dishwasher, the utilized water and its contents; or (c) manual hand dish washing detergents.

Fabric and home care compositions include, but not limited to:
Laundry Detergent Composition: Suitable laundry detergent compositions include laundry detergent powder compositions, laundry beads, laundry detergent liquid compositions, laundry detergent gel compositions, laundry sheets, fibrous articles and water-soluble unit dose laundry detergent compositions.
Fabric Enhancers: Suitable fabric enhancers are liquid fabric enhancers including compact liquid fabric enhancers, and solid fabric enhancers including fabric enhancer beads, tablets, and sheets. Dish-washing Detergent Composition: Suitable dish-washing detergent compositions include hand dish-washing detergent compositions and automatic dish-washing detergent compositions. Such as automatic dish-washing powder, tablets and pouches.
Hard Surface Cleaner Compositions: Suitable hard surface cleaner compositions include products that can be directly applied onto hard surface, e.g., by a spray, and products that can be diluted in water before been applied onto hard surface.

The composition of the present invention comprises from 0.01wt% to 20.0wt%, preferably from 0.02wt% to 10.0wt%, preferably from 0.05wt% to 5wt%, more preferably from 0.1wt% to 3.0wt% of the graft polymer.

The composition comprises at least one fabric and home care ingredient that is different from the graft polymer. Suitable fabric and home care ingredients are described in more detail below in the "Fabric and home care ingredients" section.

### Graft polymer

The graft polymer comprises:
(A) a polymer backbone (A) as a graft base, wherein the polymer backbone (A) has the structure:

   R¹-O-[P-O]ₓ-[Q-O]_{y}-[P-O]_{z}-R²

   wherein:
   - P, Q: is, each independently, selected from CH₂-CH₂, CH₂-CH(CH₃), CH₂-CH(CH₂CH₃), CH(CH₃)-CH(CH₃), CH₂-CH(CH₂CH₂CH₃), CH(CH₃)-CH(CH₂CH₃);
   - x, y, z: is, each independently, an average number between 0 and 450, and the sum of x, y, z is between 10 and 450, preferably between 20 and 200, preferably between 30 and 120, more preferably between 40 to 90, such as 80, 70, 60;
   - R¹, R²: is, each independently, selected from H or -(C=O)-R³; with at least one of the R¹ or R² being -(C=O)-R³;
   - R³: is, each independently, a C₁-C₂₀ alkyl; and
(B) polymeric sidechains (B) grafted onto the polymer backbone (A), wherein the polymeric sidechains (B) comprise at least one structural unit -[B1]- and optionally one or more structural unit selected from -[B2]-, -[B3]- and -[B4]-, wherein:
   - -[B1]-: is -CH₂-CH(O-CO-R³)-, wherein R³ is, each independently, C₁-C₂₂ alkyl;
   - -[B2]-: is -CH₂-CH(W)-, wherein W is an organic group that comprises at least one nitrogen atom, selected from an organic group comprising a pyrrolidone ring, a piperidone ring, or a caprolactam ring.
   - -[B3]-: is -CH₂-CH(OH)-.
   - -[B4]-: is 0 to 5 wt% of -CH₂-CH(Y)-, wherein Y is H or an organic group comprising 1 to 20 carbon atoms, wherein -[B4]- is different from - [B1]-, -[B2]-, -[B3]-, the weight percent being based on the sum of - [B1]-, -[B2]-, -[B3]- and -[B4]-.

The polymer backbone (A), R¹-O-[P-O]ₓ-[Q-O]_{y}-[P-O]_{z}-R², is obtainable by (trans)esterification reaction of its precursor (A0) in the presence of (trans)esterification agent(s). The precursor (A0) has a structure of HO-[P-O]ₓ-[Q-O]_{y}-[P-O]_{z}-H, wherein, P, Q, x, y and z have the same meaning as defined above for the polymer backbone (A).
Preferably, the (trans)esterification agent comprises -(C=O)-R³ structural unit, wherein R³ is a C₁-C₂₀ alkyl. Preferably, R³ is, each independently, a C₁-C₁₂ alkyl, preferably C₁-C₂ alkyl, more preferably C₁ alky. Preferably, the (trans)esterification agent is selected from C₂-C₂₁ carboxylic acid and derivatives thereof. Herein, the term "derivative thereof" comprises, but is not limited to, salts thereof, esters thereof, anhydrides thereof, and any mixtures of the foregoing.

(Trans)esterification of the hydroxyl end-groups may be carried out according to standard esterification procedures which are well-known in the art. (Trans)esterification may take place before, during and/or after grafting the polymeric sidechains onto the polymer backbone. The grafting process being described in further detail below.

For example, as first step, the hydroxyl end-groups of the precursor (A0) may be esterified using carboxylic acids and/or derivatives thereof to form polymer backbone (A), R¹-O-[P-O]ₓ-[Q-O]_{y}-[P-O]_{z}-R², wherein R¹ and R² is already defined as above. Then, as a second step, the graft polymer of this invention can be made by grafting the polymeric sidechains (B) onto the corresponding polymer backbone (A). Examples of carboxylic acids and/or derivatives thereof include, but not limit to, acetic acid or propionic acid, or a carboxylic acid anhydride, such as acetic anhydride. Carboxylic acid anhydrides are preferred, in particular acetic anhydride.

The hydroxyl end-groups of the precursor (A0) may be alternatively transesterified with a transesterification agent. The transesterification agent is typically a carboxylic acid ester such as a vinyl ester. Preferably, the transesterification agent has same structure as vinyl ester monomer (B1-1) - details described below. In this specific preferred embodiment, the vinyl ester monomer (B1-1) participates in two reactions:
Reaction 1: transesterification reaction which converts the precursor (A0) to polymer backbone (A).
Reaction 2: graft reaction which form structural unit -[B 1]- in polymeric sidechains (B).

Both Reaction 1 and Reaction 2 are essential for producing the graft polymer of the present invention. Reaction 1 and Reaction 2 can occur sequentially in two steps, or they can take place within a single unit operation.

Preferably, Reaction 1 and Reaction 2 take place within a single unit operation. This means a precursor (A0) and a vinyl ester monomer (B1-1) are used as starting material, transesterification reaction to make the polymer backbone (A) and graft reaction which form polymeric sidechains (B) grafted onto the polymer backbone (A) happen within a single unit operation. Within this preferred embodiment, the inventors have surprisingly found that Reaction 1 and Reaction 2 take place within a single unit operation effectively in the presence of from 10 to 15,000 mg/kg, relative to the amount of precursor (A0), of one salt selected from an alkali metal salt and/or an earth alkaline metal salt, calculated as weight of metal, wherein the salt is preferably an alkali metal salt, such as a potassium salt or a cesium salt, in particular a potassium salt like potassium acetate or potassium lactate.
The (trans)esterification reactions may be catalyzed, e.g., by a basic catalyst. The basic catalyst is not particularly limited and may be, e.g., potassium tert-butoxide. For example, the at least one salt ii) can constitute a suitable basic catalyst. In this case, the addition of an external basic catalyst is dispensable.

The graft polymer may have a weight average molecular weight M_{w} of 1,000 to 100,000 g/mol, preferably 2,000 to 45,000 g/mol, more preferably 3,000 to 30,000 g/mol, and most preferably 4,000 to 20,000 g/mol.

The graft polymer preferably has a low polydispersity. It is preferred that the graft polymer has a polydispersity M_{w}/Mₙ of less than 7, preferably less than 5, more preferably less than 3, in particular less than 2.5, such as less than 2.3, and most preferably in the range from 1.0 to 2.2, with M_{w} being the weight average molecular weight and Mₙ being the number average molecular weight, and polydispersity being without unit $\left[\frac{g}{mol}/\frac{g}{mol}\right]$). The respective values of M_{w} and/or Mₙ can be determined as described in the experimental part below.

"M_{w}" is the weight average molecular weight in g/mol, and "Mₙ" is the number average molecular weight in g/mol; with the polydispersity index "PDI" being therefore unitless, with lower numbers being preferred, but depending on the Mₙ of the polymer backbone employed (the higher the Mₙ of (A), typically the higher the PDI) and also on the amount of (B) (the higher the amount of (B) relative to the amount of (A), typically the higher the PDI).
The respective values of M_{w} and Mₙ can be determined using gel permeation chromatography (GPC) standard methods, such as the one referenced in the experimental section. However, the molecular weights of the backbones used in this invention can also be calculated, as those reactions proceed basically to completeness. Hence, the calculation of the molecular weights based on the total molar amounts of ingredients employed for the preparation reaction is a viable way as well.

The graft polymer comprises 20 to 95 wt%, preferably 50 to 75 wt%, of the polymer backbone (A), and 5 to 80 wt%, preferably 25 to 50 wt%, of the polymeric sidechains (B), relative to the total weight of the graft polymer.

Preferably, the polymer backbone (A) has a number average molecular weight Mn of at most 20,000 g/mol, preferably at most 8,000 g/mol, more preferably at most 7,000 g/mol, even more preferably at most 5,000 g/mol, most preferably at most 4,000 g/mol, such as at most 3,500 g/mol, at most 3,000 g/mol or at most 2,500 g/mol, and preferably at least 500 g/mol, more preferably at least 1,000 g/mol, most preferably at least 1,500 g/mol. Generally, a low number average molecular weight Mn of the polymer backbone (A) increases the degree of biodegradability.

The precursor (A0), HO-[P-O]ₓ-[Q-O]_{y}-[P-O]_{z}-H, is obtainable by polymerization of at least one alkylene oxide selected from the group of C₂- to C₁₀-alkylene oxides, preferably C₂- to C₅-alkylene oxides, such as ethylene oxide, 1,2-propylene oxide, 1,2-butylene oxide, 2,3-butylene oxide, 1,2-pentene oxide or 2,3-pentene oxide.

In one embodiment, the precursor (A0) may be obtained by polymerization of only one C₂-to C₁₀-alkylene oxide. To clarify, "only one" means all P and Q in the precursor (A0) are the same. In this case, it is preferable that the alkylene oxide is selected from ethylene oxide, 1,2-propylene oxide and 1,2-butylene oxide. It is preferable that the alkylene oxide is ethylene oxide. In the case that the alkylene oxide is ethylene oxide, the precursor (A0) is polyethylene glycol.

In another embodiment, the precursor (A0) is obtained by polymerization of more than one C₂- to C₁₀-alkylene oxide. In this case, each P and Q can arrange in a block manner, an alternating manner, a random manner. Preferably in a block manner. The term "block" as used herein means that the precursor (A0) structure comprises at least two, i.e., two or more, homopolymer subunits (blocks) linked by covalent bonds. Two block copolymers have two distinct blocks (homopolymer subunits), whereas triblock copolymers have, by consequence, three distinct blocks (homopolymer subunits), and so on. Within the individual blocks (homopolymer subunits), the size/length of such a block may vary. The smallest length/size of a block is based on a minimum of two individual monomers. Various types of precursors (A0) obtained by polymerization of more than one C₂- to C₁₀-alkylene oxide are commercially available, for example under the trademark series "Pluronic" (BASF SE, Ludwigshafen, Germany). Specific examples are Pluronic PE 6100, Pluronic PE 6800, Pluronic PE 3100, and Pluronic RPE 1740.

Preferably, the total molecular weight of -CH₂-CH₂-O- moieties in the precursor (A0) is at least 40 wt%, preferably at least 70 wt%, more preferably at least 80 wt%, based on the molecular weight of the precursor (A0). More preferably, the total molecular weight of -CH₂-CH₂-O-moieties in polymer backbone (A) is at least 40 wt%, preferably at least 70 wt%, more preferably at least 80 wt%, based on the molecular weight of polymer backbone (A).

Preferably, the precursor (A0) is selected from:
a) a di-block-copolymer comprising ethylene oxide in a first block and propylene oxide in a second block;
b) a tri-block-polymer comprising ethylene oxide in one or two block(s) and propylene oxide in the two or one block(s), being an EO-PO-EO-block copolymer or a PO-EO-PO-block copolymer, preferably an EO-PO-EO-block copolymer;
c) an EO-PO-random copolymer comprising ethylene oxide and propylene oxide;
d) ethylene oxide homopolymer (also known as polyethylene glycol); and
e) propylene oxide homopolymer (also known as polypropylene glycol).

It is preferred that the precursor (A0) contains a structural unit derived from ethylene oxide located at one or both ends. In other words, it is preferred that precursor (A0) has primary alcohol groups at the ends of the molecule. Without wishing to be bound by theory, the (trans)esterification reaction between the preferred precursor (A0), which comprises primary alcohol groups at the ends, and the (trans)esterification agent(s) is generally more favorable. This is especially true in the presence of a potassium salt, such as potassium acetate or potassium lactate, during the grafting step. Therefore, the most preferred precursor (A0) is selected from the homopolymer of ethylene oxide and EO-PO-EO block copolymer.
When obtaining precursor (A0) through the polymerization of C₂₋ to C₁₀-alkylene oxides, it is possible for polyols, polyamines, and/or lactones to be present in the polymerization process. It is preferred that the polyols, polyamines, and/or lactones are present at less than 20 wt%, preferably less than 10 wt%, preferably less than 5 wt%, preferably less than 2 wt%, preferably less than 1 wt%, more preferably less than 0.2 wt%, relative to the total weight of C₂₋ to C₁₀-alkylene oxides.

Although the structural units derived from polyols, polyamines, and/or lactones are not shown in the structure of the precursor (A0) or backbone (A) above and in the claims, it is the intension of the invention graft polymers polymer contain structural units derived from the polyols, polyamines, and/or lactones.

If present, suitable polyols can be aliphatic diols, i.e., glycols, such as ethylene glycol, propylene glycol, diethylene glycol, dipropylene glycol, 1,3-propanediol, 1,3-butanediol, 2-methyl-1,3-propanediol, triethylene glycol, and neopentyl glycol. A suitable cycloaliphatic diol is cyclohexanedimethanol. Suitable polyols comprising three to ten hydroxyl groups include aliphatic polyols and cycloaliphatic polyols such as glycerin, trimethylolpropane, pentaerythritol,

If present, the polyamine is preferably an aliphatic or cycloaliphatic polyamine, in particular an aliphatic polyamine. The polyamine is preferably selected from alkylene polyamines, such as ethylene diamine, propylene diamine, diethylene triamine and dipropylene triamine.

If present, the lactone is preferably selected from β-propiolactone, γ-butyrolactone, δ-valerolactone, γ-valerolactone, ε-caprolactone, δ-decalactone, γ-decalactone and ε-decalactone; preferably ε-caprolactone.
Preferably, the polyol, polyamine, and/or lactone are essentially absent. This includes an embodiment in which polyol, polyamine, and/or lactone are not intentionally added to the reaction mixture but may be present as impurities. Most preferably polyol, polyamine, and/or lactone are not present at all.

The graft polymer comprises polymeric sidechains polymeric sidechains (B) grafted onto the polymer backbone (A), wherein the polymeric sidechains (B) comprise at least one structural unit -[B1]- and optionally one or more structural unit selected from -[B2]-, -[B3]- and -[B4]-, wherein:
- -[B1]-: is -CH₂-CH(O-CO-R³)-, wherein R³ is, each independently, C₁-C₂₂ alkyl;
- -[B2]-: is -CH₂-CH(W)-, wherein W is an organic group that comprises at least one nitrogen atom, selected from an organic group comprising a pyrrolidone ring, a piperidone ring, or a caprolactam ring.
- -[B3]-: is -CH₂-CH(OH)-.
- -[B4]-: is 0 to 5 wt% of -CH₂-CH(Y)-, wherein Y is H or an organic group comprising 1 to 20 carbon atoms, wherein -[B4]- is different from - [B1]-, -[B2]-, -[B3]-, the weight percent being based on the sum of - [B1]-, -[B2]-, -[B3]- and -[B4]-.

Said polymeric sidechains (B) are obtainable by polymerization of monomers in the presence of the polymer backbone (A) and/or its precursor (A0). The monomers comprise at least one vinyl ester monomer (B1-1). Optionally, the monomers comprise at least one vinyl ethylenically unsaturated nitrogen-containing monomer (B2-1) and/or at least one supplementary monomer (B4-1), wherein the supplementary monomer (B4-1) is distinct from both monomers (B1-1) and (B2-1), and have the following structure:

CH₂=CH(Y),

wherein Y is H or an organic group comprising 1 to 20 carbon atoms. When Y is an organic group comprising 1-20 carbon atoms, it is understood that the organic group may comprise other atoms, such as O, N, S, and the organic group may be liner, branched, cyclic, saturated and/or unsaturated.

The monomers may optionally comprise other monomers distinct from (B1-1), (B2-1) and (B4-1).

### Vinyl ester monomer (B1-1):

The graft polymer comprises structural units derived from at least one vinyl ester monomer (B1-1).

The vinyl ester monomer (B1-1) is typically a vinyl ester of C₂-C₁₆ aliphatic carboxylic acid, preferably selected from vinyl acetate, vinyl propionate, vinyl laurate and any combinations thereof, more preferably the vinyl ester monomer (B1-1) is vinyl acetate.

After polymerization, the monomer (B1-1) form structural units -[B1]- as defined above. Optionally, the structural units -[B1]- can be hydrolyzed and from structural units -[B3]-.

Preferably, structural unit -[B1]- comprises 10 to 100 wt%, preferably 25 to 100 wt%, more preferably 50 to 100 wt%, most preferably 75 to 100 wt%, relative to the total amount of monomers constituting the polymeric sidechains (B).

Preferably, structural unit -[B1]- constitutes at least 5 wt%, more preferably at least 10 wt%, more preferably at least 15 wt%, based on the total weight of the graft polymer. Preferably, structural unit -[B1]- constitutes at most 75 wt%, preferably at most 65 wt%, preferably at most 55 wt%, preferably at most 45 wt%, more preferably at most 30 wt% and most preferably at most 20 wt%, based on the total weight of the graft polymer.

Preferably, at least 50 wt%, more preferably at least 70 wt%, or more than 80 wt%, or more than 90 wt%, or more than 95 wt%, and most preferably only vinyl acetate is employed as vinyl ester monomer (B1-1).

Preferably, the polymeric sidechains (B) are obtained by radical polymerization of vinyl acetate.

### Ethylenically unsaturated Nitrogen-containing monomer (B2-1)

Optionally, the graft polymer comprises structural units derived from at least one ethylenically unsaturated nitrogen-containing monomer (B2-1). If present, after polymerization, the ethylenically unsaturated nitrogen-containing monomer (B2-1) form structural unit -[B2]- as defined above.

The ethylenically unsaturated nitrogen-containing monomer (B2-1) is typically selected from vinyl pyrrolidone, vinyl piperidone, and vinyl caprolactam, and combination thereof. Preferably, (B2-1) comprises N-vinylpyrrolidone. Preferably, (B2-1) is N-vinylpyrrolidone.

Preferably, structural unit -[B1]- constitutes 0 to 90 wt%, preferably 0 to 75 wt%, more preferably 0 to 50 wt%, most preferably 0 to 25 wt%, such as 0 wt%, 5 wt%, 10 wt% or 15 wt%, relative to the total amount of monomers constituting the polymeric sidechains (B).

### Supplementary Monomer (B4-1).

Optionally, the graft polymer comprises structural units derived from at least one further ethylenically unsaturated monomer (B4-1). If present, after polymerization, monomer (B4-1) form structural unit -[B4]- as defined above.

Suitable monomer (B4-1) can be:
i) vinyl ethers. This includes ethyl vinyl ether, n-butyl vinyl ether, isobutyl vinyl ether, 4-hydroxybutyl vinyl ether, cyclohexyl vinyl ether, 2-ethyl-hexyl vinyl ether, dodecyl vinyl ether, and octadecyl vinyl ether, in particular n-butyl vinyl ether, isobutyl vinyl ether, 4-hydroxybutyl vinyl ether, cyclohexyl vinyl ether and 2-ethyl hexyl vinyl ether;
ii) α,β-Unsaturated acids, salts, esters, and amides thereof. This includes, but not limit to, acrylic acid, salts of acrylic acid, acrylates such as C₁-C₂₂-alkyl-acrylates; acrylamide, N,N'-di alkyl acrylamide.
iii) vinyl ester of aromatic acids. This includes, but not limit to, vinyl benzoate and vinyl ester of other aromatic acids.
iv) N-vinyl carboxylic acid amides such as N-vinyl formamide, N-vinyl acetamide, N-vinyl-N-methyl acetamide,
v) vinyl imidazoles such as 1-vinyl imidazole, and C₁-C₈-alkyl-substituted vinyl imidazoles.
vi) sulfo-containing monomers such as 2-acrylamido-2-methylpropane sulfonic acid (AMPS);

Preferably, the amount of -[B4]- is 0 to 5 wt% based on the sum of -[B1]-, -[B2]-, -[B3]- and -[B4]-.

Preferably, the amount of monomer (B4-1) is from 0 wt% to 5.0 wt%, the weight percent being based on the sum of (B1-1), (B2-1), (B3-1), and (B4-1) used during process of making the polymer.

The graft polymer may comprise structural units derived from other monomers distinct from (B1-1), (B2-1) and (B4-1). Example of such other monomers include, but not limit to, methacrylic acid, and salts of methacrylic acid, and methacrylates such as C₁-C₂₂-alkyl-methacrylates, methyl acrylamide, N,N'-di alkyl (meth) acrylamide, other unsaturated acids / diacids / polyacids, salts, esters, and amides thereof.

In one embodiment, the polymeric sidechains (B) are obtained by polymerization, in particular by (free) radical polymerization, of
- 10 to 100 wt%, preferably 25 to 100 wt%, more preferably 50 to 100 wt%, most preferably 75 to 100 wt%, relative to the total amount of monomers constituting the polymeric sidechains (B), of at least one vinyl ester monomer (B 1-1);
- 0 to 90 wt%, preferably 0 to 75 wt%, more preferably 0 to 50 wt%, most preferably 0 to 25 wt%, relative to the total amount of monomers constituting the polymeric sidechains (B), of at least one ethylenically unsaturated nitrogen-containing monomer (B2-1); and
- Preferably 0 to 5 wt%, relative to the total amount of monomers constituting the polymeric sidechains (B), of at least one supplementary monomer (B4-1);
in the presence of polymer backbone (A) and/or its precursor (A0).

Typically, the total amount of monomers (B1-1) and optional monomer (B2-1), (B4-1) adds up to 100 wt% of the total weight of polymeric sidechains (B). The total amount of polymeric sidechains (B) and the total amount of the polymer backbone (A) preferably add up to 100 wt% of the total weight of the graft polymer.

Preferably, the polymeric sidechains (B) comprise at least one of the following combinations (I) to (IV):
I)
   - (B1-1): comprises at least 90 wt% vinyl acetate, and preferably is vinyl acetate and
   optionally hydrolyzed.
   - (B2-1): comprises N-vinyl caprolactam, and N-vinylpyrrolidone, and
   - (B4-1): is not present;
II)
   - (B1-1): comprises at least 90 wt% vinyl acetate, and preferably is vinyl acetate,
   - (B2-1): comprises N-vinylpyrrolidone, and
   - (B4-1): is not present;
III)
   - (B1-1): comprises at least 90 wt% vinyl acetate, and preferably is vinyl acetate,
   - (B2-1): comprises N-vinyl caprolactam, and
   - (B4-1): is not present;
IV)
   - (B1-1): comprises at least 90 wt% vinyl acetate, and preferably is vinyl acetate,
   - (B2-1): is not present; and
   - (B4-1): is not present.
in the presence of the precursor (A0), HO-[P-O]ₓ-[Q-O]_{y}-[P-O]_{z}-H, wherein:
- P, Q: is, each independently, selected from CH₂-CH₂, CH₂-CH(CH₃), CH₂-CH(CH₂CH₃), CH(CH₃)-CH(CH₃), CH₂-CH(CH₂CH₂CH₃), CH(CH₃)-CH(CH₂CH₃), and at least one P or Q is CH₂-CH₂;
- x, y, z: is, each independently, an average molar number between 0 and 450, and the sum of x, y, z is between 20 and 200, preferably between 30 and 120, more preferably between 40 to 90, such as 80, 70, 60;
and, up to 15,000 mg/kg, relative to the total amount of precursor (A0), of at least one salt selected from an alkali metal salt and/or an earth alkaline metal salt, calculated as weight of metal, wherein the salt is preferably an alkali metal salt, such as a potassium salt or a cesium salt, in particular a potassium salt like potassium acetate or potassium lactate.

More preferably, the polymeric sidechains (B) are obtained by polymerization of:
(i) from 10 to 100 wt%, preferably 75 to 100 wt%, relative to the total amount of monomers constituting the polymeric sidechains (B), of at least one vinyl ester monomer (B1-1); and
(ii) from 0 to 90 wt%, relative to the total amount of monomers constituting the polymeric sidechains (B), of at least one ethylenically unsaturated nitrogen-containing monomer (B2-1),
in the presence of the precursor (A0), HO-[P-O]ₓ-[Q-O]_{y}-[P-O]_{z}-H,
wherein:
- P: is, CH₂-CH₂;
- Q: is, each independently, selected from CH₂-CH₂, CH₂-CH(CH₃);
- x, y, z: is, each independently, an average molar number between 1 and 450, and the sum of x, y, z is between 30 and 120, more preferably between 40 to 90, such as 80, 70, 60;
and, from 10 to 15,000 mg/kg, relative to the amount of the precursor (A0), of a potassium salt, preferably selected from potassium acetate and potassium lactate.

The graft polymers of the invention may contain a certain amount of ungrafted polymers ("ungrafted side chains"), e.g., of vinyl ester(s), e.g., polyvinylacetate in case only vinyl acetate is employed, and/or, when one or more monomers (B2-1) and/or the at least one supplementary monomer (B4-1) are employed, homo- and copolymers of vinyl ester(s) with the monomers (B2-1) and/or (B4-1). The amount of such ungrafted polymers may be high or low, depending on the reaction conditions, but is preferably low. Thus, the amount of grafted side chains is preferably increased. Low amounts of ungrafted polymers may be achieved by suitable reaction conditions, such as dosing of the monomer(s) and radical initiator and their relative amounts, and also in relation to the amount of backbone being present. This is generally known to the skilled person in the present field.

In one embodiment of the present invention, the polymeric sidechains (B) of the graft polymer according to the present invention are fully or at least partially hydrolyzed after the graft polymer as such is obtained. This means that the full or at least partial hydrolyzation of the polymeric sidechains (B) of the graft polymer is carried out after the polymerization process of the polymeric sidechains (B) is finished.

The hydrolysis essentially converts structural units -[B1]- to structural units -[B3]- in the polymeric sidechains (B). Notably, the corresponding vinyl alcohol monomer is not suitable to be employed as monomer within the polymerization process of the polymeric sidechains (B) due to stability aspects. In order to obtain an alcohol function (hydroxyl substituent) within the polymeric sidechains (B) of the graft polymers, the alcohol function is thus typically introduced by hydrolyzing the ester function of the sidechains.

From a theoretical point of view, each ester function of the polymeric sidechain (B) may be replaced by an alcohol function (hydroxyl group). In such a case, the polymeric sidechain is fully hydrolyzed (saponified). It is to be noted that in case of certain monomers (B2-1), such as N-vinylpyrrolidone, and/or (B4-1) are employed, typically no hydrolyzation takes place at those units of the polymeric sidechain (B) which originate from, e.g., N-vinylpyrrolidone employed as monomer (B2-1). On the other hand, vinyl ester units comprised in the polymeric sidechains (B), in particular vinyl acetate units, may be partially or fully hydrolyzed after polymerization. Moreover, vinyl formamide units (if present) comprised in the sidechains (B) may be partially or fully hydrolyzed after polymerization, yielding vinylamine units.

The hydrolysis can be carried out by any method known to a person skilled in the art. For example, the hydrolysis can be induced by the addition of a suitable base, such as sodium hydroxide or potassium hydroxide.

In one embodiment, vinyl ester units are hydrolyzed to an extent of from 10 to 100 mol-%, preferably from 20 mol-%, more preferably from 30 mol-%, to preferably at most 80 mol-%, more preferably at most 60 mol-%, even more preferably at most 50 mol-%, based on -[B1]- vinyl ester structural units. In one embodiment, vinyl ester units are not hydrolyzed.

Within this embodiment, it is preferred that the hydrolyzation of the polymeric sidechains (B) is only carried out partially, for example, to an extent that up to 20 wt%, 40 wt% or 60 wt% of the units derived from vinyl ester monomer (B 1-1) are hydrolyzed, relative to the total weight of vinyl ester monomer (B1-1).

In one embodiment, the polymeric sidechains (B) are obtained by polymerization, preferably (free) radical polymerization, of monomers comprising at least one vinyl ester monomer (B1-1) and at least one monomer (B2-1) and optionally (B4-1), and the polymeric sidechains (B) are fully or partially hydrolyzed after polymerization, preferably to an extent of up to 50%, relative to the amount of the at least one vinyl ester monomer (B1-1) employed within the polymerization.

In a preferred embodiment, the polymeric sidechains (B) are not hydrolyzed after polymerization.

It is preferred that no other monomers besides monomer (B1-1), (B2-1) and monomer (B4-1) are employed within the respective polymerization process for obtaining the polymeric sidechains (B). However, if any further monomers besides the monomers according to (B1-1), (B2-1), (B4-1) are present during polymerization, such further monomers (other than (B1-1), (B2-1) and (B4-1)) are preferably present in an amount of less than 5 wt%, more preferably less than 1 wt%, relative the total amount of monomers employed for obtaining the polymeric sidechains (B).

The weight ratio of the polymer backbone (A) to the polymeric side chains (B) within the graft polymer is not particularly limited. However, the graft polymer typically comprises at least 0.2 wt% of the polymeric sidechains (B), relative to the total weight of the graft polymer. Preferably, the graft polymer comprises at least 1 wt% of the polymeric sidechains (B), relative to the total weight of the graft polymer.

Preferably, the graft polymer comprises 20 to 95 wt%, preferably 30 to 85 wt%, more preferably 35 to 80 wt%, such as 40 to 75 wt%, in particular 50 to 75 wt%, of the polymer backbone (A), relative to the total weight of the graft polymer.

Preferably, the graft polymer comprises 5 to 80 wt%, preferably 15 to 70 wt%, more preferably 20 to 65 wt%, such as 25 to 60 wt%, in particular 25 to 50 wt%, of the polymeric sidechains (B), relative to the total weight of the graft polymer. A proportion of polymeric sidechains (B) in this range allows for an increased degree of biodegradability.

In one embodiment, the graft polymer comprises 20 to 90 wt% of the polymer backbone (A) and 10 to 80 wt% of the polymeric sidechains (B); preferably 30 to 85 wt% of the polymer backbone (A) and 15 to 70 wt% of the polymeric sidechains (B); more preferably 35 to 80 wt% of the polymer backbone (A) and 20 to 65 wt% of the polymeric sidechains (B); such as 40 to 75 wt% of the polymer backbone (A) and 25 to 60 wt% of the polymeric sidechains (B); in particular 45 to 70 wt% of the polymer backbone (A) and 30 to 55 wt% of the polymeric sidechains (B); relative to the total weight of the graft polymer.

The invention also related to a process of making a fabric and home care composition, the process comprising the steps:
(1) providing a graft polymer obtained by the polymerization of:
   (a) at least one vinyl ester monomer (B1-1);
   (b) optionally at least one ethylenically unsaturated nitrogen-containing monomer (B2-1); and
   in the presence of:
   (i) a polymer backbone precursor (A0),

      H-O-[P-O]ₓ-[Q-O]_{y}-[P-O]_{z}-H (A0)

      wherein:
      - P, Q: is, each independently, selected from CH₂-CH₂, CH₂-CH(CH₃), CH₂-CH(CH₂CH₃), CH(CH₃)-CH(CH₃), CH₂-CH(CH₂CH₂CH₃), CH(CH₃)-CH(CH₂CH₃); and
      - x, y, z: is, each independently, an average number of from 0 to 450, and the sum of x, y, z is from 10 to 450, preferably from 20 to 200, preferably from 30 to 120, more preferably from 40 to 90, such as 80, 70, or 60; and
   (ii) from 10 to 15,000 mg/kg, relative to the amount of the polymer backbone precursor (A0), of at least one salt selected from an alkali metal salt and/or an earth alkaline metal salt, calculated as weight of metal; and
(2) contacting the graft polymer provided in step 1 with at least one fabric home care ingredient.

### The alkali metal salt and/or earth alkaline metal salt.

Step 1 comprises from 10 to 15,000 mg/kg, preferably from 100 to 10,000 mg/kg, preferably from 300 to 9,000 mg/kg, preferably from 400 to 8000 mg/kg, preferably from 500 to 7000 mg/kg, preferably from 600 to 6000 mg/kg, preferably from 700 to 5500 mg/kg, more preferably from 800 to 5000 mg/kg, more preferably from 900 to 4000 mg/kg, relative to the amount of the polymer backbone precursor (A0), of at least one salt selected from an alkali metal salt and/or an earth alkaline metal salt, calculated as weight of metal.

As a result, process according step 1 provides a graft polymer composition comprising a graft polymer and from 10 to 15,000 mg/kg, preferably from 100 to 10,000 mg/kg, preferably from 300 to 9,000 mg/kg, preferably from 400 to 8000 mg/kg, preferably from 500 to 7000 mg/kg, preferably from 600 to 6000 mg/kg, preferably from 700 to 5500 mg/kg, more preferably from 800 to 5000 mg/kg, more preferably from 900 to 4000 mg/kg, relative to the amount of the polymer backbone precursor (A0) used to make the polymer, of at least one salt selected from an alkali metal salt and/or an earth alkaline metal salt, calculated as weight of metal.

As a result, the process according to this invention provides a fabric and home care composition comprising a graft polymer and at least one salt selected from an alkali metal salt and/or an earth alkaline metal salt. The level of the salt is determined by the level of salt presented in Step 1 (or in the graft polymer), and the amount of graft polymer, and the fabric home care ingredient(s) used in Step 2. A person skilled in the art knows how to conduct such calculations to determine the level of the graft polymer and the salt in the fabric and home care composition.

Preferably, the alkali metal salt and/or the earth alkaline metal salt include lithium salts, potassium salts and cesium salts, magnesium salts, calcium salts. Preferably, the salt is a potassium salt or a cesium salt, more preferably the salt is a potassium salt.

Preferably, the salt is a metal carboxylate such as an acetate, lactate or benzoate, or a metal alkoxide such as a tert-butylate.

Suitable potassium salts include potassium acetate, potassium lactate, potassium tert-butylate and potassium benzoate, in particular potassium acetate and potassium benzoate. Suitable cesium salts include cesium acetate, cesium lactate, cesium tert-butylate and cesium benzoate. Suitable earth alkaline metal salts include magnesium acetate and calcium acetate.

Preferably, salt in step 1 is selected from potassium acetate, potassium lactate or potassium benzoate. Most preferably, the metal salt is potassium acetate.

The introduction of alkali metal salts and/or alkaline earth metal salts into step 1 is critical to the biodegradability of the graft polymer. Without wish to be bonded by theory, alkali metal salts and/or alkaline earth metal salts can coordinate with the polymer backbone precursor (A0), which influences the distribution of the polymeric sidechains (B) grafted onto the polymer backbone. For example, it has been found that the graft polymers have increased molecular weights at constant weight of the polymer backbone. The increase in the molecular weight of the graft polymer is believed to be associated with a higher ratio of polymeric sidechains to polymer backbone which can occur due to (1) an increase in the number of graft points, (2) an increase in the length of the polyvinyl acetate side chain, or (3) a combination of (1) and (2). Such change in polymeric sidechains (B) enhances the accessibility of the grafted polymer to the active sites of biodegradation enzymes, resulting in a significant improvement in polymer biodegradability.

The presence of alkali metal salts and/or alkaline earth metal salts also result in formation of ester bonds at the end(s) of the polymer backbone precursor (A0) - partially or fully esterification of the polymer backbone (A0). It is believed that salts according to the invention coordinates to the polymer backbone during the graft polymerization and exposes the alcohol groups at the ends of precursor (A0) to vinyl ester monomers (B1-1) during grafting reaction. As such, the OH group(s) of the precursor (A0) is converted to esters. Preferably, the OH group here is a primary alcohol. The percentage of the conversion can be any number between 0% and 100%, such as 10, 20, 30, 40, 50, 60, 70, 80, 90, 100%. Without wishing to be bound by theory, in one aspect, the ester bonds formed at the ends of the polymer backbone precursor (A0) themselves can hydrolyze in wastewater, which contributes to polymer biodegradability; in another aspect, more importantly, the presence of ester bonds in graft polymers enhances the accessibility of the grafted polymer to the active sites of biodegradation enzymes, resulting in a significant improvement in polymer biodegradability.

The biodegradation of the graft polymer is preferably at least 25%, preferably at least 30%, more preferably at least 40%, even more preferably at least 50%, most preferably at least 60%, of the theoretical oxygen demand (ThOD) within 28 days according to OECD 301F. The biodegradation can be determined as described in the experimental part below.

The inventors have also surprisingly found that while the ester bonds (including ester bonds added at the ends of the polymer backbone (A0), and the ester bonds within poly(vinyl acetate) structural units) within the graft polymer are stable in fabric and home care composition, particularly in liquid fabric and home care composition that contain water and has a pH of from 2 to 11, or from 6.5 to 8.9, or from 7 to 8, wherein the pH of the liquid fabric and home care composition is measured at a 10% product concentration in demineralized water at 20°C.

The salt may be provided to the process as a solid. Alternatively, the salt may be provided to the process as a solution in a suitable solvent, preferably the solvent (D) that used for the graft polymerization reaction. In one embodiment, the salt is provided to the process as a solution in a solvent, wherein the solvent is removed before the graft polymerization is started, e.g., by addition of a free radical-forming initiator (C). In one embodiment, the salt is pre-dissolved / pre-dispersed in the polymer backbone (A0).

In one embodiment, the salt is added during the graft polymerization, either stepwise or the whole amount at once, preferably stepwise. In another embodiment, the salt is provided at the start of the graft polymerization. In yet another embodiment, a partial amount of the salt is provided at the start of the graft polymerization, and the remaining amount of the salt is added during the graft polymerization, either stepwise or the whole amount at once, preferably stepwise.

### Free radical-forming initiator (C).

Preferably, step 1 is conducted in the presence of a free radical-forming initiator (C).

Preferably, step 1 is conducted at a mean polymerization temperature at which the radical-forming initiator (C) has a decomposition half-life of from 40 to 500 min, wherein the fraction of unpolymerized monomers and initiator in the reaction mixture is maintained in a quantitative deficiency relative to the polymer backbone precursor (A0). As such, the process introduces polymeric sidechains (B) into the graft polymer by radical polymerization. Radical polymerization as such is known to the skilled person. The term "radical polymerization" as used herein comprises besides the free radical polymerization also variants thereof, such as controlled radical polymerization. Suitable control mechanisms are RAFT, NMP or ATRP, which are each known to the skilled person, including suitable control agents.

Suitable representatives of free radical-forming initiator (C) are well-known to the skilled person. Examples of suitable (C), as well as preferred process conditions, are disclosed in detail in WO2021160795 and WO2021160851.

Preferred initiators (C) are O-C₄-C₁₂-acylated derivatives of tert-C₄-C₅-alkyl hydroperoxides, particular preference being given to tert-butyl peroxypivalate and tert-butyl peroxy-2-ethylhexanoate.

Particularly advantageous polymerization conditions can be established by precise adjustment of initiator (C) and polymerization temperature. For instance, the preferred mean polymerization temperature in the case of use of tert-butyl peroxypivalate is from 60 to 80 °C, and, in the case of tert-butyl peroxy-2-ethylhexanoate, from 80 to 100 °C.

### Organic solvent (D).

Step 1 can be carried out in the presence of, preferably small amounts of, an organic solvent (D). It is of course also possible to use mixtures of different solvents (D), and in the presence of other solvents (such as water).

Examples of suitable solvent (D) are disclosed in detail in WO2021160795 and WO2021160851.

The amount of the organic solvent may be up to 50 wt%, preferably up to 40 wt%, preferably up to 25 wt%, more preferably up to 10 wt%, relative to the total weight of the graft polymer composition.

Preferably, step 1 is conducted in the presence of at least one organic solvent (D) selected from monohydric alcohols, polyhydric alcohols, polyalkylene glycols, polyalkylene glycol monoethers, carboxylic esters, aliphatic ketones, cyclic ethers.

Solvent maybe be also used as a diluent, generally from 1 to 40 wt%, preferably from 1 to 35 wt%, more preferably from 1.5 to 30 wt%, most preferably from 2 to 25 wt%, based in each case on the sum of the components (A0), (B1-1), optionally (B2-1) and/or (B4-1), are used.

The solvent (D) may be employed for introducing the free radical-forming initiator (C) into the reaction mixture, and optionally one or more further solvent(s), also referred to as "dilution". The further solvent for dilution may be the same as and/or different to the one used for introducing the free radical-forming initiator (C).

Useful solvent (D) for introducing the free radical-forming initiator (C) can be methanol, ethanol, propan-1-ol, propan-2-ol, 1,2-propanediol, dipropylene glycol, tripropylene glycol, triethylene glycol, ethyl acetate, propyl acetate, and butyl acetate, most preferably 1,2-propanediol. The solvent for introducing the free radical-forming initiator (C) is suitably added during and/or after the main polymerization step has ended.

Useful solvent (D) for dilution can be 1,2-propanediol, dipropylenglycol, tripropylenglycol, triethylenglycol, more preferably water and/or 1,2-propanediol, most preferably 1,2-propanediol. The solvent mixture may contain water. The solvent (D) for dilution may be added before and/or after an additional hydrolysis step, preferably before the hydrolysis step.

The solvents (D) can be removed after polymerization or remain in the polymerization product, including solvents selected from polyethylene glycols having 2 to 15 ethylene glycol units, polypropylene glycols having 2 to 6 propylene glycol units and in particular alkoxylation products of C₆-C₈-alcohols (alkylene glycol monoalkyl ethers and polyalkylene glycol monoalkyl ethers). In the case that the solvents (D) are to be removed, removal may be carried out by solvent evaporation, e.g. under vacuum.

Particular preference is also given to alkoxylation products of C₈-C₁₆-alcohols with a high degree of branching, which allow the composition of polymer mixtures which are free-flowing at 40 to 70 °C and have a very low polymer content at comparatively low viscosity. The branching may be present in the alkyl chain of the alcohol and/or in the polyalkoxylate moiety (copolymerization of at least one propylene oxide, butylene oxide or isobutylene oxide unit). Particularly suitable examples of these alkoxylation products are 2-ethylhexanol or 2-propylheptanol alkoxylated with 1 to 15 mol of ethylene oxide, C₁₃/C₁₅ oxo alcohol or C₁₂/C₁₄ or C₁₆/C₁₈ fatty alcohol alkoxylated with 1 to 15 mol of ethylene oxide and 1 to 3 mol of propylene oxide, preference being given to 2-propylheptanol alkoxylated with 1 to 15 mol of ethylene oxide and 1 to 3 mol of propylene oxide.

The process for obtaining a graft polymer composition may comprise polymerizing the monomers (B1-1), and the optional monomer (B2-1) and/or (B4-1), in the presence of the precursor (A0), and in the presence of 10 to 15,000 mg/kg, relative to the total amount of the polymer backbone (A) and/or precursor (A0), of the at least one salt selected from an alkali metal salt and/or an earth alkaline metal salt, calculated as weight of metal. Without wishing to be bound by theory, it is believed that the at least one alkali metal salt and/or earth alkaline metal salt coordinates to the polymer backbone during the graft polymerization and exposes the alcohol groups at the ends of precursor (A0) to vinyl ester monomers (B1-1) during grafting reaction. As such the precursor (A0) is converted to the polymer backbone (A). Preferably at least 1 wt%, preferably at least 5%, preferably at least 10 wt% of the precursor (A0) is converted to the polymer backbone (A). The percentage of the conversion can be any number between 0 wt% and 100 wt%, such as 10, 20, 30, 40, 50, 60, 70, 80, 90, 100 wt%.

Typically, at least part of the salt provided to the graft polymerization is provided with the polymer backbone (A) and/or precursor (A0). The salt may be present in the polymer backbone (A) and/or precursor (A0) from the production process yielding the polymer backbone (A) and/or precursor (A0), for example as a catalyst. For example, potassium hydroxide or potassium tert-butoxide may be used as catalysts during the production of the polymer backbone (A).

The polymerization process can be carried out in various reactor types. The reactor used is preferably a stirred tank in which the polymer backbone (A), if appropriate together with portions, of generally up to 15 wt% of the particular total amount, of monomers (B1-1) and optionally (B2-1), initiator (C) and solvent (D), are initially charged fully or partly and heated to the polymerization temperature, and the remaining amounts of (B 1-1), (B2-1), (C) and, if appropriate, (D) are metered in, preferably separately. The remaining amounts of (B1-1), (B2-1), (C) and, if appropriate, (D) are metered in preferably over a period of at least 2 h, more preferably of at least 4 h and most preferably of at least 5 h.

In the case of the particularly preferred, substantially solvent-free process variant, the entire amount of polymer backbone (A) is initially charged as a melt and the monomers (B1-1) and optionally (B2-1), and also the initiator (C) present preferably in the form of a from 10 to 50 wt% solution in one of the solvents (D), are metered in, the temperature being controlled such that the selected polymerization temperature, on average during the polymerization, is maintained with a range of especially +/- 10 °C, in particular +/- 5°C.
In a further particularly preferred, low-solvent process variant, the procedure is as described above, except that solvent (D) is metered in during the polymerization in order to limit the viscosity of the reaction mixture. It is also possible to commence with the metered addition of the solvent only later with advanced polymerization, or to add it in portions.

Polymerization can be affected under standard pressure or at reduced or elevated pressure. When the boiling point of the monomers (B1-1), (B2-1), (B4-1) or of any diluent (D) used is exceeded at the selected pressure, the polymerization is carried out with reflux cooling.

After completion of the polymerization, volatiles may be removed under vacuum.
Prior to its application, the graft polymer composition may also be subjected to further process steps which may comprise at least one of: i) post-polymerization; ii) purification; iii) concentration; iv) drying; v) hydrolysis; vi) dilution; and vii) solvent replacement.
The order of steps is preferably in the order of i), ii), iii), iv). Step v) hydrolysis, if employed, is preferably carried out either after step i), if step i) is carried out, and/or before or after step ii), if step ii) is carried out.

The post-polymerization process step (i.e., step i)) may be performed after the main polymerization reaction, wherein preferably a further amount of initiator (optionally dissolved in the solvent(s)) is added over a period of 0.5 hour and up to 3 hours, preferably about 1 to 2 hours, more preferably about 1 hour. The radical initiator and the solvent(s) for the initiator are typically and preferably the same as the ones for the main polymerization reaction. Preferably, after the polymerization reaction and before the post-polymerization reaction, the main polymerization reaction is allowed to proceed for a period, before the post-polymerization reaction is started by starting the addition of further radical initiator. Such a period may be in the range of from 10 minutes to up to 4 hours, preferably up to 2 hours, even more preferably up to 1 hour, and most preferably up to 30 minutes. Preferably, the temperature of the post-polymerization process step is the same as in the main polymerization reaction, or is increased, such increase being preferably higher by about 5 to 40 °C, preferably 10 to 20 °C, compared to the temperature of the main polymerization reaction.

The step of subjecting the graft polymer composition as obtained from the main polymerization or, if performed, from the post-polymerization process to the step of hydrolysis (i.e. step v)) may be carried out by
a) adding a suitable base, such as preferably an alkali or earth alkali hydroxide, an n-butylate or tert-butylate, preferably a sodium or potassium salt, more preferably a potassium salt, or
b) adding a strong base and an alcohol, preferably a methanolic sodium hydroxide solution and methanol, to increase the pH of the reaction mixture, and preferably increase the temperature

to at least 40 °C, preferably at least 50 °C, more preferably at least 70 °C and keep such temperature for a period of at least 30 minutes, preferably at least 60 minutes, more preferably at least 120 minutes, and in case of method b), continuously removing the side product of the hydrolysis, and adding an acid such as acetic acid to stop the hydrolysis,
to hydrolyze the polymeric moieties derived from the vinyl ester, and, if present, from N-vinyl formamide, to a percentage of from 5 wt%, preferably from 10 wt%, more preferably from 20 wt%, even more preferably from 30 wt%, to up to 100 wt%, more preferably up to 90 wt%, relative to the total weight of polymeric moiety.

The step of subjecting the graft polymer composition as obtained from the main polymerization or, if performed, from the post-polymerization process, to means of ii) purification, iii) concentration and/or iv) drying or a combined step of such process steps to remove at least a part of or almost all of the remaining solvent(s), and/or volatiles such as residual monomers comprise:
- purification (step ii)) may comprise a salt removal step (also referred to as "desalting"), for example via treatment with an ion exchanger, such as a magnesium silicate like Ambosol^{®}, and preferably subsequent filtering;
- concentration (step iii)) is performed by removing at least a part of the solvent(s) and optionally also volatiles to increase the solid polymer concentration, by preferably applying a distillation process such as thermal or vacuum distillation, preferably vacuum distillation, which is performed until the desired solid content is achieved, preferably is performed until the desired part of the solvent(s) or all of the volatile components such as volatile solvents and/or unreacted volatile monomers, are removed; and/or
- drying (step iv)) is performed by subjecting the graft polymer containing at least residual amounts of volatiles such as remaining solvent and/or unreacted monomers to a means of removing the volatiles, such as drying using a roller-drum, a spray-dryer, vacuum drying or freeze-drying, preferably spray-drying; and optionally combining such drying process step with a means of agglomeration or granulation to obtain agglomerated or granulated graft polymer particles, such process being preferably selected from spray-agglomeration, granulation or drying in a fluidized-bed dryer, spray-granulation device and the like.

The invention further relates to a fabric and home care comprises a graft polymer composition, wherein the graft polymer composition, is obtainable by polymerizing monomers selected from at least one vinyl ester monomer (B1-1), optionally at least one monomer (B2-1) and/or (B4-1), in the presence of a polymer backbone (A) or (A0) being obtainable by polymerization of at least one alkylene oxide selected from the group of C₂- to C₁₀-alkylene oxides, preferably C₂- to C₅-alkylene oxides, such as ethylene oxide, 1,2-propylene oxide, 1,2-butylene oxide, 2,3-butylene oxide, 1,2-pentene oxide or 2,3-pentene oxide; and 10 to 15,000 mg/kg, relative to the total amount of the polymer backbone (A), of at least one salt selected from an alkali metal salt and/or an earth alkaline metal salt, calculated as weight of metal, wherein the salt is preferably an alkali metal salt, such as a potassium salt or a cesium salt, in particular a potassium salt like potassium acetate or potassium lactate.

### Fabric and home care ingredients

Suitable fabric and home care ingredients are selected from surfactant system, enzymes, enzyme stabilizers, builders, dispersants, structurants or thickeners, polymers, additional amines, catalytic materials, bleaching agents, bleaching catalysts, bleach activators, polymeric dispersing agents, soil removal/ anti-re-deposition agents, polymeric grease cleaning agents, amphiphilic copolymers, fluorescent brightener, fabric hueing agents, chelating agent, encapsulates, perfume, pro-perfumes, malodor reduction materials, conditioning agents, probiotics, organic acids, antioxidants, anti-microbial agents and/or preservatives, neutralizers and/ or pH adjusting agents, processing aids, rheology modifiers, corrosion and/or anti-tarnishing agents, hygiene Agent, pearlescent agent, pigments, opacifier, solvents, carriers, hydrotrope, suds suppressor and mixtures thereof.

### Surfactant System:

In some embodiments, the composition comprises, by weight of the composition, from about 1% to about 70% of a surfactant system. In other embodiments, the composition comprises, by weight of the composition, from about 2% to about 60% of the surfactant system. In further embodiments, the composition comprises, by weight of the composition, from about 5% to about 30% of the surfactant system. The surfactant system may comprise a detersive surfactant selected from anionic surfactants, nonionic surfactants, cationic surfactants, zwitterionic surfactants, amphoteric surfactants, ampholytic surfactants, and mixtures thereof. Those of ordinary skill in the art will understand that a detersive surfactant encompasses any surfactant or mixture of surfactants that provide cleaning, stain removing, or laundering benefit to soiled material.

Suitable surfactants include anionic surfactants, non-ionic surfactants, cationic surfactants, zwitterionic surfactants and amphoteric surfactants and mixtures thereof. Suitable surfactants may be linear or branched, substituted or un-substituted, and may be derived from petrochemical material or biomaterial. Preferred surfactant systems comprise both anionic and nonionic surfactant, preferably in weight ratios from 90:1 to 1:90. In some instances a weight ratio of anionic to nonionic surfactant of at least 1:1 is preferred. However, a ratio below 10:1 may be preferred. When present, the total surfactant level is preferably from 0.1% to 60%, from 1% to 50% or even from 5% to 40% by weight of the subject composition.
Anionic Surfactant: Anionic surfactants include, but are not limited to, those surface-active compounds that contain an organic hydrophobic group containing generally 8 to 22 carbon atoms or generally 8 to 18 carbon atoms in their molecular structure and at least one water-solubilizing group preferably selected from sulfonate, sulfate, and carboxylate so as to form a water-soluble compound. Usually, the hydrophobic group will comprise a C₈-C₂₂ alkyl, or acyl group. Such surfactants are employed in the form of water-soluble salts and the salt-forming cation usually is selected from sodium, potassium, ammonium, magnesium and mono-, with the sodium cation being the usual one chosen.

Anionic surfactants of the present invention and adjunct anionic cosurfactants, may exist in an acid form, and said acid form may be neutralized to form a surfactant salt which is desirable for use in the present detergent compositions. Typical agents for neutralization include the metal counterion base such as hydroxides, e.g., NaOH or KOH. Further preferred agents for neutralizing anionic surfactants of the present invention and adjunct anionic surfactants or cosurfactants in their acid forms include ammonia, amines, oligamines, or alkanolamines. Alkanolamines are preferred. Suitable non-limiting examples include monoethanolamine, diethanolamine, triethanolamine, and other linear or branched alkanolamines known in the art; for example, highly preferred alkanolamines include 2-amino-1-propanol, 1-aminopropanol, monoisopropanolamine, or 1-amino-3-propanol. Amine neutralization may be done to a full or partial extent, e.g. part of the anionic surfactant mix may be neutralized with sodium or potassium and part of the anionic surfactant mix may be neutralized with amines or alkanolamines.

Suitable sulphonate surfactants include methyl ester sulphonates, alpha olefin sulphonates, alkyl benzene sulphonates, especially alkyl benzene sulphonates, preferably C₁₀₋C₁₃ alkyl benzene sulphonate. Suitable alkyl benzene sulphonate (LAS) is obtainable, preferably obtained, by sulphonating commercially available linear alkyl benzene (LAB). Suitable LAB includes low 2-phenyl LAB, such as those supplied by Sasol under the tradename Isochem^{®} or those supplied by Petresa under the tradename Petrelab^{®}, other suitable LAB include high 2-phenyl LAB, such as those supplied by Sasol under the tradename Hyblene^{®}. A suitable anionic surfactant is alkyl benzene sulphonate that is obtained by DETAL catalyzed process, although other synthesis routes, such as HF, may also be suitable. In one aspect a magnesium salt of LAS is used.
Preferably, the composition may contain from about 0.5% to about 30%, by weight of the laundry composition, of a HLAS surfactant selected from alkyl benzene sulfonic acids, alkali metal or amine salts of C₁₀-C₁₆ alkyl benzene sulfonic acids, wherein the HLAS surfactant comprises greater than 50% C₁₂, preferably greater than 60%, preferably greater than 70% C₁₂, more preferably greater than 75%.
Suitable sulphate surfactants include alkyl sulphate, preferably C₈₋₁₈ alkyl sulphate, or predominantly C₁₂ alkyl sulphate.

A preferred sulphate surfactant is alkyl alkoxylated sulphate, preferably alkyl ethoxylated sulphate, preferably a C₈-C₁₈ alkyl alkoxylated sulphate, preferably a C₈-C₁₈ alkyl ethoxylated sulphate, preferably the alkyl alkoxylated sulphate has an average degree of alkoxylation of from 0.5 to 20, preferably from 0.5 to 10, preferably the alkyl alkoxylated sulphate is a C₈-C₁₈ alkyl ethoxylated sulphate having an average degree of ethoxylation of from 0.5 to 10, preferably from 0.5 to 5, more preferably from 0.5 to 3 or from about 1.5 to 3 or from about 1.8 to 2.5. The alkyl alkoxylated sulfate may have a broad alkoxy distribution or a peaked alkoxy distribution. The alkyl portion of the AES may include, on average, from 13.7 to about 16 or from 13.9 to 14.6 carbons atoms. At least about 50% or at least about 60% of the AES molecule may include having an alkyl portion having 14 or more carbon atoms, preferably from 14 to 18, or from 14 to 17, or from 14 to 16, or from 14 to 15 carbon atoms.

The alkyl sulphate, alkyl alkoxylated sulphate and alkyl benzene sulphonates may be linear or branched, including 2 alkyl substituted or mid chain branched type, substituted or un-substituted, and may be derived from petrochemical material or biomaterial. Preferably, the branching group is an alkyl. Typically, the alkyl is selected from methyl, ethyl, propyl, butyl, pentyl, cyclic alkyl groups and mixtures thereof. Single or multiple alkyl branches could be present on the main hydrocarbyl chain of the starting alcohol(s) used to produce the sulfated anionic surfactant used in the detergent of the invention. Most preferably the branched sulfated anionic surfactant is selected from alkyl sulfates, alkyl ethoxy sulfates, and mixtures thereof.

Alkyl sulfates and alkyl alkoxy sulfates are commercially available with a variety of chain lengths, ethoxylation and branching degrees. Commercially available sulfates include those based on Neodol alcohols ex the Shell company, Lial - Isalchem and Safol ex the Sasol company, natural alcohols ex The Procter & Gamble Chemicals company.
Other suitable anionic surfactants include alkyl ether carboxylates, comprising a C₁₀-C₂₆ linear or branched, preferably C₁₀-C₂₀ linear, most preferably C₁₆-C₁₈ linear alkyl alcohol and from 2 to 20, preferably 7 to 13, more preferably 8 to 12, most preferably 9.5 to 10.5 ethoxylates. The acid form or salt form, such as sodium or ammonium salt, may be used, and the alkyl chain may contain one cis or trans double bond. Alkyl ether carboxylic acids are available from Kao (Akypo^{®}), Huntsman (Empicol^{®}) and Clariant (Emulsogen^{®}).
Other suitable anionic surfactants are rhamnolipids. The rhamnolipids may have a single rhamnose sugar ring or two rhamnose sugar rings.
Non-ionic Surfactant: Suitable non-ionic surfactants are selected from the group consisting of: C₈-C₁₈ alkyl ethoxylates, such as, NEODOL^{®} non-ionic surfactants from Shell; C₆-C₁₂ alkyl phenol alkoxylates wherein preferably the alkoxylate units are ethyleneoxy units, propyleneoxy units or a mixture thereof; C₁₂-C₁₈ alcohol and C₆-C₁₂ alkyl phenol condensates with ethylene oxide/propylene oxide block polymers such as Pluronic^{®} from BASF; alkyl polysaccharides, preferably alkylpolyglycosides; methyl ester ethoxylates; polyhydroxy fatty acid amides; ether capped poly(oxyalkylated) alcohol surfactants; and mixtures thereof.

Suitable non-ionic surfactants are alkylpolyglucoside and/or an alkyl alkoxylated alcohol.

Suitable non-ionic surfactants include alkyl alkoxylated alcohols, preferably C₈-C₁₈ alkyl alkoxylated alcohol, preferably a C₈-C₁₈ alkyl ethoxylated alcohol, preferably the alkyl alkoxylated alcohol has an average degree of alkoxylation of from 1 to 50, preferably from 1 to 30, or from 1 to 20, or from 1 to 10, preferably the alkyl alkoxylated alcohol is a C₈-C₁₈ alkyl ethoxylated alcohol having an average degree of ethoxylation of from 1 to 10, preferably from 1 to 7, more preferably from 1 to 5 and most preferably from 3 to 7. In one aspect, the alkyl alkoxylated alcohol is a C₁₂₋C₁₅ alkyl ethoxylated alcohol having an average degree of ethoxylation of from 7 to 10. The alkyl alkoxylated alcohol can be linear or branched and substituted or un-substituted. Suitable nonionic surfactants include those with the trade name Lutensol^{®} from BASF. The alkyl alkoxylated sulfate may have a broad alkoxy distribution, for example Alfonic 1214-9 Ethoxylate or a peaked alkoxy distribution for example Novel 1214-9 both commercially available from Sasol.
Cationic Surfactant: Suitable cationic surfactants include alkyl pyridinium compounds, alkyl quaternary ammonium compounds, alkyl quaternary phosphonium compounds, alkyl ternary sulphonium compounds, and mixtures thereof.
Preferred cationic surfactants are quaternary ammonium compounds having the general formula:

(R)(R₁)(R₂)(R₃)N⁺ X⁻

wherein, R is a linear or branched, substituted or unsubstituted C₆₋₁₈ alkyl or alkenyl moiety, R₁ and R₂ are independently selected from methyl or ethyl moieties, R₃ is a hydroxyl, hydroxymethyl or a hydroxyethyl moiety, X is an anion which provides charge neutrality, preferred anions include halides, preferably chloride; sulphate; and sulphonate.
The fabric care compositions of the present invention may contain up to about 30%, alternatively from about 0.01% to about 20%, more alternatively from about 0.1% to about 20%, by weight of the composition, of a cationic surfactant. For the purposes of the present invention, cationic surfactants include those which can deliver fabric care benefits. Non-limiting examples of useful cationic surfactants include: fatty amines, imidazoline quat materials and quaternary ammonium surfactants, preferably N, N-bis(stearoyl-oxy-ethyl) N,N-dimethyl ammonium chloride, N,N-bis(tallowoyl-oxy-ethyl) N,N-dimethyl ammonium chloride, N,N-bis(stearoyl-oxy-ethyl) N-(2 hydroxyethyl) N-methyl ammonium methylsulfate; N,N-bis(stearoyl-isopropoxy)N,N-dimethyl ammonium methyl sulfate, N,N-bis(tallowoyl-isopropoxy)N,N-dimethyl ammonium methyl sulfate, 1, 2 di (stearoyl-oxy) 3 trimethyl ammoniumpropane chloride; dialkylenedimethylammonium salts such as dicanoladimethylammonium chloride, di(hard)tallowdimethylammonium chloride dicanoladimethylammonium methylsulfate; 1-methyl-1-stearoylamidoethyl-2-stearoylimidazolinium methylsulfate; 1-tallowylamidoethyl-2-tallowylimidazoline; N,N"-dialkyldiethylenetriamine ;the reaction product of N-(2-hydroxyethyl)-1,2-ethylenediamine or N-(2-hydroxyisopropyl)-1,2-ethylenediamine with glycolic acid, esterified with fatty acid, where the fatty acid is (hydrogenated) tallow fatty acid, palm fatty acid, hydrogenated palm fatty acid, oleic acid, rapeseed fatty acid, hydrogenated rapeseed fatty acid; polyglycerol esters (PGEs), oily sugar derivatives, and wax emulsions and a mixture of the above.

It will be understood that combinations of softener actives disclosed above are suitable for use herein.
Amphoteric and Zwitterionic surfactants: Suitable amphoteric or zwitterionic surfactants include amine oxides, and/or betaines. Preferred amine oxides are alkyl dimethyl amine oxide or alkyl amido propyl dimethyl amine oxide, more preferably alkyl dimethyl amine oxide and especially coco dimethyl amino oxide. Amine oxide may have a linear or mid-branched alkyl moiety. Typical linear amine oxides include water-soluble amine oxides containing one R¹ C₈-C₁₈ alkyl moiety and 2 R² and R³ moieties selected from the group consisting of C₁-C₃ alkyl groups and C₁-C₃ hydroxyalkyl groups. Preferably amine oxide is characterized by the formula R¹ - N(R²)(R³) O wherein R¹ is a C₈-C₁₈ alkyl and R² and R³ are selected from the group consisting of methyl, ethyl, propyl, isopropyl, 2-hydroxethyl, 2-hydroxypropyl and 3-hydroxypropyl. The linear amine oxide surfactants in particular may include linear C₁₀-C₁₈ alkyl dimethyl amine oxides and linear C₈-C₁₂ alkoxy ethyl dihydroxy ethyl amine oxides.

Other suitable surfactants include betaines, such as alkyl betaines, alkylamidobetaine, amidazoliniumbetaine, sulfobetaine (INCI Sultaines) as well as Phosphobetaines.

### Enzymes:

Preferably the composition comprises one or more enzymes. Preferred enzymes provide cleaning performance and/or fabric care benefits. Examples of suitable enzymes include, but are not limited to, hemicellulases, peroxidases, proteases, cellulases, xylanases, lipases, phospholipases, esterases, cutinases, pectinases, mannanases, galactanases, pectate lyases, keratinases, reductases, oxidases, phenoloxidases, lipoxygenases, ligninases, pullulanases, tannases, pentosanases, malanases, β-glucanases, arabinosidases, hyaluronidase, chondroitinase, laccase, and amylases, or mixtures thereof. A typical combination is an enzyme cocktail that may comprise, for example, a protease and lipase in conjunction with amylase. When present in the composition, the aforementioned additional enzymes may be present at levels from about 0.00001% to about 2%, from about 0.0001% to about 1% or even from about 0.001% to about 0.5% enzyme protein by weight of the composition.
Proteases. Preferably the composition comprises one or more proteases. Suitable proteases include metalloproteases and serine proteases, including neutral or alkaline microbial serine proteases, such as subtilisins (EC 3.4.21.62). Suitable proteases include those of animal, vegetable or microbial origin. In one aspect, such suitable protease may be of microbial origin. The suitable proteases include chemically or genetically modified mutants of the aforementioned suitable proteases. In one aspect, the suitable protease may be a serine protease, such as an alkaline microbial protease or/and a trypsin-type protease. Examples of suitable neutral or alkaline proteases include:
(a) subtilisins (EC 3.4.21.62), especially those derived from *Bacillus,* such as *Bacillus sp.,* Bacillus sp., B. lentus, B. alkalophilus, B. subtilis, B. amyloliquefaciens, B. gibsonii, B. akibaii, B. clausii and B. clarkii described in WO2004067737, WO2015091989, WO2015091990, WO2015024739, WO2015143360, US6,312,936B1, US5,679,630, US4,760,025, DE102006022216A1, DE102006022224A1, WO2015089447, WO2015089441, WO2016066756, WO2016066757, WO2016069557, WO2016069563, WO2016069569, WO2017/089093, WO2020/156419.
(b) trypsin-type or chymotrypsin-type proteases, such as trypsin (e.g., of porcine or bovine origin), including the *Fusarium* protease described in WO 89/06270 and the chymotrypsin proteases derived from *Cellumonas* described in WO 05/052161 and WO 05/052146.
(c) metalloproteases, especially those derived from *Bacillus amyloliquefaciens* decribed in WO07/044993A2; from *Bacillus, Brevibacillus, Thermoactinomyces, Geobacillus, Paenibacillus, Lysinibacillus* or *Streptomyces spp.* Described in WO2014194032, WO2014194054 and WO2014194117; from *Kribella alluminosa* described in WO2015193488; and from *Streptomyces* and *Lysobacter* described in WO2016075078.
(d) Protease having at least 90% identity to the subtilase from *Bacillus sp.* TY145, NCIMB 40339, described in WO92/17577 (Novozymes A/S), including the variants of this *Bacillus sp* TY145 subtilase described in WO2015024739, and WO2016066757.
Suitable commercially available protease enzymes include those sold under the trade names Alcalase^{®}, Savinase^{®}, Primase^{®}, Durazym^{®}, Polarzyme^{®}, Kannase^{®}, Liquanase^{®}, Liquanase Ultra^{®}, Savinase Ultra^{®}, Liquanase^{®} Evity^{®}, Savinase^{®} Evity^{®}, Ovozyme^{®}, Neutrase^{®}, Everlase^{®}, Coronase^{®}, Blaze^{®}, Blaze Ultra^{®}, Blaze^{®} Evity^{®}, Blaze^{®} Exceed, Blaze^{®} Pro, Esperase^{®}, Progress^{®} Uno, Progress^{®} Excel, Progress^{®} Key, Ronozyme^{®}, Vinzon^{®} and Het Ultra^{®} by Novozymes A/S (Denmark); those sold under the tradename Maxatase^{®}, Maxacal^{®}, Maxapem^{®}, Properase^{®}, Purafect^{®}, Purafect Prime^{®}, Purafect Ox^{®}, FN3^{®}, FN4^{®}, Excellase^{®}, Ultimase^{®} and Purafect OXP^{®} by Dupont; those sold under the tradename Opticlean^{®} and Optimase^{®} by Solvay Enzymes; and those available from Henkel/Kemira, namely BLAP (sequence shown in Figure29 of US 5,352,604 with the following mutations S99D + S101 R + S103A + V104I + G159S, hereinafter referred to as BLAP), BLAP R (BLAP with S3T + V4I + V199M + V205I + L217D), BLAP X (BLAP with S3T + V4I + V205I) and BLAP F49 (BLAP with S3T + V4I + A194P + V199M + V205I + L217D); and KAP *(Bacillus alkalophilus subtilisin* with mutations A230V + S256G + S259N) from Kao and Lavergy^{®}, Lavergy^{®} Pro, Lavergy^{®} C Bright from BASF.
Amylases. Preferably the composition may comprise an amylase. Suitable alpha-amylases include those of bacterial or fungal origin. Chemically or genetically modified mutants (variants) are included. A preferred alkaline alpha-amylase is derived from a strain of *Bacillus,* such *as Bacillus licheniformis, Bacillus amyloliquefaciens, Bacillus stearothermophilus, Bacillus subtilis,* or other *Bacillus sp.,* such as *Bacillus sp.* NCIB 12289, NCIB 12512, NCIB 12513, DSM 9375 (USP 7,153,818) DSM 12368, DSMZ no. 12649, KSM AP1378 (WO 97/00324), KSM K36 or KSM K38 (EP 1,022,334). Preferred amylases include:
(a) variants described in WO 94/02597, WO 94/18314, WO96/23874 and WO 97/43424, especially the variants with substitutions in one or more of the following positions versus the enzyme listed as SEQ ID No. 2 in WO 96/23874: 15, 23, 105, 106, 124, 128, 133, 154, 156, 181, 188, 190, 197, 202, 208, 209, 243, 264, 304, 305, 391, 408, and 444.
(b) variants described in USP 5,856,164 and WO99/23211, WO 96/23873, WO00/60060 and WO 06/002643, especially the variants with one or more substitutions in the following positions versus the AA560 enzyme listed as SEQ ID No. 12 in WO 06/002643:
   26, 30, 33, 82, 37, 106, 118, 128, 133, 149, 150, 160, 178, 182, 186, 193, 203, 214, 231, 256, 257, 258, 269, 270, 272, 283, 295, 296, 298, 299, 303, 304, 305, 311, 314, 315, 318, 319, 339, 345, 361, 378, 383, 419, 421, 437, 441, 444, 445, 446, 447, 450, 461, 471, 482, 484, preferably that also contain the deletions of D183* and G184*.
(c) variants exhibiting at least 90% identity with SEQ ID No. 4 in WO06/002643, the wild-type enzyme from *Bacillus SP722,* especially variants with deletions in the 183 and 184 positions and variants described in WO 00/60060, which is incorporated herein by reference.
(d) variants exhibiting at least 95% identity with the wild-type enzyme from *Bacillus sp.* 707 (SEQ ID NO:7 in US 6,093, 562), especially those comprising one or more of the following mutations M202, M208, S255, R172, and/or M261. Preferably said amylase comprises one or more of M202L, M202V, M202S, M202T, M202I, M202Q, M202W, S255N and/or R172Q. Particularly preferred are those comprising the M202L or M202T mutations.
(e) variants described in WO 09/149130, preferably those exhibiting at least 90% identity with SEQ ID NO: 1 or SEQ ID NO:2 in WO 09/149130, the wild-type enzyme from *Geobacillus Stearophermophilus* or a truncated version thereof.
(f) variants exhibiting at least 89% identity with SEQ ID NO:1 in WO2016091688, especially those comprising deletions at positions H183+G184 and additionally one or more mutations at positions 405, 421, 422 and/or 428.
(g) variants exhibiting at least 60% amino acid sequence identity with the "PcuAmyl α-amylase" from *Paenibacillus curdlanolyticus* YK9 (SEQ ID NO:3 in WO2014099523).
(h) variants exhibiting at least 60% amino acid sequence identity with the "CspAmy2 amylase" from *Cytophaga sp.* (SEQ ID NO:1 in WO2014164777).
(i) variants exhibiting at least 85% identity with AmyE from Bacillus subtilis (SEQ ID NO:1 in WO2009149271).
(j) Variants exhibiting at least 90% identity variant with the wild-type amylase from Bacillus sp. KSM-K38 with accession number AB051102.

Suitable commercially available alpha-amylases include DURAMYL^{®}, LIQUEZYME^{®}, TERMAMYL^{®}, TERMAMYL ULTRA^{®}, NATALASE^{®}, SUPRAMYL^{®}, STAINZYME^{®}, STAINZYME PLUS^{®}, FUNGAMYL^{®} and BAN^{®} (Novozymes A/S, Bagsvaerd, Denmark), KEMZYM^{®} AT 9000 Biozym Biotech Trading GmbH Wehlistrasse 27b A-1200 Wien Austria, RAPIDASE^{®} , PURASTAR^{®}, ENZYSIZE^{®}, OPTISIZE HT PLUS^{®}, POWERASE^{®} and PURASTAR OXAM^{®} (Genencor International Inc., Palo Alto, California) and KAM^{®} (Kao, 14-10 Nihonbashi Kayabacho, 1-chome, Chuo-ku Tokyo 103-8210, Japan). In one aspect, suitable amylases include NATALASE^{®}, STAINZYME^{®} and STAINZYME PLUS^{®} and mixtures thereof.

Lipases. Preferably the composition comprises one or more lipases, including "first cycle lipases" such as those described in U.S. Patent 6,939,702 B1 and US PA 2009/0217464. Preferred lipases are first-wash lipases. In one embodiment of the invention the composition comprises a first wash lipase.

First wash lipases includes a lipase which is a polypeptide having an amino acid sequence which: (a) has at least 90% identity with the wild-type lipase derived from *Humicola lanuginosa* strain DSM 4109; (b) compared to said wild-type lipase, comprises a substitution of an electrically neutral or negatively charged amino acid at the surface of the three-dimensional structure within 15A of E1 or Q249 with a positively charged amino acid; and (c) comprises a peptide addition at the C-terminal; and/or (d) comprises a peptide addition at the N-terminal and/or (e) meets the following limitations: i) comprises a negative amino acid in position E210 of said wild-type lipase; ii) comprises a negatively charged amino acid in the region corresponding to positions 90-101 of said wild-type lipase; and iii) comprises a neutral or negative amino acid at a position corresponding to N94 or said wild-type lipase and/or has a negative or neutral net electric charge in the region corresponding to positions 90-101 of said wild-type lipase.

Preferred are variants of the wild-type lipase from Thermomyces lanuginosus comprising one or more of the T231R and N233R mutations. The wild-type sequence is the 269 amino acids (amino acids 23 - 291) of the Swissprot accession number Swiss-Prot O59952 (derived from Thermomyces lanuginosus (Humicola lanuginosa)). Other suitable lipases include: Liprl 139, e.g. as described in WO2013/171241; TfuLip2, e.g. as described in WO2011/084412 and WO2013/033318; Pseudomonas stutzeri lipase, e.g. as described in WO2018228880; Microbulbifer thermotolerans lipase, e.g. as described in WO2018228881; Sulfobacillus acidocaldarius lipase, e.g. as described in EP3299457; LIP062 lipase e.g. as described in WO2018209026; PinLip lipase e.g. as described in WO2017036901 and Absidia sp. lipase e.g. as described in WO2017005798.

Preferred lipases would include those sold under the tradenames Lipex^{®} and Lipolex^{®} and Lipoclean^{®}.

Cellulases. Suitable enzymes include cellulases of bacterial or fungal origin. Chemically modified or protein engineered mutants are included. Suitable cellulases include cellulases from the genera *Bacillus, Pseudomonas, Humicola, Fusarium, Thielavia, Acremonium, e.g.,* the fungal cellulases produced from *Humicola insolens, Myceliophthora thermophila* and *Fusarium oxysporum* disclosed in US 4,435,307, US 5,648,263 , US 5,691,178 , US 5,776,757 and US 5,691,178 . Suitable cellulases include the alkaline or neutral cellulases having colour care benefits. Commercially available cellulases include CELLUZYME^{®}, CAREZYME^{®} and CAREZYME PREMIUM (Novozymes A/S), CLAZINASE^{®}, and PURADAX HA^{®} (Genencor International Inc.), and KAC-500(B)^{®} (Kao Corporation).

The bacterial cleaning cellulase may be a glycosyl hydrolase having enzymatic activity towards amorphous cellulose substrates, wherein the glycosyl hydrolase is selected from GH families 5, 7, 12, 16, 44 or 74. Suitable glycosyl hydrolases may also be selected from the group consisting of: GH family 44 glycosyl hydrolases from *Paenibacillus polyxyma* (wild-type) such as XYG1006 described in US 7,361,736 or are variants thereof. GH family 12 glycosyl hydrolases from *Bacillus licheniformis* (wild-type) such as SEQ ID NO:1 described in US 6,268,197 or are variants thereof; GH family 5 glycosyl hydrolases from *Bacillus agaradhaerens* (wild type) or variants thereof; GH family 5 glycosyl hydrolases from *Paenibacillus* (wild type) such as XYG1034 and XYG 1022 described in US 6,630,340 or variants thereof; GH family 74 glycosyl hydrolases from *Jonesia sp.* (wild type) such as XYG1020 described in WO 2002/077242 or variants thereof; and GH family 74 glycosyl hydrolases from *Trichoderma Reesei* (wild type), such as the enzyme described in more detail in Sequence ID NO. 2 of US 7,172,891 , or variants thereof. Suitable bacterial cleaning cellulases are sold under the tradenames Celluclean^{®} and Whitezyme^{®} (Novozymes A/S, Bagsvaerd, Denmark).

The composition may comprise a fungal cleaning cellulase belonging to glycosyl hydrolase family 45 having a molecular weight of from 17kDa to 30 kDa, for example the endoglucanases sold under the tradename Biotouch^{®} NCD, DCC and DCL (AB Enzymes, Darmstadt, Germany). Pectate Lyases. Other preferred enzymes include pectate lyases sold under the tradenames Pectawash^{®}, Pectaway^{®}, Xpect^{®} and mannanases sold under the tradenames Mannaway^{®} (all from Novozymes A/S, Bagsvaerd, Denmark), and Purabrite^{®} (Genencor International Inc., Palo Alto, California).
Nucleases. The composition may comprise a nuclease enzyme. The nuclease enzyme is an enzyme capable of cleaving the phosphodiester bonds between the nucleotide sub-units of nucleic acids. The nuclease enzyme herein is preferably a deoxyribonuclease or ribonuclease enzyme or a functional fragment thereof. By functional fragment or part is meant the portion of the nuclease enzyme that catalyzes the cleavage of phosphodiester linkages in the DNA backbone and so is a region of said nuclease protein that retains catalytic activity. Thus, it includes truncated, but functional versions, of the enzyme and/or variants and/or derivatives and/or homologues whose functionality is maintained. Suitable DNases include wild-types and variants described in detail by WO2017162836 and WO2018108865, and variants of the Bacillus cibi DNase including those described in WO2018011277.

RNase: suitable RNases include wild-types and variants of DNases described in WO2018178061 and WO2020074499.

Preferably the nuclease enzyme is a deoxyribonuclease, preferably selected from any of the classes E.C. 3.1.21.x, where x=1, 2, 3, 4, 5, 6, 7, 8 or 9, E.C. 3.1.22.y where y=1, 2, 4 or 5, E.C. 3.1.30.z where z= 1 or 2, E.C. 3.1.31.1 and mixtures thereof.

Hexosaminidases. The composition may comprise one or more hexosaminidases. The term hexosaminidase includes "dispersin" and the abbreviation "Dsp", which means a polypeptide having hexosaminidase activity, EC 3.2.1.- that catalyzes the hydrolysis of β-1,6-glycosidic linkages of N-acetyl-glucosamine polymers found in soils of microbial origin. The term hexosaminidase includes polypeptides having N-acetylglucosaminidase activity and β-N-acetylglucosaminidase activity. Hexosaminidase activity may be determined according to Assay II described in WO2018184873. Suitable hexosaminidases include those disclosed in WO2017186936, WO2017186937, WO2017186943, WO2017207770, WO2018184873, WO2019086520, WO2019086528, WO2019086530, WO2019086532, WO2019086521, WO2019086526, WO2020002604, WO2020002608, WO2020007863, WO2020007875, WO2020008024, WO2020070063, WO2020070249, WO2020088957, WO2020088958 and WO2020207944. Variants of the *Terribacillus saccharophilus* hexosaminidase defined by SEQ ID NO: 1 of WO2020207944 may be preferred, especially the variants with improved thermostability disclosed in that publication.

Mannanases. The composition may comprise an extracellular-polymer-degrading enzyme that includes a mannanase enzyme. The term "mannanase" means a polypeptide having mannan endo-1,4-beta-mannosidase activity (EC 3.2.1.78) from the glycoside hydrolase family 26 that catalyzes the hydrolysis of 1,4-3-D-mannosidic linkages in mannans, galactomannans and glucomannans. Alternative names of mannan endo-1,4-beta-mannosidase are 1,4-3-D-mannan mannanohydrolase; endo-1,4-3-mannanase; endo- β-1,4-mannase; β-mannanase B; 3-1,4-mannan 4-mannanohydrolase; endo-3-mannanase; and β-D-mannanase. For purposes of the present disclosure, mannanase activity may be determined using the Reducing End Assay as described in the experimental section of WO2015040159. Suitable examples from class EC 3.2.1.78 are described in WO2015040159, such as the mature polypeptide SEQ ID NO: 1 described therein.

Galactanases. The composition may comprise an extracellular polymer-degrading enzyme that includes an endo-beta-1,6-galactanase enzyme. The term "endo-beta-1,6-galactanase" or "a polypeptide having endo-beta-1,6-galactanase activity" means an endo-beta-1,6-galactanase activity (EC 3.2.1.164) from the glycoside hydrolase family 30 that catalyzes the hydrolytic cleavage of 1,6-3-D-galactooligosaccharides with a degree of polymerization (DP) higher than 3, and their acidic derivatives with 4-O-methylglucosyluronate or glucosyluronate groups at the nonreducing terminals. For purposes of the present disclosure, endo-beta-1,6-galactanase activity is determined according to the procedure described in WO 2015185689 in Assay I. Suitable examples from class EC 3.2.1.164 are described in WO 2015185689, such as the mature polypeptide SEQ ID NO: 2.

### Enzyme Stabilizing System:

The composition may optionally comprise from about 0.001% to about 10%, in some examples from about 0.005% to about 8%, and in other examples, from about 0.01% to about 6%, by weight of the composition, of an enzyme stabilizing system. The enzyme stabilizing system can be any stabilizing system which is compatible with the detersive enzyme. In the case of aqueous detergent compositions comprising protease, a reversible protease inhibitor, such as a boron compound, including borate, 4-formyl phenylboronic acid, phenylboronic acid and derivatives thereof, or compounds such as calcium formate, sodium formate and 1,2-propane diol may be added to further improve stability.

### Builders:

The composition may optionally comprise a builder. Built compositions typically comprise at least about 1% builder, based on the total weight of the composition. Liquid compositions may comprise up to about 10% builder, and in some examples up to about 8% builder, of the total weight of the composition. Granular compositions may comprise up to about 30% builder, and in some examples up to about 5% builder, by weight of the composition.

Builders selected from aluminosilicates (e.g., zeolite builders, such as zeolite A, zeolite P, and zeolite MAP) and silicates assist in controlling mineral hardness in wash water, especially calcium and/or magnesium, or to assist in the removal of particulate soils from surfaces. Suitable builders may be selected from the group consisting of phosphates, such as polyphosphates (e.g., sodium tri-polyphosphate), especially sodium salts thereof; carbonates, bicarbonates, sesquicarbonates, and carbonate minerals other than sodium carbonate or sesquicarbonate; organic mono-, di-, tri-, and tetracarboxylates, especially water-soluble nonsurfactant carboxylates in acid, sodium, potassium or alkanolammonium salt form, as well as oligomeric or water-soluble low molecular weight polymer carboxylates including aliphatic and aromatic types; and phytic acid. These may be complemented by borates, e.g., for pH-buffering purposes, or by sulfates, especially sodium sulfate and any other fillers or carriers which may be important to the engineering of stable surfactant and/or builder-containing compositions. Additional suitable builders may be selected from citric acid, lactic acid, fatty acid and salt thereof.

Suitable builders may include polycarboxylate and salt thereof, for example, homopolymers of acrylic acid, copolymers of acrylic acid and maleic acid, and copolymers of acrylic acid and/or maleic acid, and other suitable ethylenic monomers with various types of additional functionalities. More suitable polycarboxylate are described in polycarboxylate polymers section of this patent.

Also suitable for use as builders herein are synthesized crystalline ion exchange materials or hydrates thereof having chain structure and a composition represented by the following general anhydride form: x(M₂O)·ySiO₂·zM'O wherein M is Na and/or K, M' is Ca and/or Mg; y/x is 0.5 to 2.0; and z/x is 0.005 to 1.0.

Alternatively, the composition may be substantially free of builder.

### Structurant / Thickeners: Suitable structurant / thickeners include:

- Di-benzylidene Polyol Acetal Derivative
- Bacterial Cellulose
- Coated Bacterial Cellulose
- Cellulose fibers non-bacterial cellulose derived
- Non-Polymeric Crystalline Hydroxyl-Functional Materials
- Polymeric Structuring Agents
- Di-amido-gellants
- Any combination of above.

### Polymers:

The compositions may include one or more polymers. Typically, the level of polymers is from about 0.01% to about 10.0 % by weight of the composition, preferably from about 0.1% to about 5%, and more preferably from about 0.2% to about 3.0% by weight of the composition. In some situations where the composition is in concentrated form, such as concentrated fabric and home care products in any form which designed for consumer to dilute at home and then use following their regular dosing habits, the level of the polymers maybe higher than 10.0%, or higher than 5.0%, by weight of the composition.

Depending on the structure of the polymer, polymers can provide various benefits for the composition, including but not limited to, hydrophobic and hydrophilic stain removal, surfactant boosting, soil suspension, whiteness maintenance, soil release, malodor control, dye transfer inhibition, enhanced softness, enhanced freshness, etc. Polymers are normally multi-functional, which means one specific given type of polymer may provide more than one types of benefit as mentioned above. For example, a specific soil release polymer may provide soil release benefit as primary benefit, while also providing other benefits such as whiteness maintenance, malodor control, soil suspension, dye transfer inhibition.

Suitable polymers include, but are not limited to the following:

### Other Graft polymers

Other graft polymer comprises a backbone (A) as a graft base and polymeric sidechains (B) grafted on the backbone (A). Said backbone (A) comprises structural units obtainable by polymerization of at least one alkylene oxide monomer selected from the group of ethylene oxide, 1,2-propylene oxide, 1,2-butylene oxide, 2,3-butylene oxide, 1,2-pentene oxide or 2,3-pentene oxide. Said polymeric sidechains (B) are obtainable by polymerization of at least one vinyl ester monomer. The graft polymers are known as effective soil suspension polymers for hydrophobic stains (such as greasy, body soil) and hydrophilic stains (such as clay and other particulate stains), surfactant boosters, soil release agents, and sometimes as dye transfer inhibitors.

Suitable graft polymer comprises polyethylene glycol backbone (A) as a graft base, and at least one polymeric sidechain (B) grafted on the polyethylene glycol backbone (A), wherein the polymeric sidechain comprises polyvinyl acetate structural units and optionally polyvinyl alcohol structural units. One preferred graft polymer of this type is Sokalan HP22 available from BASF. One specific preferred graft polymer is polyvinyl acetate grafted polyethylene oxide copolymer having a polyethylene oxide as graft base and multiple polyvinyl acetate side chains, wherein, the molecular weight of the polyethylene oxide backbone is about 6000 and the weight ratio of the polyethylene oxide to polyvinyl acetate is about 40 to 60 and no more than 1 grafting point per 50 ethylene oxide units. The most preferred polymer of this type is available from BASF as Sokalan PG101.

Other preferred graft polymers of this type are described in WO2023019153, WO2007138053, WO2021160795, WO2021160851, WO2024/126267

Other preferred graft polymers are described in WO2020005476 as dye transfer inhibitors. More examples of this type are described in WO2022263354, WO2024129520, WO2024126270, WO2024126268, and WO2024017797.

### Modified polyamine

The modified polyamine comprises a polyamine core structure and a plurality of alkoxylate groups attached to the core structure. The polyamine core structure includes polyalkyleneimine, and linear or branched oligoamine.

The polyamine core structure and the alkoxylate groups attached to the core structure can be further derivatized. For example, the polyamine core structure can be further partly or completely quaternized with C₁-C₃₀ linear or branched alkyl, more preferably C₁-C₁₀ or even C₁-C₅ linear or branched alkyl, most preferably methyl. The alkoxylate group can be further sulphated, sulphonated and/or substituted with an amino functional group. The alkoxylate groups attached to the core structure can comprises alternative structural units which are different from structural unit derived from alkylene oxide monomer, such as structural units derived from lactone and/or hydroxy acid.

Suitable modified polyamine dispersing agent includes ethoxylated polyethyleneimine (EPEI). EPEI are effective dispersing agents for hydrophilic stains, especially hydrophilic particulate stain such as clay. Preferably, the EPEI has a polyethyleneimine backbone of weight average molecular weight of between 100g/mol and 2000g/mol, preferably between 200g/mol and 1500g/mol, more preferably between 300g/mol and 1000g/mol, even more preferably between 400g/mol and 800g/mol, most preferably between 500g/mol and 700g/mol, preferably about 600. The ethoxylation chains within the EPEI have on average 5 to 40, preferably 10 to 30, more preferably 15 to 25, even more preferably 18 to 22, most preferably about 20 ethoxy units per ethoxylation chain. The EPEI may have a total weight average molecular weight of from 5000g/mol to 20000g/mol, preferably from 7500g/mol to 17500g/mol, more preferably from 10000g/mol to 15000g/mol, even more preferably from 12000g/mol to 13000g/mol, most preferably about 12700g/mol. A preferred example is polyethyleneimine core (with average molecular weight about 600g/mol) ethoxylated to 20 EO groups per NH. Suitable EPEI this type includes Sokalan HP20 available from BASF, Lutensol FP620 from BASF. Examples of available polyethyleneimine ethoxylates also include those prepared by reacting ethylene oxide with Epomine SP-006 manufactured by Nippon Shokubai. Another preferred EPEI comprises polyethyleneimine has an average molecular weight (Mw) ranging from 1800 to 5000 g/mol (prior to ethoxylation), and the polyoxyethylene side chains have an average of from 25 to 40 ethoxy units per side chain bonded to the polyethyleneimine backbone. Such EPEI is described in WO2020/030760 and WO2020/030469.

Suitable modified polyamine dispersing agent includes amphiphilic alkoxylated polyalkyleneimine polymer. Suitable amphiphilic alkoxylated polyalkyleneimine polymer is described in WO2009/061990, WO2006/108857 and WO2021061774. A preferred alkoxylated polyalkyleneimine polymer is polyethyleneimine (MW = 600) modified with 24 ethoxylate groups per -NH and 16 propoxylate groups per -NH. Another preferred alkoxylated polyalkyleneimine polymer is polyethyleneimine (MW = 600) modified with 10 ethoxylate groups per -NH and 7 propoxylate groups per -NH. Another preferred alkoxylated polyalkyleneimine polymer of this type includes Sokalan HP30 Booster available from BASF.

Suitable modified polyamine dispersing agent also includes zwitterionic polyamines. A particular preferred zwitterionic polyamine is available from BASF as Lutensit Z96 polymer (zwitterionic hexamethylene diamine according to below formula: 100% quaternized and about 40% of the polyethoxy (EO₂₄) groups are sulfonated).

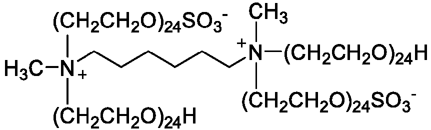

Another preferred zwitterionic polyamine is Sokalan HP96, available from BASF.

Another suitable zwitterionic polyamine is amphoterically-modified oligopropyleneimine ethoxylates as described in WO2021239547.

### Polyester soil release polymer (Polyester SRP)

In the washing process, polyester SRPs can deposit on fibers, particularly synthetic fibers such as polyester, which change the surface properties of fabric and deliver various benefit, such as reduced soil deposition onto fabric during wash and wear; reduced adhesion of microorganisms and allergens onto fabric; easier soil removal from fabrics which treated with soil release polymer in previous wash; reduced malodor; improved wicking properties.

The polyester SRP comprises at least one structural unit (A), at least one structural unit (B) and/or structural unit (C)

-(C=O)-Ar-(C=O)- (A)

-O-G-O- (B)

-O-(G-O)_{z}- (C)

wherein,
- Ar: is a substituted aromatic ring selected from di-substituted benzene ring (-C₆H₄-), di-substituted furan ring (-C₄H₂O-), and di-substituted pyridine ring (-C₅H₃N-); preferably di-substituted benzene ring (-C₆H₄-).
- G: is C₂-C₁₂ alkylene, preferably C₂-C₆ alkylene, more preferably each independently selected from (C₂H₄) and (C₃H₆)
- z: is a molar average number from 2 to 200, preferably from 2 to 100, more preferably from 2 to 60,

Preferably, structural unit (A) has a structure of (A-1) to (A-3). More preferably, structural unit (A) has structure of (A-1) and/or (A-2). More preferably, structure unit (A) has a structural of (A-1).

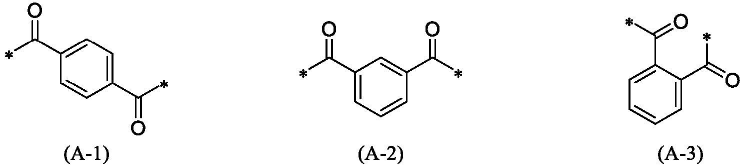

Typically, (A-1) is derived from terephthalic acid and/or derivatives thereof. (A-2) is derived from isophthalic acid and/or derivatives thereof. (A-3) is derived from phthalic acid and/or derivatives thereof. The "derivatives thereof" comprises, without limitation, salts, esters, diesters, and/or anhydrides. Preferred ester and diester here include methyl ester, and ethyl ester.

Preferably, structural unit (B) is derived from ethylene glycol, propylene glycol.

Preferably, structural unit (C) is derived from polyethylene glycol such as PEG200, PEG300, PEG550, PEG750, PEG1000, PEG1500, PEG2000, PEG2500, PEG3000, PEG3500, PEG4000, and PEG4500, and poly(ethylene glycol) monoalkyl ethers such as poly(ethylene glycol) monomethyl ethers including mPEG200, mPEG300, mPEG550, mPEG750, mPEG1000, mPEG1500, mPEG2000, mPEG2500, mPEG3000, mPEG3500, mPEG4000, and mPEG4500.

Other suitable terephthalate-derived polyester SRP are described in patent WO2014019903, WO2014019658 and WO2014019659. The end capping group of these SRPs are selected from

X-(OC₂H₄)ₙ-(OC₃H₆)ₘ-

wherein X is C₁-C₄ alkyl and preferably methyl, the -(OC₂H₄) groups and the -(OC₃H₆) groups are arranged blockwise and the block consisting of the -(OC₃H₆) groups is bound to a COO group, n is based on a molar average a number of from 40 to 50, m is based on a molar average a number of from 1 to 10 and preferably of from 1 to 7.

Another type of preferred polyester SRPs are anionic polyester SRP which comprises one or more anionic structual units. Preferred anioinc structural unit has a structure of (D).

-OC-sAr-CO- (D)

wherein, sAr is 1,3-substituted phenylene substituted in position 5 with -SO₃M; M is a counterion selected from Na, Li, K, Mg/2, Ca/2, Al/3, ammonium, mono-, di-, tri-, or tetraalkylammonium wherein the alkyl groups are C₁-C₁₈ alkyl or C₂-C₁₀ hydroxyalkyl, or mixtures thereof.

Suitable anionic polyester SRP are described in EP3222647, EP1966273B1.

Other suitable anionic SRPs are described in WO2022167655, US20230406999, WO2024032573, WO2024094803, WO2024094800, WO2024094802, these polymers may have improved biodegradation profiles.

The composition may comprise both nonionic SRPs and anionic SRPs.
Polyester SRPs may be available or convert into different forms, include powder, particle, liquid, waxy or premix. In some embodiment, other materials (for example, water, alcohol, other solvents, salt, surfactant, etc.) are needed to convert the polyester soil release polymer into different forms mentioned above, the wt% of active soil release polymer in the powder, particle, liquid, waxy or premix is in the range from 10% to 100%, for example 15%, 20%, 40%, 60%, 70%, 80%, 90%, 95%, 100%. Useful soil release polymer premix examples are described in EP351759 and WO2022100876. When the soil release polymers exist in liquid or premix from, the premix maybe transparent or opaque, white or slightly yellowish. Premix in opaque maybe use to provide an opaque appearance for the finished product or part of the finished product.

The polyester may or may not be biodegradable, preferred soil release polymers are readily biodegradable.

Example of suitable soil release polymers include TexCare^{®} series supplied by Clariant, including noniconic soil release polymers Texcare^{®} SRN 100, SRN 170, SRN 170 C, SRN 170 Terra, SRN 172, SRN 240, SRN 260, SRN 260 life, SRN 260 SG Terra, SRN UL50, SRN 300, SRN 325; and anionic soil release polymers TexCare^{®} SRA 100, SRA 300, SRA300 F. Example of suitable soil release polymers also include REPEL-O-TEX^{®} line of polymers supplied by Rhodia/Solvay, including nonionic soil release polymer REPEL-O-TEX^{®} Crystal, Crystal PLUS, Crystal NAT, SRP6; and anionic soil release polymer REPEL-O-TEX^{®} SF-2. Other examples of commercial soil release polymers also includes WeylClean^{®} series of soil release polymers supplied by WeylChem, including noniconic soil release polymers WeylClean^{®} PLN1, PLN2; and anionic soil release polymers WeylClean^{®} PSA1.

### Polymers based on polysaccharide

Polysaccharides are the most abundant carbohydrates in nature and serve a variety of functions, such as energy storage or as components of plant cell walls. Because of their availability, versatility and biodegradability, polysaccharides are extensively used for packaging, food, pharmaceutical, and consumer goods industries as sustainable and renewable materials.

Typically, natural polysaccharide without further chemical modification only delivers limited performance in fabric and home products, certain chemical modifications are required for polysaccharide to deliver stronger performance. Various polysaccharides have proven to be useful starting material to make polymers for fabric and home care products, including cellulose, starch, guar, dextran, polyglucan, chitin, curdlan, xylose, Inulin, pullulan, locust bean gum, cassia gum, tamarind gum (xyloglucan), xanthan gum, amylose, amylopectin, scleroglucan and mixtures thereof.

The most common type of modified polysaccharide is modified cellulose.
Modified cellulose polymers include anionic modified cellulose polymers which been modified with functional groups that contain negative charge. Suitable anionic modified cellulose polymers include carboxyalkyl cellulose, such as carboxymethyl cellulose. In one preferred embodiment, the carboxymethyl cellulose has a degree of carboxymethyl substitution of from about 0.5 to about 0.9 and a molecular weight from about 80,000 Da to about 300,000 Da. Suitable carboxymethylcellulose is described in WO2011031599 and WO2009/154933. Suitable carboxymethylcellulose include Finnfix^{®} series sold by CP Kelco or Nouryon, which include Finnfix^{®} GDA, a hydrophobically modified carboxymethylcellulose, e.g., the alkyl ketene dimer derivative of carboxymethylcellulose sold under the tradename Finnfix^{®} SH1, or the blocky carboxymethylcellulose sold under the tradename Finnfix^{®}V. Other suitable anionic modified cellulose polymers include sulphoalkyl group which described in WO2006117056, sulfoethyl cellulose which described in WO2014124872.

Modified cellulose polymers also include nonionic modified cellulose polymers which have been modified by functional group that does not contain any charge. Suitable nonionic modified cellulose polymers include alkyl cellulose, hydroxyalkyl cellulose, hydroxyalkyl alkylcellulose, alkylalkoxyalkyl cellulose. Suitable nonionic modified cellulose polymers also include nonionic cellulose carbamates which described in WO2015/044061; nonionic 6-desoxy-6-amino-celluloses derivative which described in US20180346846. Examples of alkyl cellulose include methyl cellulose (MC), ethyl cellulose (EC), etc. Suitable ethyl cellulos are sold under tradename Ethocel^{™} by Dow Chemicals, DuPont, or IFF. Example of hydroxyalkyl cellulose include hydroxyethyl cellulose (HEC) and hydroxypropyl cellulose (HPC). Suitable HEC are sold under tradename Natrosol^{™} hydroxyethylcellulose by Ashland, such as Natrosol^{™} 250 with different grade available which has a total molar substitution (MS) of 2.5. Suitable HEC are also sold under tradename CELLOSIZE^{™} Hydroxyethyl Cellulose by Dow Chemicals. Suitable HPC are sold under tradename Klucel^{™} by Ashland. Example of hydroxyalkyl alkylcellulose include hydroxypropyl methylcellulose (HPMC), suitable HPMC are sold under tradename Methocel^{™} with different grade available by Dow Chemicals, DuPont or IFF, and under tradename Benecel^{™} by Ashland.

Modified cellulose polymers also include cationic modified cellulose polymers which been modified by functional group that contain cationic charge. Suitable cationic modified celluloses include quaternized hydroxyethyl cellulose (Polyquaternium-10), which is available under the tradename of Ucare by Dow Chemical, such as Ucare LR400, Ucare LR30M, Ucare JR125, Ucare JR400, etc. Suitable cationic modified cellulose polymers also include quaternised hydroxyethyl cellulose (HEC) polymers with cationic substitution of trimethyl ammonium and dimethyldodecyl ammonium (Polyquaternium-67), which are available under trade the tradename of SoftCAT by Dow Chemical, such as SoftCAT SK, SoftCAT SK-MH, SoftCAT SX, SoftCAT SL. Other suitable cationic modified celluloses include those sold under tradename SupraCare^{™} by Dow Chemical, such as SupraCare^{™} 150, SupraCare^{™} 133, SupraCare^{™} 212.

Suitable cationic modified cellulose polymers also include those modified with cationic group and/or a hydrophobic group and described as soil release polymers in WO2019111948, WO2019111949, WO2019111946 and WO2019111947; suitable polymers is also disclosed in WO2022060754, WO2021242942 and WO2020/091988.
Another common type of modified polysaccharide is modified guar. Similar to modified cellulose, modified guar can be nonionic modified, anionic modified, and cationic modified. Suitable nonionic modified guar includes hydroxypropyl guar, such as N-Hance^{™} HP40 and HP40S guar available from Ashland. Suitable example of modified guar also includes carboxymethyl hydroxypropyl guar (CMHPG) which is anionic and nonionic modified, such as Galactasol^{™} available from Ashland. Suitable modified guar also includes cationic modified guar, such as guar hydroxypropyltrimonium chloride, which available from by Ashland as AquaCat^{™} CG518 cationic solution, AquaCat^{™} PF618 cationic solution, N-Hance^{™} 3000, 3196, 3215, BF-13, BF-17, C261, C261N, CG13, CCG45. Other cationic modified guar polymers are available from Solvay as Jaguar^{®} C 162, Excel, Excel SGI, Optima, C 13 S, C 13 SH, C14 S, C-17, LS SGI, C-500 STD. Other nonionic and/or anionic modified guar include for example Jaguar^{®} HP 105 (Hydroxypropyl Guar gum), Jaguar^{®} SOFT and HP-120 COS (Carboxymethyl Hydroxypropyl Guar Gum).
Suitable modified polysaccharide polymers also include polymers based on other polysaccharide, such as cationic dextran polymers described in WO2021194808, the cationic dextran polymers are commercially available under brand name CDC, CDC-L, CDC-H by Meito Sangyo.

Suitable modified polysaccharide polymers also include polymers based on polyglucans. Suitable modified polyglucans are based on alpha 1,3-polyglucans and/or 1,6-polyglucans. In one embodiment, the modified polyglucans can be cationic modified, such as cationic modified alpha 1,3-polyglucan which described in WO2021225837; such as cationic modified alpha 1,6-polyglucans which described in WO2021257793, WO2021257932, and WO2021/257786. In another embodiment, the modified polyglucans can be hydrophobic and/or hydrophilic modified, such as those described in WO2018112187, WO2019246228, WO2019246171, WO2021252558, WO2021252560, WO2021252561, EP3922704, WO2021252569, WO2021252562, WO2021252559, WO2021252575, WO2021252563. Along the hydrophobic and/or hydrophilic modified polyglucans, the polyglucan esters which are described in WO2021252562, WO2021252559, WO2021252575, WO2021252563 are especially preferred due to their performance and biodegradability profiles.

Other suitable polysaccharide polymers also include those based on inulin. Example of modified inulin include carboxymethyl group modified inulin (CMI), suitable CMI are Carboxyline series sold by Cosun Beet Company, including Carboxyline 25-40D, Carboxyline 25 D Powder, Carboxyline 20 LS D Powder, Carboxyline 25, Carboxyline 25-30 UP. Examples of modified inulin also include cationic modified inulin, suitable cationic modified inulin are as described in US20190274943, US20180119055; suitable cationic modified inulin are Quatin series sold by Cosun Beet Company, including Quatin 350, Quatin 380 and Quatin 1280 which are characterized by different degree of substitution (DS), cationic density (meq/g) and molecular weight (g/mol).

Suitable modified polysaccharide polymers also include polymers based on other polysaccharide, such as xylose carbamates as described in US20210115358; carboxy or sulfo-alkylated pullulan as described in WO2019243072; carboxy- or sulfo-alkylated chitosan as described in WO2019/243108 and WO2021156093.

### Polycarboxylate polymers

The composition may also include one or more polycarboxylate polymers which comprise at least one carboxy group-containing monomer. The carboxy group-containing monomers are selected from acrylic acid, methacrylic acid, fumaric acid, maleic acid, itaconic acid, aconitic acid, mesaconic acid, citraconic acid, methylenemalonic acid, and salts thereof, and anhydride thereof. Suitable polycarboxylate polymers include polyacrylate homopolymer having a molecular weight of from 4,000 Da to 9,000 Da, or from 6,000 Da to 9,000 Da. Other suitable carboxylate polymers include copolymers of acrylic acid (and/or methacrylic acid) and maleic acid having a molecular weight of from 50,000 Da to 120,000 Da, or from 60,000 Da to 80,000 Da. The polyacrylate homopolymer and copolymer of acrylic acid (and/or methacrylic acid) and maleic acid are commercially available as Acusol 445 and 445N, Acusol 531, Acusol 463, Acusol 448, Acusol 460, Acusol 465, Acusol 497, Acusol 490 from Dow Chemicals, and as Sokalan CP 5, Sokalan CP 7, Sokalan CP 45, and Sokalan CP 12S from BASF. Suitable polycarboxylate polymers also include polyitaconate homopolymers, such as Itaconix^{®} DSP 2K^{™} sold by Itaconix, and Amaze SP available from Nouryon.
Suitable polycarboxylate polymers also include co-polymers comprising carboxy group-containing monomers and one or more sulfonate or sulfonic group-containing monomers. The sulfonate or sulfonic group containing monomers are selected from 2-acrylamido-2-methyl-l-propanesulfonic acid (AMPS), 2-methacrylamido-2-methyl-l-propanesulfonic acid, 3-methacrylamido-2-hydroxy-propanesulfonic acid, allysulfonic acid, methallysulfonic acid, 3-allyloxy-2-hydroxy-1-propanesulfonic acid, 2-methyl-2-propenen-l-sulfonic acid, styrenesulfonic acid, vinylsulfonic acid, 3-sulfopropyl acrylate, 3-sulfopropylmethacrylate, sulfomethylacrylamide, sulfomethylmethacrylamide and water soluble salts thereof. In one embodiment, suitable polymers comprise maleic acid, acrylic acid, and 3-allyloxy-2-hydroxy-1-propanesulfonic acid, such polymers are as described in US8450261 and US8389458. In another embodiment, suitable polymers comprise acrylic acid and 2-acrylamido-2-methyl-propane sulfonate, such as those sold under tradename Acusol 588 by Dow Chemicals, Sokalan CP50 by BASF, Aquatreat AR-545, Versaflex 310 and Versaflex 310-37 by Nouryon. In another embodiment, suitable polymers also include Poly(itaconic acid-co-AMPS) sodium salt, such as Itaconix^{®} TSI^{™} 322 and Itaconix^{®} CHT^{™} 122 available from Itaconix.

Suitable polymer also includes those containing other structure units in addition to the sulfonate or sulfonic group group-containing monomers and carboxy group-containing monomers. Particular suitable polymer examples are described in WO2010024468 and WO2014/032267. A specific preferred polymer of this type comprises structure units derived from 1 to 49 wt% of 1-(allyloxy)-3-butoxypropan-2-ol, from 50 to 98 wt% acrylic acid or methacrylic acid, and from 1 to 49 wt% of 3-allyloxy-2-hydroxy-1-propanesulfonic acid, and the has a weight average molecular weight of from about 20,000 to about 60,000. a specific preferred polymer of this type comprises structure units derived from 1 to 10 wt% of 1-(allyloxy)-3-butoxypropan-2-ol, from 70 to 89 wt% acrylic acid or methacrylic acid, and from 10 to 20 wt% of 3-allyloxy-2-hydroxy-1-propanesulfonic acid, and the has a weight average molecular weight of from about 30,000 to about 60,000.

Suitable polycarboxylate polymers also include co-polymers comprising carboxy group-containing monomers and other suitable monomers. Other suitable monomers here are selected from esters and/or amide of the carboxy group-containing monomers, such as C₁-C₂₀ alkyl ester of acrylic acid; alkylene; vinyl ethers such as methyl vinyl ether, styrene and any mixtures thereof. One specific preferred polymer family of this type is sold under tradename Gantrez by Ashland, which includes Gantrez An (alternating co-polymer of methyl vinyl ether and maleic anhydride), Gantrez S (alternating co-polymer of methyl vinyl ether and maleic acid), Gantrez ES (alternating co-polymer of methyl vinyl ether and maleic acid ester), Gantrez MS (alternating co-polymer of methyl vinyl ether and maleic acid salt).
Suitable polycarboxylate polymers also include polyepoxy succinic acid polymers (PESA). A most preferred polyepoxy succinic acid polymer can be identified using CAS number: 51274-37-4, or 109578-44-1. Suitable polyepoxy succinic acid polymers are commercially available from various suppliers, such as Aquapharm Chemicals Pvt. Ltd (commercial name: Maxinol 600); Shandong Taihe Water Treatment Technologies Co., Ltd (commercial name: PESA), and Sirius International (commercial name: Briteframe PESA).

Suitable polycarboxylate polymers also include polymer comprising a monomer having at least one aspartic acid group or a salt thereof, this polymer comprises at least 25 mol%, 40 mol%, or 50 mol%, of said monomer. A preferabed example is sodium salt of poly(aspartic acid) having a molecular weight of from 2000 to 3000 g/mol which is avilable as Baypure^{®} DS 100 from Lanxess.

### Other polymers.

The composition may comprise block polymers of ethylene oxide, propylene oxide and butylene oxide. Examples of such block polymers include ethylene oxide-propylene oxide-ethylene oxide (EO/PO/EO) triblock copolymer, wherein the copolymer comprises a first EO block, a second EO block and PO block wherein the first EO block and the second EO block are linked to the PO block. Blocks of ethylene oxide, propylene oxide, butylene oxide can also be arranged in other ways, such as (EO/PO) diblock copolymer, (PO/EO/PO) triblock copolymer. The block polymers may also contain additional butylene oxide (BO) block. Suitable block polymers are for example Pluronic PE series from BASF, including Pluronic PE3100, PE4300, PE6100, PE6200, PE6400, PE6800, PE8100, PE9200, PE9400, PE10100, PE10500, PE10400. Suitable block polymers also available as Tergitol L series from Dow Chemicals, such as Tergitol L-61, L-62, L-64, L-81, L-101. Due to the hydrophobic and hydrophilic nature, such block polymer sometime is also considered as nonionic surfactant in literature.

The composition may comprise dye transfer inhibiting agents (also called dye transfer inhibitor, or dye fixatives), which include, but are not limited to, polyvinylpyrrolidone polymers (PVP), poly(vinylpyridine-N-oxide) polymer (PVNO), poly(vinylimidazole), polyamine N-oxide polymers, copolymers of N-vinylpyrrolidone and N-vinylimidazole, polyvinyloxazolidones and polyvinylimidazoles or mixtures thereof. dye transfer inhibiting agents may be selected from the group consisting of reaction products of: i) polyamines with cyanamides and organic and/or inorganic acids, ii) cyanamides with aldehydes and ammonium salts, iii) cyanamides with aldehydes and amines, or iv) amines with epichlorohydrin. Preferably, the dye fixative may be selected from the group consisting of reaction products of amines with epichlorohydrin in which the amines are primary, secondary or tertiary amines. More preferably, the dye fixative may be selected from the group consisting of reaction products of dimethylamine with epichlorohydrin. Most preferably, the dye fixative may be poly (2-hydroxypropyldimethylammonium chloride), also called poly (dimethylamine-co-epichlorohydrin), for example the polymer commercially available under the tradename of Texcare DFC 6 pre from Clariant.
The composition may comprise one or more other polymeric dispersing agents. Examples are poly (ethylene glycol), poly(vinyl alcohol).

### Additional Amines:

Additional amines may be used in the compositions described herein for added removal of grease and particulates from soiled materials. The compositions described herein may comprise from about 0.1% to about 10%, in some examples, from about 0.1% to about 4%, and in other examples, from about 0.1% to about 2%, by weight of the composition, of additional amines. Non-limiting examples of additional amines may include, but are not limited to, polyamines, oligoamines, triamines, diamines, pentamines, tetraamines, or combinations thereof. Specific examples of suitable additional amines include tetraethylenepentamine, triethylenetetraamine, diethylenetriamine, or a mixture thereof.

### Bleaching Agents:

It may be preferred for the composition to comprise one or more bleaching agents. Suitable bleaching agents other than bleaching catalysts include photobleaches, bleach activators, hydrogen peroxide, sources of hydrogen peroxide, pre-formed peracids and mixtures thereof. In general, when a bleaching agent is used, the compositions of the present invention may comprise from about 0.1% to about 50% or even from about 0.1% to about 25% bleaching agent or mixtures of bleaching agents by weight of the subject composition. Examples of suitable bleaching agents include:
(1) photobleaches for example sulfonated zinc phthalocyanine sulfonated aluminium phthalocyanines, xanthene dyes, thioxanthones, and mixtures thereof;
(2) pre-formed peracids: Suitable preformed peracids include but are not limited to compounds selected from the group consisting of pre-formed peroxyacids or salts thereof typically a percarboxylic acids and salts, percarbonic acids and salts, perimidic acids and salts, peroxymonosulfuric acids and salts, for example, Oxone ^{®}, and mixtures thereof.
   Particularly preferred peroxyacids are phthalimido-peroxy-alkanoic acids, in particular ε-phthalimido peroxy hexanoic acid (PAP). Preferably, the peroxyacid or salt thereof has a melting point in the range of from 30°C to 60°C.
(3) sources of hydrogen peroxide, for example, inorganic perhydrate salts, including alkali metal salts such as sodium salts of perborate (usually mono- or tetra-hydrate), percarbonate, persulphate, perphosphate, persilicate salts and mixtures thereof. When employed, inorganic perhydrate salts are typically present in amounts of from 0.05 to 40 wt%, or 1 to 30 wt% of the overall fabric and home care product and are typically incorporated into such fabric and home care products as a crystalline solid that may be coated. Suitable coatings include inorganic salts such as alkali metal silicate, carbonate or borate salts or mixtures thereof, or organic materials such as water-soluble or dispersible polymers, waxes, oils or fatty soaps; and
(4) bleach activators having R-(C=O)-L wherein R is an alkyl group, optionally branched, having, when the bleach activator is hydrophobic, from 6 to 14 carbon atoms, or from 8 to 12 carbon atoms and, when the bleach activator is hydrophilic, less than 6 carbon atoms or even less than 4 carbon atoms; and L is leaving group. Examples of suitable leaving groups are benzoic acid and derivatives thereof - especially benzene sulphonate. Suitable bleach activators include dodecanoyl oxybenzene sulphonate, decanoyl oxybenzene sulphonate, decanoyl oxybenzoic acid or salts thereof, 3,5,5-trimethyl hexanoyloxybenzene sulphonate, tetraacetyl ethylene diamine (TAED) and nonanoyloxybenzene sulphonate (NOBS).
(5) Bleach Catalysts. The compositions of the present invention may also include one or more bleach catalysts capable of accepting an oxygen atom from a peroxyacid and/or salt thereof and transferring the oxygen atom to an oxidizeable substrate. Suitable bleach catalysts include but are not limited to: iminium cations and polyions; iminium zwitterions; modified amines; modified amine oxides; N-sulphonyl imines; N-phosphonyl imines; N-acyl imines; thiadiazole dioxides; perfluoroimines; cyclic sugar ketones and alpha amino-ketones and mixtures thereof. One particularly preferred catalyst is acyl hydrazone type such as 4-(2-(2-((2-hydroxyphenylmethyl)methylene)-hydrazinyl)-2-oxoethyl)-4-methylchloride.
(6) The composition may preferably comprise catalytic metal complexes. One preferred type of metal-containing bleach catalyst is a catalyst system comprising a transition metal cation of defined bleach catalytic activity, such as copper, iron, titanium, ruthenium, tungsten, molybdenum, or manganese cations.
If desired, the compositions herein can be catalyzed by means of a manganese compound. Such compounds and levels of use are well known in the art and include, for example, the manganese-based catalysts disclosed in U.S. 5,576,282. In some embodiments, an additional source of oxidant in the composition is not present, molecular oxygen from air providing the oxidative source. Cobalt bleach catalysts useful herein are known, and are described, for example, in U.S. 5,597,936; U.S. 5,595,967.

### Fluorescent Brightener:

Commercial fluorescent brighteners suitable for the present disclosure can be classified into subgroups, including, but not limited to, derivatives of stilbene, pyrazoline, coumarin, benzoxazoles, carboxylic acid, methinecyanines, dibenzothiophene-5,5-dioxide, azoles, 5- and 6-membered-ring heterocycles, and other miscellaneous agents.
The fluorescent brightener may be selected from the group consisting of disodium 4,4'-bis{[4-anilino-6-morpholino-s-triazin-2-yl]-amino}-2,2'-stilbenedisulfonate (brightener 15, commercially available under the tradename Tinopal AMS-GX by BASF), disodium4,4'-bis{[4-anilino-6-(N-2-bis-hydroxyethyl)-s-triazine-2-yl]-amino}-2,2'-stilbenedisulonate (commercially available under the tradename Tinopal UNPA-GX by BASF), disodium 4,4'-bis{[4-anilino-6-(N-2-hydroxyethyl-N-methylamino)-s-triazine-2-yl]-amino}-2,2'-stilbenedisulfonate (commercially available under the tradename Tinopal 5BM-GX by BASF). More preferably, the fluorescent brightener is disodium 4,4'-bis{ [4-anilino-6-morpholino-s-triazin-2-yl]-amino }-2,2'-stilbenedisulfonate or 2,2'-([1,1'-Biphenyl]-4,4'-diyldi-2,1-ethenediyl)bis-benzenesulfonic acid disodium salt. The brighteners may be added in particulate form or as a premix with a suitable solvent, for example nonionic surfactant, propanediol.

### Fabric Hueing Agents:

The compositions may comprise a fabric hueing agent (sometimes referred to as shading, bluing or whitening agents). Typically, the hueing agent provides a blue or violet shade to fabric. Hueing agents can be used either alone or in combination to create a specific shade of hueing and/or to shade different fabric types. This may be provided for example by mixing a red and green-blue dye to yield a blue or violet shade. Hueing agents may be selected from any known chemical class of dye, including but not limited to acridine, anthraquinone (including polycyclic quinones), azine, azo (e.g., monoazo, disazo, trisazo, tetrakisazo, polyazo), including premetallized azo, benzodifurane and benzodifuranone, carotenoid, coumarin, cyanine, diazahemicyanine, diphenylmethane, formazan, hemicyanine, indigoids, methane, naphthalimides, naphthoquinone, nitro and nitroso, oxazine, phthalocyanine, pyrazoles, stilbene, styryl, triarylmethane, triphenylmethane, xanthenes and mixtures thereof.

### Chelating Agent:

Preferably the composition comprises chelating agents and/or crystal growth inhibitor. Suitable molecules include copper, iron and/or manganese chelating agents and mixtures thereof. Suitable molecules include hydroxamic acids, aminocarboxylates, aminophosphonates, succinates, salts thereof, and mixtures thereof. Non-limiting examples of suitable chelants for use herein include ethylenediaminetetracetates, N- (hydroxyethyl)ethylenediaminetriacetates, nitrilotriacetates, ethylenediamine tetraproprionates, triethylenetetraaminehexacetates, diethylenetriamine-pentaacetates, ethanoldiglycines, ethylenediaminetetrakis (methylenephosphonates), diethylenetriamine penta(methylene phosphonic acid) (DTPMP), ethylenediamine disuccinate (EDDS), hydroxyethanedimethylenephosphonic acid (HEDP), methylglycinediacetic acid (MGDA), diethylenetriaminepentaacetic acid (DTPA), N,N-Dicarboxymethyl glutamic acid (GLDA) and salts thereof, and mixtures thereof. Other nonlimiting examples of chelants of use in the present invention are found in U.S. Patent Nos. 7445644, 7585376 and 2009/0176684A1. Other suitable chelating agents for use herein are the commercial DEQUEST series, and chelants from Monsanto, DuPont, and Nalco, Inc. Yet other suitable chelants include the pyridinyl N Oxide type.

### Encapsulates:

The compositions may comprise an encapsulate. Proferably, the encapsulate comprises a core, a shell having an inner and outer surface, where the shell encapsulates the core.
In certain aspects, the encapsulate comprises a core and a shell, where the core comprises a material selected from perfumes; brighteners; dyes; insect repellants; silicones; waxes; flavors; vitamins; fabric softening agents; skin care agents, e.g., paraffins; enzymes; anti-bacterial agents; bleaches; sensates; or mixtures thereof, and where the shell comprises a material selected from polyethylenes; polyamides; polyvinylalcohols, optionally containing other co-monomers; polystyrenes; polyisoprenes; polycarbonates; polyesters; polyacrylates; polyolefins; polysaccharides, e.g., alginate and/or chitosan; gelatin; shellac; epoxy resins; vinyl polymers; water insoluble inorganics; silicone; aminoplasts, or mixtures thereof. In some aspects, where the shell comprises an aminoplast, the aminoplast comprises polyurea, polyurethane, and/or polyureaurethane. The polyurea may comprise polyoxymethyleneurea and/or melamine formaldehyde.

### Perfume:

Preferably, compositions of the invention comprise perfume. Typically, the composition comprises a perfume that comprises one or more perfume raw materials, selected from the group as described in WO08/87497. However, any perfume useful in a laundry care composition may be used. A preferred method of incorporating perfume into the compositions of the invention is via an encapsulated perfume particle comprising either a water-soluble hydroxylic compound or melamine-formaldehyde or modified polyvinyl alcohol.

### Malodor Reduction Materials:

The cleaning compositions of the present disclosure may comprise malodour reduction materials. Such materials can decrease or even eliminate the perception of one or more malodors. These materials can be characterized by a calculated malodor reduction value ("MORV"), which is calculated according to the test method shown in WO2016/049389.
As used herein "MORV" is the calculated malodor reduction value for a subject material. A material's MORV indicates such material's ability to decrease or even eliminate the perception of one or more malodors.

The cleaning compositions of the present disclosure may comprise a sum total of from about 0.00025% to about 0.5%, preferably from about 0.0025% to about 0.1%, more preferably from about 0.005% to about 0.075%, most preferably from about 0.01% to about 0.05%, by weight of the composition, of 1 or more malodor reduction materials. The cleaning composition may comprise from about 1 to about 20 malodor reduction materials, more preferably 1 to about 15 malodor reduction materials, most preferably 1 to about 10 malodor reduction materials.

One, some, or each of the malodor reduction materials may have a MORV of at least 0.5, preferably from 0.5 to 10, more preferably from 1 to 10, most preferably from 1 to 5. One, some, or each of the malodor reduction materials may have a Universal MORV, defined as all of the MORV values of >0.5 for the malodors tested as described herein. The sum total of malodor reduction materials may have a Blocker Index of less than 3, more preferable less than about 2.5, even more preferably less than about 2, and still more preferably less than about 1, and most preferably about 0. The sum total of malodor reduction materials may have a Blocker Index average of from about 3 to about 0.001.

In the cleaning compositions of the present disclosure, the malodor reduction materials may have a Fragrance Fidelity Index of less than 3, preferably less than 2, more preferably less than 1 and most preferably about 0 and/or a Fragrance Fidelity Index average of 3 to about 0.001 Fragrance Fidelity Index. As the Fragrance Fidelity Index decreases, the malodor reduction material(s) provide less and less of a scent impact, while continuing to counteract malodors.

The cleaning compositions of the present disclosure may comprise a perfume. The weight ratio of parts of malodor reduction composition to parts of perfume may be from about 1:20,000 to about 3000:1, preferably from about 1:10,000 to about 1,000:1, more preferably from about 5,000:1 to about 500:1, and most preferably from about 1:15 to about 1:1. As the ratio of malodor reduction composition to parts of perfume is tightened, the malodor reduction material(s) provide less and less of a scent impact, while continuing to counteract malodors.

### Conditioning Agents:

Suitable conditioning agents include high melting point fatty compounds. The high melting point fatty compound useful herein has a melting point of 25°C or higher and is selected from the group consisting of fatty alcohols, fatty acids, fatty alcohol derivatives, fatty acid derivatives, and mixtures thereof. Suitable conditioning agents also include nonionic polymers and conditioning oils, such as hydrocarbon oils, polyolefins, and fatty esters.

Suitable conditioning agents include those conditioning agents characterized generally as silicones (e.g., silicone oils, polyoils, silicone gums, high refractive silicones, and silicone resins), organic conditioning oils (e.g., hydrocarbon oils, polyolefins, and fatty esters) or combinations thereof, or those conditioning agents which otherwise form liquid, dispersed particles in the aqueous surfactant matrix herein. The compositions of the present invention may also comprise from about 0.05% to about 3% of at least one organic conditioning oil as the conditioning agent, either alone or in combination with other conditioning agents, such as the silicones (described herein). Suitable conditioning oils include hydrocarbon oils, polyolefins, and fatty esters.

### Probiotics:

The composition may comprise probiotics, such as those described in WO2009/043709. Organic acids:
The composition may comprises one or more organic acids selected from the group consisting of acetic acid, adipic acid, aspartic acid, carboxymethyloxymalonic acid, carboxymethyloxysuccinic acid, citric acid, formic acid, glutaric acid, hydroxyethyliminodiacetic acid, iminodiacetic acid, lactic acid, maleic acid, malic acid, malonic acid, oxydiacetic acid, oxydisuccinic acid, succinic acid, sulfamic acid, tartaric acid, tartaric-disuccinic acid, tartaric-monosuccinic acid, or mixtures thereof. Preferably, the detergent composition may comprise an organic acid selected from the group consisting of acetic acid, lactic acid, and citric acid.

### Anti-oxidant:

The composition may comprise an anti-oxidant present in the composition from about 0.001 to about 2% by weight. Preferably the antioxidant is present at a concentration in the range 0.01 to 0.08% by weight. Mixtures of anti-oxidants may be used.

### Hygiene Agent:

The composition of the present invention may also comprise components to deliver hygiene and/or malodour benefits such as one or more of zinc ricinoleate, thymol, quaternary ammonium salts such as Bardac^{®}, polyethylenimines (such as Lupasol^{®} from BASF) and zinc complexes thereof, silver and silver compounds, especially those designed to slowly release Ag+ or nano-silver dispersions.

The cleaning compositions of the present invention may also contain antimicrobial agents. Preferably, the anti-microbial agent is selected from the group consisting of 4-4'-dichloro-2-hydroxy diphenyl ether ("Diclosan"), 2,4,4'-trichloro-2'-hydroxy diphenyl ether ("Triclosan"), and a combination thereof. Most preferably, the anti-microbial agent is 4-4'-dichloro-2-hydroxy diphenyl ether, commercially available from BASF, under the trademark name Tinosan^{®}HP100. Pearlescent Agent:
Non-limiting examples of pearlescent agents include mica; titanium dioxide coated mica; bismuth oxychloride; fish scales; mono and diesters of alkylene glycol. The pearlescent agent may be ethyleneglycoldistearate (EGDS).

### Opacifier:

In one embodiment, the composition might also comprise an opacifier. As the term is used herein, an "opacifier" is a substance added to a material in order to make the ensuing system opaque. In one preferred embodiment, the opacifier is Acusol, which is available from Dow Chemicals. Acusol opacifiers are provided in liquid form at a certain % solids level. As supplied, the pH of Acusol opacifiers ranges from 2.0 to 5.0 and particle sizes range from 0.17 to 0.45 um. In one preferred embodiment, Acusol OP303B and 301 can be used.

In yet another embodiment, the opacifier may be an inorganic opacifier. Preferably, the inorganic opacifier can be TiO₂, ZnO, talc, CaCO₃, and combination thereof. The composite opacifier-microsphere material is readily formed with a preselected specific gravity, so that there is little tendency for the material to separate.

### Solvents:

The composition may comprise a solvent system. The solvent system in the present compositions can be a solvent system containing water alone or mixtures of organic solvents either without or preferably with water. The compositions may optionally comprise an organic solvent. Suitable organic solvents include C₄-C₁₄ ethers and diethers, glycols, alkoxylated glycols, C₆-C₁₆ glycol ethers, alkoxylated aromatic alcohols, aromatic alcohols, aliphatic branched alcohols, alkoxylated aliphatic branched alcohols, alkoxylated linear C₁-C₅ alcohols, linear C₁-C₅ alcohols, amines, C₈-C₁₄ alkyl and cycloalkyl hydrocarbons and halohydrocarbons, and mixtures thereof. Preferred organic solvents include 1,2-propanediol, 2,3 butane diol, ethanol, glycerol, ethoxylated glycerol, dipropylene glycol, methyl propane diol and mixtures thereof 2 ethyl hexanol, 3,5,5,trimethyl-1 hexanol, and 2 propyl heptanol. Solvents may be a polyethylene or polypropylene glycol ether of glycerin. Other lower alcohols, C₁-C₄ alkanolamines such as monoethanolamine and triethanolamine, can also be used. Solvent systems can be absent, for example from anhydrous solid embodiments of the invention, but more typically are present at levels in the range of from about 0.1% to about 98%, preferably at least about 1% to about 50%, more usually from about 5% to about 25%, alternatively from about 1% to about 10% by weight of the liquid detergent composition of said organic solvent. These organic solvents may be used in conjunction with water, or they may be used without water.

### Hydrotrope:

The composition may optionally comprise a hydrotrope in an effective amount, i.e. from about 0% to 15%, or about 1% to 10% , or about 3% to about 6%, so that compositions are compatible in water. Suitable hydrotropes for use herein include anionic-type hydrotropes, particularly sodium, potassium, and ammonium xylene sulfonate, sodium, potassium and ammonium toluene sulfonate, sodium potassium and ammonium cumene sulfonate, and mixtures thereof, as disclosed in U.S. Patent 3,915,903.

### Suds Suppressor:

Compounds for reducing or suppressing the formation of suds can be incorporated into the water-soluble unit dose articles. Suds suppression can be of particular importance in the so-called "high concentration cleaning process" and in front-loading style washing machines. Examples of suds supressors include monocarboxylic fatty acid and soluble salts therein, high molecular weight hydrocarbons such as paraffin, fatty acid esters (e.g., fatty acid triglycerides), fatty acid esters of monovalent alcohols, aliphatic C₁₈-C₄₀ ketones (e.g., stearone), N-alkylated amino triazines, waxy hydrocarbons preferably having a melting point below about 100 °C, silicone suds suppressors, and secondary alcohols. Preferred fatty acid blends may be mixtures enriched or Fatty acid mixtures enriched with 2-alkyl fatty acid, preferably 2-methyl octanoic acid.

Additional suitable antifoams are those derived from phenylpropylmethyl substituted polysiloxanes.

The composition may comprise a suds suppressor selected from organomodified silicone polymers with aryl or alkylaryl substituents combined with silicone resin and a primary filler, which is modified silica. The detergent compositions may comprise from about 0.001% to about 4.0%, by weight of the composition, of such a suds suppressor.
The composition comprises a suds suppressor selected from: a) mixtures of from about 80 to about 92% ethylmethyl, methyl(2-phenylpropyl) siloxane; from about 5 to about 14% MQ resin in octyl stearate; and from about 3 to about 7% modified silica; b) mixtures of from about 78 to about 92% ethylmethyl, methyl(2-phenylpropyl) siloxane; from about 3 to about 10% MQ resin in octyl stearate; from about 4 to about 12% modified silica; or c) mixtures thereof, where the percentages are by weight of the anti-foam.

Preferably, the fabric and home composition are selected from liquid laundry detergent composition, Water soluble unit dose article, hand dishwashing liquid composition, solid free-flowing particulate laundry detergent Composition, Fibrous Water-soluble Unit Dose Article. More details about preferred composition are described below:

### Liquid laundry detergent composition.

The fabric and home care products can be a laundry detergent composition, such as a liquid laundry detergent composition. Suitable liquid laundry detergent compositions can comprise a non-soap surfactant, wherein the non-soap surfactant comprises an anionic non-soap surfactant and a non-ionic surfactant. The laundry detergent composition can comprise from 10% to 60%, or from 20% to 55% by weight of the laundry detergent composition of the non-soap surfactant. The non-soap anionic surfactant to nonionic surfactant ratio are from 1:1 to 20:1, from 1.5:1 to 17.5:1, from 2:1 to 15:1, or from 2.5:1 to 13:1. Suitable non-soap anionic surfactants include linear alkylbenzene sulphonate, alkyl sulphate or a mixture thereof. The weight ratio of linear alkylbenzene sulphonate to alkyl sulphate can be from 1:2 to 9:1, from 1:1 to 7:1, from 1:1 to 5:1, or from 1:1 to 4:1. Suitable linear alkylbenzene sulphonates are C₁₀-C₁₆ alkyl benzene sulfonic acids, or C₁₁-C₁₄ alkyl benzene sulfonic acids. Suitable alkyl sulphate anionic surfactants include alkoxylated alkyl sulphates, non-alkoxylated alkyl sulphates, and mixture thereof. Preferably, the HLAS surfactant comprises greater than 50% C₁₂, preferably greater than 60%, preferably greater than 70% C₁₂, more preferably greater than 75% C₁₂. Suitable alkoxylated alkyl sulphate anionic surfactants include ethoxylated alkyl sulphate anionic surfactants. Suitable alkyl sulphate anionic surfactants include ethoxylated alkyl sulphate anionic surfactants with a mol average degree of ethoxylation of from 1 to 5, from 1 to 3, or from 2 to 3. The alkyl alkoxylated sulfate may have a broad alkoxy distribution or a peaked alkoxy distribution. The alkyl portion of the AES may include, on average, from 13.7 to about 16 or from 13.9 to 14.6 carbons atoms. At least about 50% or at least about 60% of the AES molecule may include having an alkyl portion having 14 or more carbon atoms, preferable from 14 to 18, or from 14 to 17, or from 14 to 16, or from 14 to 15 carbon atoms. The alkyl sulphate anionic surfactant may comprise a non-ethoxylated alkyl sulphate and an ethoxylated alkyl sulphate wherein the mol average degree of ethoxylation of the alkyl sulphate anionic surfactant is from 1 to 5, from 1 to 3, or from 2 to 3. The alkyl fraction of the alkyl sulphate anionic surfactant can be derived from fatty alcohols, oxo-synthesized alcohols, Guerbet alcohols, or mixtures thereof. Preferred alkyl sulfates include optionally ethoxylated alcohol sulfates including 2-alkyl branched primary alcohol sulfates especially 2-branched C₁₂₋₁₅ primary alcohol sulfates, linear primary alcohol sulfates especially linear C₁₂₋₁₄ primary alcohol sulfates, and mixtures thereof. The laundry detergent composition can comprise from 10% to 50%, or from 15% to 45%, or from 20% to 40%, or from 30% to 40% by weight of the laundry detergent composition of the non-soap anionic surfactant.

Suitable non-ionic surfactants can be selected from alcohol broad or narrow range alkoxylates, an oxo-synthesised alcohol alkoxylate, Guerbet alcohol alkoxylates, alkyl phenol alcohol alkoxylates, or a mixture thereof. The laundry detergent composition can comprise from 0.01% to 10%, from 0.01% to 8%, from 0.1% to 6%, or from 0.15% to 5% by weight of the liquid laundry detergent composition of a non-ionic surfactant.
The laundry detergent composition comprises from 1.5% to 20%, or from 2% to 15%, or from 3% to 10%, or from 4% to 8% by weight of the laundry detergent composition of soap, such as a fatty acid salt. Such soaps can be amine neutralized, for instance using an alkanolamine such as monoethanolamine.

The laundry detergent composition can comprises an adjunct ingredient selected from the group comprising builders including citrate, enzymes, bleach, bleach catalyst, dye, hueing dye, Leuco dyes, brightener, cleaning polymers including alkoxylated polyamines and polyethyleneimines, amphiphilic copolymers, soil release polymer, surfactant, solvent, dye transfer inhibitors, chelant, diamines, perfume, encapsulated perfume, polycarboxylates, structurant, pH trimming agents, antioxidants, antibacterial, antimicrobial agents, preservatives and mixtures thereof.

The laundry detergent composition can have a pH of from 2 to 11, or from 6.5 to 8.9, or from 7 to 8, wherein the pH of the laundry detergent composition is measured at a 10% product concentration in demineralized water at 20°C.
The liquid laundry detergent composition can be Newtonian or non-Newtonian, preferably non-Newtonian.

For liquid laundry detergent compositions, the composition can comprise from 5% to 99%, or from 15% to 90%, or from 25% to 80% by weight of the liquid detergent composition of water.

The detergent composition according to the invention can be liquid laundry detergent composition. The following are exemplary liquid laundry detergent formulations (Table 1A, Table 1B). Preferably the liquid laundry detergent composition comprises from between 0.1 to 20.0%, preferably 0.2% to 10%, preferably between 0.3% and 5.0%, preferably between 0.5% and 3%, more preferably between 1% to 2.5% by weight of the detergent composition of the graft polymer according to the invention.

**Table 1A.**

| Raw Material | Comp. 1 %wt | Comp. 2 %wt | Comp. 3 %wt | Comp. 4 %wt |
|---|---|---|---|---|
| Branched Alkyl Sulfate | 0.0 | 5.3 | 0.0 | 5.3 |
| Sodium Lauryl Sulfate | 0.0 | 3.0 | 0.0 | 3.0 |
| Linear alkylbenzene sulfonate | 18.0 | 5.0 | 6.0 | 5.0 |
| AE₃S Ethoxylated alkyl sulphate with an average degree of ethoxylation of 3 | 5.0 | 0.0 | 1.3 | 0.0 |
| C₂₅AES Ethoxylated alkyl sulphate with an average degree of ethoxylation of 2.5¹ | 0.0 | 3.0 | 1.4 | 0.0 |
| Amine oxide | 0.7 | 1.0 | 0.4 | 0.8 |
| C₁₂₋₁₄ alkyl ethoxylate (EO7) | 8.4 | 0.0 | 12.9 | 5.0 |
| C₁₂₋₁₄ alkyl ethoxylate (EO9) | 0.0 | 8.7 | 0.0 | 3.7 |
| C₁₂₋₁₅ alkyl ethoxylate (EO7) | 0.0 | 2.7 | 0.0 | 2.7 |
| Citric acid | 2.9 | 2.3 | 0.7 | 2.3 |
| Palm kernel fatty acid | 0.0 | 1.0 | 0.0 | 1.0 |
| Topped kernel fatty acid | 2.9 | 0.0 | 2.3 | 0.0 |
| Mannanase | 0.0017 | 0.0017 | 0.0017 | 0.0017 |
| Pectawash | 0.00342 | 0.00342 | 0.00342 | 0.00342 |
| Amylase | 0.00766 | 0.00766 | 0.00766 | 0.00766 |
| Protease | 0.07706 | 0.07706 | 0.07706 | 0.07706 |
| Nuclease³ | 0.010 | 0.01 | 0.01 | 0.01 |
| Sodium tetraborate | 0.0 | 1.7 | 0.0 | 1.7 |
| MEA-Boric Acid Salt | 0.0 | 0.0 | 0.8 | 0.0 |
| Calcium/sodium formate | 0.0 | 0.04 | 0.01 | 0.04 |
| Sodium/Calcium Chloride | 0.04 | 0.02 | 0.03 | 0.02 |
| Ethoxylated polyethyleneimine² | 0.0 | 2.0 | 1.1 | 2.0 |
| Amphiphilic graft copolymer (Sokalan PG101) | 1.5 | 0.0 | 0.0 | 0.0 |
| Ethoxylated-Propoxylated polyethyleneimine | 0.0 | 2.0 | 0.8 | 2.0 |
| Zwitterionic polyamine | 0.5 | 0.0 | 0.0 | 0.0 |
| Nonionic polyester terephthalate ⁹ | 1.0 | 0.25 | 0.5 | 1.25 |
| Graft polymer of the present invention | 1.0 | 2.0 | 1.5 | 2.5 |
| DTPA | 0.0 | 0.1 | 0.2 | 0.1 |
| EDDS | 0.1 | 0.0 | 0.0 | 0.0 |
| GLDA | 0.4 | 0.3 | 0.1 | 0.0 |
| MGDA | 0.2 | 0.0 | 0.0 | 0.5 |
| Diethylene triamine penta(methyl phosphonic) acid (DTPMP) | 1.1 | 0.0 | 0.0 | 0.0 |
| Fluorescent Brightener⁸ | 0.06 | 0.22 | 0.03 | 0.15 |
| Ethanol | 0.7 | 1.9 | 0.0 | 1.9 |
| propylene glycol | 5.5 | 5.5 | 0.33 | 5.5 |
| Sorbitol | 0.01 | 0.01 | 0.0 | 0.01 |
| Monoethanolamine | 0.2 | 0.2 | 0.6 | 0.2 |
| DETA | 0.1 | 0.08 | 0.0 | 0.08 |
| Antioxidant 1 ⁴ | 0.0 | 0.1 | 0.1 | 0.1 |
| Antioxidant 2 ⁵ | 0.1 | 0.0 | 0.0 | 0.0 |
| Hygiene Agent | 0.0 | 0.0 | 0.05 | 0.0 |
| NaOH | 4.7 | 4.7 | 1.1 | 4.7 |
| NaCS | 3.2 | 1.7 | 3.2 | 1.7 |
| Hydrogenated Castor Oil | 0.2 | 0.1 | 0.12 | 0.1 |
| Aesthetic dye | 0.10 | 0.01 | 0.006 | 0.01 |
| Leuco dye | 0.05 | 0.01 | 0.0 | 0.01 |
| Perfume | 2.0 | 1.3 | 0.5 | 1.3 |
| Perfume microcapsules | 0.5 | 0.05 | 0.1 | 0.05 |
| Silicone antifoam⁷ | 0.02 | 0.01 | 0.0 | 0.01 |
| Phenyloxyethanol | 0.002 | 0.01 | 0.0 | 0.01 |
| Hueing dye | 0.01 | 0.1 | 0.05 | 0.1 |
| Water & miscellaneous | balance | balance | balance | balance |

### Description of super-script numbers:

1 C₁₂₋₁₅EO_{2.5}S AlkylethoxySulfate where the alkyl portion of AES includes from about 13.9 to 14.6 carbon atoms
2 PE-20 commercially available from BASF
3 Nuclease enzyme is as claimed in co-pending European application 19219568.3
4 Antioxidant 1 is 3,5-bis(1,1-dimethylethyl)-4-hydroxybenzenepropanoic acid, methyl ester [6386-38-5]
5 Antioxidant 2 is Tinogard TS commercially available from BASF
6 Hygiene Agent is agent is Tinosan HP 100 commercially available from BASF
7 Dow Corning supplied antifoam blend 80-92% ethylmethyl, methyl(2-phenyl propyl)siloxane; 5-14% MQ Resin in octyl stearate a 3-7% modified silica.
8 Fluorescent Brightener is disodium 4,4'-bis{[4-anilino-6-morpholino-s-triazin-2-yl]-amino}-2,2'-stilbenedisulfonate or 2,2'-([1,1'-Biphenyl]-4,4'-diyldi-2,1-ethenediyl)bis-benzenesulfonic acid disodium salt.
9 Texcare SRN260 from Clariant.

**Table 1B.**

| Raw materials (numbers: % active) | F1 | F2 | F3 | F4 | F5 | F6 |
|---|---|---|---|---|---|---|
| alcohol ethoxylate 7EO | 5.40 | 10.80 | 12.40 | 7.30 | 1.60 | 7.60 |
| Coco fatty acid K12-18 | 2.40 | 3.10 | 3.20 | 3.20 | 3.50 | 6.40 |
| Fatty alcohol ether sulphate | 5.40 | 8.80 | 7.10 | 7.10 | 5.40 | 14.00 |
| Linear alkyl benzene sulphonic acid | 5.50 | 0.00 | 14.50 | 15.50 | 10.70 | 0.00 |
| 1,2 Propane diol | 6.00 | 3.50 | 8.70 | 8.70 | 1.10 | 7.80 |
| Triethanolamine | | | | | | |
| Monoethanolamine | | | 4.00 | 4.30 | 0.30 | |
| NaOH | 2.20 | 1.10 | | | | 1.00 |
| Glycerol | | 0.80 | 3.00 | 2.80 | | |
| Ethanol | 2.00 | | | | 0.38 | 0.39 |
| Na citrate | 3.00 | 2.80 | 3.40 | 2.10 | 7.40 | 5.40 |
| Inventive graft polymer (total) * | 0,01 - 5 | 0,01 - 5 | 0,01 - 5 | 0,01 - 5 | 0,01 - 5 | 0,01 - 5 |
| Protease | 0-1 | 0-1 | 0-1 | 0 - 1 | 0 - 1 | 0 - 1 |
| Amylase | 0-0,5 | 0-0,5 | 0-0,5 | 0-0,5 | 0-0,5 | 0-0,5 |
| Cellulase | 0 - 0,3 | 0 - 0,3 | 0 - 0,3 | 0 - 0,3 | 0 - 0,3 | 0-0,3 |
| Lipase | 0-0,2 | 0-0,2 | 0-0,2 | 0-0,2 | 0-0,2 | 0-0,2 |
| Mannanase | 0-0,2 | 0-0,2 | 0-0,2 | 0-0,2 | 0-0,2 | 0-0,2 |
| Pectat Lyase | 0 - 0,3 | 0 - 0,3 | 0 - 0,3 | 0 - 0,3 | 0 - 0,3 | 0-0,3 |
| water | to 100 | to 100 | to 100 | to 100 | to 100 | to 100 |

| | | | | | | |
|---|---|---|---|---|---|---|
| *Without inventive compound the formulations are comparative examples. | | | | | | |

**Table 1B - continued.**

| Raw materials (numbers: % active) | F7 | F8 | F9 | F10 | F11 | F12 |
|---|---|---|---|---|---|---|
| alcohol ethoxylate 7EO | 3.80 | 13.30 | 5.70 | 20.00 | 9.20 | 29.00 |
| Coco fatty acid K12-18 | 2.80 | 1.70 | 2.50 | 5.00 | 8.60 | 10.40 |
| Fatty alcohol ether sulphate | 2.80 | 3.90 | | 10.00 | 22.20 | |
| Linear alkyl benzene sulphonic acid | 6.30 | 11.45 | 10.10 | 10.00 | 28.00 | 27.00 |
| 1,2 Propane diol | 0.50 | 2.50 | 6.00 | 10.00 | 7.00 | 7.00 |
| Triethanolamine | | | | | | |
| Monoethanolamine | 0.40 | | | | 8.00 | 7.00 |
| NaOH | | 2.20 | 3.30 | 1.50 | | |
| Glycerol | | 0.20 | | | 7.00 | 10.00 |
| Ethanol | | 1.84 | | | | |
| Na citrate | 4.60 | 3.30 | | 1.50 | | |
| Inventive graft polymer (total)* | 0,01 - 5 | 0,01 - 5 | 0,01 - 5 | 0,01-5 | 0,01 - 5 | 0,01 - 5 |
| Protease | 0-1 | 0-1 | 0-1 | 0-3 | 0-3 | 0-3 |
| Amylase | 0-0,5 | 0-0,5 | 0-0,5 | 0-0,5 | 0-0,5 | 0-0,5 |
| Cellulase | 0-0,3 | 0-0,3 | 0-0,3 | 0-0,3 | 0-0,3 | 0-0,3 |
| Lipase | 0-0,2 | 0-0,2 | 0-0,2 | 0-0,2 | 0-0,2 | 0-0,2 |
| Mannanase | 0-0,2 | 0-0,2 | 0-0,2 | 0-0,2 | 0-0,2 | 0-0,2 |
| Pectat Lyase | 0-0,3 | 0-0,3 | 0-0,3 | 0-0,3 | 0-0,3 | 0-0,3 |
| water | to 100 | to 100 | to 100 | to 100 | to 100 | to 100 |

| | | | | | | |
|---|---|---|---|---|---|---|
| *Without inventive compound the formulations are comparative examples. | | | | | | |

### Water Soluble Unit Dose Article.

The fabric and home care product can be a water-soluble unit dose article. The water-soluble unit dose article comprises at least one water-soluble film orientated to create at least one unit dose internal compartment, wherein the at least one unit dose internal compartment comprises a detergent composition. The water-soluble film preferably comprises polyvinyl alcohol homopolymer or polyvinyl alcohol copolymer, for example a blend of polyvinylalcohol homopolymers and/or polyvinylalcohol copolymers, for example copolymers selected from sulphonated and carboxylated anionic polyvinylalcohol copolymers especially carboxylated anionic polyvinylalcohol copolymers, for example a blend of a polyvinylalcohol homopolymer and a carboxylated anionic polyvinylalcohol copolymer. In some examples water soluble films are those supplied by Monosol under the trade references M8630, M8900, M8779, M8310. The detergent product comprises a detergent composition, more preferably a laundry detergent composition. Preferably the laundry detergent composition enclosed in the water-soluble unit dose article comprises from between 0.1% and 8%, preferably between 0.5% and 7%, more preferably 1.0% to 6.0% by weight of the detergent composition of the graft polymer of the present invention. Preferably the soluble unit dose laundry detergent composition comprises a non-soap surfactant, wherein the non-soap surfactant comprises an anionic non-soap surfactant and a non-ionic surfactant. More preferably, the laundry detergent composition comprises between 10% and 60%, or between 20% and 55% by weight of the laundry detergent composition of the non-soap surfactant. The weight ratio of non-soap anionic surfactant to nonionic surfactant preferably is from 1:1 to 20:1, from 1.5:1 to 17.5:1, from 2:1 to 15:1, or from 2.5:1 to 13:1. The non-soap anionic surfactants preferably comprise linear alkylbenzene sulphonate, alkyl sulphate or a mixture thereof. The weight ratio of linear alkylbenzene sulphonate to alkyl sulphate preferably is from 1:2 to 9:1, from 1:1 to 7:1, from 1:1 to 5:1, or from 1:1 to 4:1. Example linear alkylbenzene sulphonates are C₁₀-C₁₆ alkyl benzene sulfonic acids, or C₁₁-C₁₄ alkyl benzene sulfonic acids. By 'linear', we herein mean the alkyl group is linear. Example alkyl sulphate anionic surfactant may comprise alkoxylated alkyl sulphate or non-alkoxylated alkyl sulphate or a mixture thereof. Example alkoxylated alkyl sulphate anionic surfactants comprise an ethoxylated alkyl sulphate anionic surfactant. Example alkyl sulphate anionic surfactant may comprise an ethoxylated alkyl sulphate anionic surfactant with a mol average degree of ethoxylation from 1 to 5, from 1 to 3, or from 2 to 3. Example alkyl sulphate anionic surfactant may comprise a non-ethoxylated alkyl sulphate and an ethoxylated alkyl sulphate wherein the mol average degree of ethoxylation of the alkyl sulphate anionic surfactant is from 1 to 5, from 1 to 3, or from 2 to 3. Example alkyl fraction of the alkyl sulphate anionic surfactant are derived from fatty alcohols, oxo-synthesized alcohols, Guerbet alcohols, or mixtures thereof. Preferably the laundry detergent composition comprises between 10% and 50%, between 15% and 45%, between 20% and 40%, or between 30% and 40% by weight of the laundry detergent composition of the non-soap anionic surfactant. In some examples, the non-ionic surfactant is selected from alcohol alkoxylate, an oxo-synthesised alcohol alkoxylate, Guerbet alcohol alkoxylates, alkyl phenol alcohol alkoxylates, or a mixture thereof. Preferably, the laundry detergent composition comprises between 0.01% and 10%, or between 0.01% and 8%, or between 0.1% and 6%, or between 0.15% and 5% by weight of the liquid laundry detergent composition of a non-ionic surfactant. Preferably, the laundry detergent composition comprises between 1.5% and 20%, between 2% and 15%, between 3% and 10%, or between 4% and 8% by weight of the laundry detergent composition of soap, in some examples a fatty acid salt, in some examples an amine neutralized fatty acid salt, wherein in some examples the amine is an alkanolamine preferably monoethanolamine. Preferably the liquid laundry detergent composition comprises less than 15%, or less than 12% by weight of the liquid laundry detergent composition of water. Preferably, the laundry detergent composition comprises between 10% and 40%, or between 15% and 30% by weight of the liquid laundry detergent composition of a nonaqueous solvent selected from 1,2-propanediol, dipropylene glycol, tripropyleneglycol, glycerol, sorbitol, polyethylene glycol or a mixture thereof. Preferably the liquid laundry detergent composition comprises from 0.1% to 10%, preferably from 0.5% to 8% by weight of the detergent composition of further soil release polymers, preferably selected from the group of nonionic and/or anionically modified polyester terephthalate soil release polymers such as commercially available under the Texcare brand name from Clariant, amphiphilic graft polymers such as those based on polyalkylene oxides and vinyl esters, polyalkoxylated polyethyleneimines, and mixtures thereof. Preferably the liquid detergent composition further comprises from 0.1% to 10% preferably from 1% to 5% of a chelant. In some examples, the laundry detergent composition comprises an adjunct ingredient selected from the group comprising builders including citrate, enzymes, bleach, bleach catalyst, dye, hueing dye, brightener, cleaning polymers including (zwitterionic) alkoxylated polyamines, surfactant, solvent, dye transfer inhibitors, perfume, encapsulated perfume, polycarboxylates, structurant, pH trimming agents, and mixtures thereof. Preferably, the laundry detergent composition has a pH between 6 and 10, between 6.5 and 8.9, or between 7 and 8, wherein the pH of the laundry detergent composition is measured as a 10% product concentration in demineralized water at 20°C. When liquid, the laundry detergent composition may be Newtonian or non-Newtonian, preferably non-Newtonian.

The following is an exemplary water-soluble unit dose formulation (Table 2). The composition can be part of a single chamber water soluble unit dose article or can be split over multiple compartments resulting in below "averaged across compartments" full article composition. The composition is enclosed within a polyvinyl alcohol-based water soluble, the polyvinyl alcohol comprising a blend of a polyvinyl alcohol homopolymer and an anionic e.g. carboxylated polyvinyl alcohol copolymer.

**Table 2.**

| Ingredients | Comp. 5 (wt%) |
|---|---|
| Fatty alcohol ethoxylate non-ionic surfactant, C₁₂₋₁₄ average degree of ethoxylation of 7 | 3.8 |
| Lutensol XL100 | 0.5 |
| Linear C₁₁₋₁₄ alkylbenzene sulphonate | 24.6 |
| AE₃S Ethoxylated alkyl sulphate with an average degree of ethoxylation of 3 | 12.5 |
| Citric acid | 0.7 |
| Palm Kernel Fatty acid | 5.3 |
| Nuclease enzyme* (wt% active protein) | 0.01 |
| Protease enzyme (wt% active protein) | 0.07 |
| Amylase enzyme (wt% active protein) | 0.005 |
| Xyloglucanese enzyme (wt% active protein) | 0.005 |
| Mannanase enzyme (wt% active protein) | 0.003 |
| Ethoxylated polyethyleneimine (Lutensol FP620 - PEI₆₀₀EO₂₀) | 1.4 |
| Amphiphilic graft copolymer** | 1.6 |
| Zwitterionic polyamine (Lutensit Z96) | 1.5 |
| Anionic polyester terephthalate (Texcare SRA300) | 0.6 |
| Graft polymer of the present invention | 3.0 |
| HEDP | 2.2 |
| Brightener 49 | 0.4 |
| Silicone anti-foam | 0.3 |
| Hueing dye | 0.05 |
| 1,2 PropaneDiol | 11.0 |
| Glycerine | 4.7 |
| DPG (DiPropyleneGlycol) | 1.7 |
| TPG (TriPropyleneGlycol) | 0.1 |
| Sorbitol | 0.1 |
| Monoethanolamine | 10.2 |
| K₂SO₃ | 0.4 |
| MgCl₂ | 0.3 |
| Water | 10.5 |
| Hydrogenated castor oil | 0.1 |
| Perfume | 2.1 |
| Aesthetic dye & Minors | Balance to 100 |
| pH (10% product concentration in demineralized water at 20°C) | 7.4 |

### Description of super-scripts:

*Nuclease enzyme is as claimed in co-pending European application 19219568.3
**polyethylene glycol graft polymer comprising a polyethylene glycol backbone (Pluriol E6000) and hydrophobic vinyl acetate side chains, comprising 40% by weight of the polymer system of a polyethylene glycol backbone polymer and 60% by weight of the polymer system of the grafted vinyl acetate side chains

### Hand Dishwashing Liquid Composition.

The fabric and home care product can be a dishwashing detergent composition, such as a hand dishwashing detergent composition, more preferably a liquid hand dishwashing detergent composition. Preferably the liquid hand dishwashing detergent composition comprises between 0.1% and 5.0%, preferably between 0.5% and 4%, more preferably 1.0% to 3.0% by weight of the detergent composition of the graft polymer of the present invention. The liquid hand-dishwashing detergent composition preferably is an aqueous composition, comprising from 50% to 90%, preferably from 60% to 75%, by weight of the total composition of water. Preferably the pH of the detergent composition of the invention, measured as a 10% product concentration in demineralized water at 20°C, is adjusted to between 3 and 14, more preferably between 4 and 13, more preferably between 6 and 12 and most preferably between 8 and 10. The composition of the present invention can be Newtonian or non-Newtonian, preferably Newtonian. Preferably, the composition has a viscosity of from 10 mPa·s to 10,000 mPa·s, preferably from 100 mPa·s to 5,000 mPa·s, more preferably from 300 mPa·s to 2,000 mPa·s, or most preferably from 500 mPa·s to 1,500 mPa·s, alternatively combinations thereof. The viscosity is measured at 20°C with a Brookfield RT Viscometer using spindle 31 with the RPM of the viscometer adjusted to achieve a torque of between 40% and 60%.

The composition comprises from 5% to 50%, preferably from 8% to 45%, more preferably from 15% to 40%, by weight of the total composition of a surfactant system. The surfactant system preferably comprises from 60% to 90%, more preferably from 70% to 80% by weight of the surfactant system of an anionic surfactant. Alkyl sulphated anionic surfactants are preferred, particularly those selected from the group consisting of: alkyl sulphate, alkyl alkoxy sulphate preferably alkyl ethoxy sulphate, and mixtures thereof. The alkyl sulphated anionic surfactant preferably has an average alkyl chain length of from 8 to 18, preferably from 10 to 14, more preferably from 12 to 14, most preferably from 12 to 13 carbon atoms. The alkyl sulphated anionic surfactant preferably has an average degree of alkoxylation preferably ethoxylation, of less than 5, preferably less than 3, more preferably from 0.5 to 2.0, most preferably from 0.5 to 0.9. The alkyl sulphate anionic surfactant preferably has a weight average degree of branching of more than 10%, preferably more than 20%, more preferably more than 30%, even more preferably between 30% and 60%, most preferably between 30% and 50%. Suitable counterions include alkali metal cation earth alkali metal cation, alkanolammonium or ammonium or substituted ammonium, but preferably sodium. Suitable examples of commercially available alkyl sulphate anionic surfactants include those derived from alcohols sold under the Neodol^{®} brand-name by Shell, or the Lial^{®}, Isalchem^{®}, and Safol^{®} brand-names by Sasol, or some of the natural alcohols produced by The Procter & Gamble Chemicals company.

The surfactant system preferably comprises from 0.1% to 20%, more preferably from 0.5% to 15% and especially from 2% to 10% by weight of the liquid hand dishwashing detergent composition of a co-surfactant. Preferred co-surfactants are selected from the group consisting of an amphoteric surfactant, a zwitterionic surfactant, and mixtures thereof. The anionic surfactant to the co-surfactant weight ratio can be from 1:1 to 8:1, preferably from 2:1 to 5:1, more preferably from 2.5:1 to 4:1. The co-surfactant is preferably an amphoteric surfactant, more preferably an amine oxide surfactant. Preferably, the amine oxide surfactant is selected from the group consisting of: alkyl dimethyl amine oxide, alkyl amido propyl dimethyl amine oxide, and mixtures thereof, most preferably C₁₂-C₁₄ alkyl dimethyl amine oxide. Suitable zwitterionic surfactants include betaine surfactants, preferably cocamidopropyl betaine.

Preferably, the surfactant system of the composition of the present invention further comprises from 1% to 25%, preferably from 1.25% to 20%, more preferably from 1.5% to 15%, most preferably from 1.5% to 5%, by weight of the surfactant system, of a non-ionic surfactant. Suitable nonionic surfactants can be selected from the group consisting of: alkoxylated non-ionic surfactant, alkyl polyglucoside ("APG") surfactant, and mixtures thereof. Suitable alkoxylated non-ionic surfactants can be linear or branched, primary or secondary alkyl alkoxylated preferably alkyl ethoxylated non-ionic surfactants comprising on average from 9 to 15, preferably from 10 to 14 carbon atoms in its alkyl chain and on average from 5 to 12, preferably from 6 to 10, most preferably from 7 to 8, units of ethylene oxide per mole of alcohol. Most preferably, the alkyl polyglucoside surfactant has an average alkyl carbon chain length between 10 and 16, preferably between 10 and 14, most preferably between 12 and 14, with an average degree of polymerization of between 0.5 and 2.5 preferably between 1 and 2, most preferably between 1.2 and 1.6. C₈-C₁₆ alkyl polyglucosides are commercially available from several suppliers (e.g., Simusol^{®} surfactants from Seppic Corporation; and Glucopon^{®} 600 CSUP, Glucopon^{®} 650 EC, Glucopon^{®} 600 CSUP/MB, and Glucopon^{®} 650 EC/MB, from BASF Corporation).

The liquid hand dishwashing detergent composition herein may optionally comprise a number of other adjunct ingredients such as builders (e.g., preferably citrate), chelants (e.g., preferably GLDA), conditioning polymers, cleaning polymers including polyalkoxylated polyalkylene imines, surface modifying polymers, soil flocculating polymers, sudsing polymers including EO-PO-EO triblock copolymers, grease cleaning amines including cyclic polyamines, structurants, emollients, humectants, skin rejuvenating actives, enzymes, carboxylic acids, scrubbing particles, bleach and bleach activators, perfumes, malodor control agents, pigments, dyes, opacifiers, beads, pearlescent particles, microcapsules, organic solvents, inorganic cations such as alkaline earth metals such as Ca/Mg-ions, antibacterial agents, preservatives, viscosity adjusters (e.g., salt such as NaCl, and other mono-, di- and trivalent salts) and pH adjusters and buffering means (e.g. carboxylic acids such as citric acid, HCl, NaOH, KOH, alkanolamines, phosphoric and sulfonic acids, carbonates such as sodium carbonates, bicarbonates, sesquicarbonates, borates, silicates, phosphates, imidazole and alike).

The following is an exemplary liquid hand dishwashing detergent formulation (Table 3). The formulation can be made through standard mixing of the individual components.

**Table 3.**

| As 100% active | Comp. 6 (wt%) |
|---|---|
| C₁₂₁₃AE_{0.6}S anionic surfactant (Avg. branching : 37,84%) | 19.6 |
| C₁₂₁₄ dimethyl amine oxide | 6.5 |
| Alcohol ethoxylate nonionic surfactant (Neodol 91/8) | 1.0 |
| Alkoxylated polyethyleneimine (PEI₆₀₀EO₂₄PO₁₆) | 0.2 |
| Graft polymer of the present invention | 1.0 |
| Ethanol | 2.4 |
| NaCl | 0.7 |
| Polypropyleneglycol (MW2000) | 0.9 |
| Water + Minor ingredients (perfume, dye, preservatives) | Balance to 100 |
| pH (at 10% product concentration in demineralized water - with NaOH trimming) | 9.0 |

### Solid Free-flowing Particulate Laundry Detergent Composition.

The fabric and home care product can be solid free-flowing particulate laundry detergent composition. The following is an exemplary solid free-flowing particulate laundry detergent composition (Table 4).

**Table 4.**

| Ingredient | Comp. 7 (wt%) |
|---|---|
| Anionic detersive surfactant (such as alkyl benzene sulphonate, alkyl ethoxylated sulphate and mixtures thereof) | from 5 wt% to 25 wt% |
| Non-ionic detersive surfactant (such as alkyl ethoxylated alcohol) | from 0.1 wt% to 4 wt% |
| Cationic detersive surfactant (such as quaternary ammonium compounds) | from 0 wt% to 4 wt% |
| Other detersive surfactant (such as zwiterionic detersive surfactants, amphoteric surfactants and mixtures thereof) | from 0 wt% to 4 wt% |
| Carboxylate polymer (such as co-polymers of maleic acid and acrylic acid and/or carboxylate polymers comprising ether moieties and sulfonate moieties) | from 0.1 wt% to 4 wt% |
| Polyethylene glycol polymer (such as a polyethylene glycol polymer comprising polyvinyl acetate side chains, preferably, Sokalan PG101) | from 0 wt% to 4 wt% |
| Polyester soil release polymer (such as Repel-o-tex and/or Texcare polymers) | from 0 wt% to 2 wt% |
| Cellulosic polymer (such as carboxymethyl cellulose, methyl cellulose and combinations thereof) | from 0.5 wt% to 2 wt% |
| Graft polymer of the present invention | From 0.1 wt% to 4 wt% |
| Other polymer (such as polymers based on polysaccharide) | from 0 wt% to 4 wt% |
| Zeolite builder and phosphate builder (such as zeolite 4A and/or sodium tripolyphosphate) | from 0 wt% to 4 wt% |
| Other co-builder (such as sodium citrate and/or citric acid) | from 0 wt% to 3 wt% |
| Carbonate salt (such as sodium carbonate and/or sodium bicarbonate) | from 0 wt% to 20 wt% |
| Silicate salt (such as sodium silicate) | from 0 wt% to 10 wt% |
| Filler (such as sodium sulphate and/or bio-fillers) | from 10 wt% to 70 wt% |
| Source of hydrogen peroxide (such as sodium percarbonate) | from 0 wt% to 20 wt% |
| Bleach activator (such as tetraacetylethylene diamine (TAED) and/or nonanoyloxybenzenesulphonate (NOBS)) | from 0 wt% to 8 wt% |
| Bleach catalyst (such as oxaziridinium-based bleach catalyst and/or transition metal bleach catalyst) | from 0 wt% to 0.1 wt% |
| Other bleach (such as reducing bleach and/or pre-formed peracid) | from 0 wt% to 10 wt% |
| Photobleach (such as zinc and/or aluminium sulphonated phthalocyanine) | from 0 wt% to 0.1 wt% |
| Chelant (such as ethylenediamine-N'N'-disuccinic acid (EDDS) and/or hydroxyethane diphosphonic acid (HEDP)) | from 0.2 wt% to 1 wt% |
| Hueing agent (such as direct violet 9, 66, 99, acid red 50, solvent violet 13 and any combination thereof) | from 0 wt% to 1 wt% |
| Brightener (C.I. fluorescent brightener 260 or C.I. fluorescent brightener 351) | from 0.1 wt% to 0.4 wt% |
| Protease (such as Savinase, Savinase Ultra, Purafect, FN3, FN4 and any combination thereof) | from 0.1 wt% to 0.4 wt% |
| Amylase (such as Termamyl, Termamyl ultra, Natalase, Optisize, Stainzyme, Stainzyme Plus and any combination thereof) | from 0 wt% to 0.2 wt% |
| Cellulase (such as Carezyme and/or Celluclean) | from 0 wt% to 0.2 wt% |
| Lipase (such as Lipex, Lipolex, Lipoclean and any combination thereof) | from 0 wt% to 1 wt% |
| Other enzyme (such as xyloglucanase, cutinase, pectate lyase, mannanase, bleaching enzyme) | from 0 wt% to 2 wt% |
| Fabric softener (such as montmorillonite clay and/or polydimethylsiloxane (PDMS)) | from 0 wt% to 15 wt% |
| Flocculant (such as polyethylene oxide) | from 0 wt% to 1 wt% |
| Suds suppressor (such as silicone and/or fatty acid) | from 0 wt% to 4 wt% |
| Perfume (such as perfume microcapsule, spray-on perfume, starch encapsulated perfume accords, perfume loaded zeolite, and any combination thereof) | from 0.1 wt% to 1 wt% |
| Aesthetics (such as coloured soap rings and/or coloured speckles/noodles) | from 0 wt% to 1 wt% |
| Miscellaneous | balance to 100 wt% |

### Fibrous Water-soluble Unit Dose Article.

As used herein, the phrases "water-soluble unit dose article," "water-soluble fibrous structure", and "water-soluble fibrous element" mean that the unit dose article, fibrous structure, and fibrous element are miscible in water. In other words, the unit dose article, fibrous structure, or fibrous element is capable of forming a homogeneous solution with water at ambient conditions. "Ambient conditions" as used herein means 23°C ± 1.0°C and a relative humidity of 50% ± 2%. The water-soluble unit dose article may contain insoluble materials, which are dispersible in aqueous wash conditions to a suspension mean particle size that is less than about 20 microns, or less than about 50 microns.

The fibrous water-soluble unit dose article may include any of the disclosures found in U.S. Patent Application No. 15/880,594 filed on January 26, 2018; U.S. Patent Application No. 15/880,599 filed January 26, 2018; and U.S. Patent Application No. 15/880,604 filed January 26, 2018; incorporated by reference in their entirety. Preferred water-soluble fibrous structure comprises particles having a ratio of Linear Alkylbenzene Sulfonate to Alkylethoxylated Sulfate or Alkyl Sulfate of greater than 1.

These fibrous water-soluble unit dose articles can be dissolved under various wash conditions, e.g., low temperature, low water and/or short wash cycles or cycles where consumers have been overloading the machine, especially with items having high water absorption capacities, while providing sufficient delivery of active agents for the intended effect on the target consumer substrates (with similar performance as today's liquid products). Furthermore, the water-soluble unit dose articles described herein can be produced in an economical manner by spinning fibers comprising active agents. The water-soluble unit dose articles described herein also have improved cleaning performance.

### Method of Use.

The compositions of this invention, prepared as hereinbefore described, can be used to form aqueous washing/treatment solutions for use in the laundering/treatment of fabrics. Generally, an effective amount of such compositions is added to water, for example in a conventional fabric automatic washing machine, to form such aqueous laundering solutions. The aqueous washing solution so formed is then contacted, typically under agitation, with the fabrics to be laundered/treated therewith. An effective amount of the liquid detergent compositions herein added to water to form aqueous laundering solutions can comprise amounts sufficient to form from about 500 to 7,000 ppm of composition in aqueous washing solution, or from about 1,000 to 3,000 ppm of the laundry care compositions herein will be provided in aqueous washing solution.

Typically, the wash liquor is formed by contacting the laundry care composition with wash water in such an amount so that the concentration of the laundry care composition in the wash liquor is from above 0g/l to 5g/l, or from 1g/l, and to 4.5g/l, or to 4.0g/l, or to 3.5g/l, or to 3.0g/l, or to 2.5g/l, or even to 2.0g/l, or even to 1.5g/l. The method of laundering fabric or textile may be carried out in a top-loading or front-loading automatic washing machine or can be used in a hand-wash laundry application. In these applications, the wash liquor formed and concentration of laundry detergent composition in the wash liquor is that of the main wash cycle. Any input of water during any optional rinsing step(s) is not included when determining the volume of the wash liquor.

The wash liquor may comprise 40 liters or less of water, or 30 liters or less, or 20 liters or less, or 10 liters or less, or 8 liters or less, or even 6 liters or less of water. The wash liquor may comprise from above 0 to 15 liters, or from 2 liters, and to 12 liters, or even to 8 liters of water. Typically, from 0.01kg to 2kg of fabric per liter of wash liquor is dosed into said wash liquor. Typically, from 0.01kg, or from 0.05kg, or from 0.07kg, or from 0.10kg, or from 0.15kg, or from 0.20kg, or from 0.25kg fabric per liter of wash liquor is dosed into said wash liquor. Optionally, 50g or less, or 45g or less, or 40g or less, or 35g or less, or 30g or less, or 25g or less, or 20g or less, or even 15g or less, or even 10g or less of the composition is contacted to water to form the wash liquor. Such compositions are typically employed at concentrations of from about 500 ppm to about 15,000 ppm in solution. When the wash solvent is water, the water temperature typically ranges from about 5 °C to about 90 °C and, when the situs comprises a fabric, the water to fabric ratio is typically from about 1:1 to about 30:1. Typically the wash liquor comprising the laundry care composition of the invention has a pH of from 3 to 11.5.
In one aspect, such method comprises the steps of optionally washing and/or rinsing said surface or fabric, contacting said surface or fabric with any composition disclosed in this specification then optionally washing and/or rinsing said surface or fabric is disclosed, with an optional drying step.

Drying of such surfaces or fabrics may be accomplished by any one of the common means employed either in domestic or industrial settings. The fabric may comprise any fabric capable of being laundered in normal consumer or institutional use conditions, and the invention is suitable for cellulosic substrates and in some aspects also suitable for synthetic textiles such as polyester and nylon and for treatment of mixed fabrics and/or fibers comprising synthetic and cellulosic fabrics and/or fibers. As examples of synthetic fabrics are polyester, nylon, these may be present in mixtures with cellulosic fibers, for example, polycotton fabrics. The solution typically has a pH of from 7 to 11, more usually 8 to 10.5. The compositions are typically employed at concentrations from 500 ppm to 5,000 ppm in solution. The water temperatures typically range from about 5°C to about 90°C. The water to fabric ratio is typically from about 1:1 to about 30:1.

Another method includes contacting a nonwoven substrate, which is impregnated with the detergent composition, with a soiled material. As used herein, "nonwoven substrate" can comprise any conventionally fashioned nonwoven sheet or web having suitable basis weight, caliper (thickness), absorbency, and strength characteristics. Non-limiting examples of suitable commercially available nonwoven substrates include those marketed under the trade names SONTARA^{®} by DuPont and POLY WEB^{®} by James River Corp.

### Carbon Source of Raw Materials.

The raw materials for preparation of the surfactant, polymers and other fabric and home ingredients can be based on fossil carbon or renewable carbon. Renewable carbon is a carbon source that avoids the use of fossil carbon such as natural gas, coal, petroleum. Typically, renewable carbon is derived from biomass, carbon capture, or chemical recycling.

Biomass is a renewable carbon source formed through photosynthesis in the presence of sunlight, or chemosynthesis process in the absence of sunlight. In some cases, polymers isolated from biomass can be used directly, or further derivatized to make performance polymers. For example, the use of polysaccharide (such as starch) and derivatized polysaccharide (such as cellulose derivatives, guar derivatives, dextran derivatives) in fabric home care composition are known. In some cases, biomass can be converted into basic chemicals under certain thermal, chemical, or biological conditions. For example, bioethanol can be derived from biomass such as straw and further convert to biobased polyethylene glycol. Other nonlimiting examples of renewable carbon from biomass include plants (e.g., sugar cane, beets, corn, potatoes, citrus fruit, woody plants, lignocellulosics, hemicellulosics, cellulosic waste), animals, animal fats, fish, bacteria, fungi, plant-based oils, and forestry products. These resources can be naturally occurring, hybrids, or genetically engineered organisms.

Carbon capture is another renewable carbon source which uses various process to capture CO₂ or methane from industrial or natural processes, or directly from air (direct capture). Captured methane and CO₂ may be converted into syngas, and/or further convert to basic chemicals, including but not limit to methanol, ethanol, fatty alcohols such as C₁₂/C₁₄ or even C₁₆/C₁₈ alcohols, other alcohols, olefins, alkanes, saturated and unsaturated organic acids, etc. These basic chemicals can be used as or further convert to monomers for making transformed to usable chemicals by e.g., catalytic processes, such as the Fischer-Tropsch process or by fermentation by C₁ -fixing microorganisms.
Chemical recycling is another renewable carbon source which allows plastics from waste management industry to be recycled and converted into base chemicals and chemical feedstocks. In some cases, waste plastics which cannot be re-used or mechanically recycled are convert to hydrocarbons or basic petrochemicals through gasification, pyrolysis or hydrothermal treatment processes, the hydrocarbons and basic petrochemicals can be further convert into monomers for polymers. In some cases, waste plastics are depolymerized into monomers to make new polymers. It is also possible that waste plastics are depolymerized into oligomers, the oligomers can be used as building blocks to make new polymers. The waste plastic converted by various processes to a waste plastic feedstock for the above materials may either be used alone or in combination with traditional surfactant feedstocks, such as kerosene, polyolefins derived from natural gas, coal, crude oil or even biomass, or waste fat/oil-derived paraffin and olefin, to produce biodegradable surfactants for use in detergents and other industries (thereby providing a benefit to society).

Preferably, the surfactant, polymers and other ingredients contains renewable carbon, the Renewable Carbon Index (RCI, a measure of sustainability by dividing the number of carbons derived from renewable sources by the total number of carbons in an active ingredient) of the polymer is above 10%, more preferably above 30%, more preferably above 50%, more preferably above 60%, more preferably between 70% to 100%, and most preferably 100%.

### EXAMPLES

### Method to determine the Molecular Weights:

The number average molecular weight (Mₙ), the weight average molecular weight (M_{w}) and the polydispersity M_{w}/Mₙ of the graft polymers were determined by gel permeation chromatography (GPC) in dimethylacetamide (DMAc). The mobile phase (eluent) used was DMAc comprising 0.5 wt% of lithium chloride. The concentration of graft polymer in DMAc was 4 mg/mL. After filtration (pore size 0.2 µm), 100 µL of this solution were injected into the GPC system. Four columns were used for separation (Plgel 10µ precolumn, Plgel 3µm, Plgel 3µm, Plgel 3µm). The GPC system was operated at a flow rate of 0.5 mL/min. A DRI Agilent 1100 was used as the detection system. Poly(ethylene glycol) (PEG) standards (PL) having a molecular weight Mₙ from 238 to 44 000 g/mol were used for calibration.

### Synthesis:

The following general procedures were performed using the material, ratios and amounts as indicated in Table 5 to prepare inventive and comparative graft polymers.
A polymerization vessel equipped with stirrer and reflux condenser was initially charged with backbone precursor (A0) (amount of backbone: see Table 5) under a nitrogen atmosphere and heated to 90 °C. If salt addition is required (see Table 5), a 10 wt% solution of the corresponding salt in methanol (in case of potassium benzoate, ethanol was used instead of methanol) was prepared and added to the backbone under stirring. The mixture was stirred for 1 h at 90 °C. Subsequently, a dynamic vacuum was applied until 50 mbar was reached to remove the methanol*. A 10 wt% solution of tert-butyl peroxy-2-ethylhexanoate in tripropylene glycol was prepared for Feed 1 (amount of radical initiator: see Table 5). 5 wt% of Feed 1 were added within 10 minutes upon the simultaneous start of Feed 2 ((B 1-1), amount: see Table 5) and optionally Feed 3 ((B2-1), amount: see Table 5) which were dosed together with the residual amount of Feed 1 within 6 h with a constant feed rate. Upon completion of Feed 1, Feed 2, and Feed 3, the temperature was raised to 95 °C and a 10 wt% solution of tert-butyl peroxy-2-ethylhexanoate (amount: see Table 5) was added via Feed 4 within 1 h with a constant feed rate for post-treatment. The mixture was stirred for 1 h at 95 °C upon complete addition of the feed. A vacuum of 100 mbar was applied to remove the volatiles to yield a polymer mixture.

The polyalkylene oxides were either commercially available and purchased or synthesized according to published procedures.

**Table 5. Synthesis of comparative polymers and inventive polymers**

| Group | Samples | Backbone precursor (A0) ^{[1]} | | | Graft monomer type | | Weight Ratio ^{[6]} |
|---|---|---|---|---|---|---|---|
| | | Type/MW | EO% | Amount [g] | B1-1 ^{[2]} | B2-1^{[3]} | (A0) : B1-1 : B2-1 |
| A | Comparative-A1 | PEG/1500 | 100 | 338 | VAc | - | 75 : 25 : 0 |
| | Inventive-A1 | PEG/1500 | 100 | 750 | VAc | - | 75 : 25 : 0 |
| | Inventive-A2 | PEG/1500 | 100 | 750 | VAc | - | 75 : 25 : 0 |
| B | Comparative-B1 | PEG/1500 | 100 | 280 | VAc | - | 60 : 40 : 0 |
| | Comparative-B2 | PEG/1500 | 100 | 360 | VAc | - | 40 : 60: 0 |
| | Inventive-B1 | PEG/1500 | 100 | 360 | VAc | - | 60 : 40 : 0 |
| | Inventive-B2 | PEG/1500 | 100 | 500 | VAc | - | 60 : 40 : 0 |
| C | Comparative-C1 | PEG/1500 | 100 | 337 | VAc/VL | - | 75 : (20+5) : 0 |
| | Inventive-C1 | PEG/1500 | 100 | 750 | VAc/VL | - | 75 : (20+5) : 0 |
| D | Comparative-D1 | PEG/2000 | 100 | 700 | VAc | NVP | 70 : 10 : 20 |
| | Inventiv-D1 | PEG/2000 | 100 | 560 | VAc | NVP | 70 : 10 : 20 |
| E | Comparative-E1 | PEG/3000 | 100 | 700 | VAc | NVP | 70 : 10 : 20 |
| | Inventiv-E1 | PEG/3000 | 100 | 560 | VAc | NVP | 70 : 10 : 20 |
| F | Comparative-F1 | PEG/3000 | 100 | 750 | VAc | NVP | 75 : 10 : 15 |
| | Inventiv-F1 | PEG/3000 | 100 | 525 | VAc | NVP | 75 : 10 : 15 |
| G | Comparative-G1 | PEG/3000 | 100 | 480 | VAc | - | 60 : 40 : 0 |
| | Comparative-G2 | PEG/3000 | 100 | 360 | VAc | - | 60 : 40 : 0 |
| | Inventiv-G1 | PEG/3000 | 100 | 360 | VAc | - | 60 : 40 : 0 |
| | Inventiv-G2 | PEG/3000 | 100 | 360 | VAc | - | 60 : 40 : 0 |
| | Inventiv-G3 | PEG/3000 | 100 | 360 | VAc | - | 60 : 40 : 0 |
| H | Inventiv-H1 | EO-PO-EO/2900 | 40 | 750 | VAc | - | 75 : 25 : 0 |

**(continued) Table 5. Synthesis of comparative polymers and inventive polymers**

| Group | Samples | Salt type and amount [mg/kg] | | Amount rad. initiator ^{[7]} [g] |
|---|---|---|---|---|
| | | Type ^{[4]} | Amount ^{[5]} | Feed 1 / Feed 4 |
| A | Comparative-A1 | -- | <7 | 1.61 / 2.20 |
| | Inventive-A1 | KOAc | 699 | 3.57 / 4.90 |
| | Inventive-A2 | KOAc | 1442 | 3.57 / 4.90 |
| B | Comparative-B1 | -- | <7 | 2.61 / 1.65 |
| | Comparative-B2 | -- | <7 | 6.52 / 4.32 |
| | Inventive-B1 | KOAc | 4363 | 3.36 / 2.12 |
| | Inventive-B2 | KOBz | 2366 | 4.67 / 2.95 |
| C | Comparative-C1 | -- | <7 | 1.61 / 2.20 |
| | Inventive-C1 | KOAc ^{[9]} | 699 | 3.57 / 4.90 |
| D | Comparative-D1 | -- | <7 | 7.14 / 4.08 |
| | Inventiv-D1 | KOAc | 1992 | 5.71 / 3.27 |
| E | Comparative-E1 | -- | <7 | 7.14 / 4.08 |
| | Inventiv-E1 | KOAc | 1992 | 5.71 / 3.27 |
| F | Comparative-F1 | -- | <7 | 5.10 / 4.08 |
| | Inventiv-F1 | KOAc | 402 | 3.57 / 2.86 |
| G | Comparative-G1 | -- | <7 | 4.48 / 2.53 |
| | Comparative-G2 | NH₄OAc | 1170 ^{[8]} | 3.36 / 2.12 |
| | Inventiv-G1 | KOAc | 1992 | 3.36 / 2.12 |
| | Inventiv-G2 | KOAc | 3983 | 3.36 / 2.12 |
| | Inventiv-G3 | CsOAc | 6789 | 3.36 / 2.12 |
| H | Inventiv-H1 | KOAc | 3192 | 3.57 / 4.90 |

| | | | | |
|---|---|---|---|---|
| ^{[1]} PEG = polyethylene glycol; EO-PO-EO = tri-block polymer of ethylene oxide (EO) and propylene oxide (PO), where EO blocks are at the two ends of the triblock; PO-EO-PO = tri-block polymer of ethylene oxide (EO) and propylene oxide (PO), where PO blocks are at the two ends of the triblock. ^{[2]} VAc = vinyl acetate; VL = vinyl laurate. ^{[3]} NVP = N-vinyl pyrrolidone. ^{[4]} KOAc = potassium acetate; NH₄OAc = ammonium acetate; CsOAc = cesium acetate; KOBz = potassium benzoate. ^{[5]} Amount of metal (potassium, cesium) from metal-salt in mg/kg based on the amount of backbone precursor (A0) after addition of salt. Determined by elemental analysis. ^{[6]} Composition based on the amount of raw materials. ^{[7]} free radical-forming initiator (C) = tert-Butyl peroxy-2-ethylhexanoate. ^{[8]} Calculated amount of ammonium in mg/kg based on the amount of backbone precursor (A0) after addition of salt. ^{[9]} Solution of potassium acetate in H₂O (50 wt%). | | | | |

### Characterization of polymer backbone (A):

Inventive graft polymer (Inventive-G1) and comparative graft polymer (Comparative-G1) were investigated for the occurrence of transesterification.
For Inventive-G1, ¹HNMR spectroscopy showed the presence of a peak assigned to ethylene oxide carrying acetate end-groups, besides unreacted ethylene oxide groups, i.e. ethylene oxide groups without acetate end-groups. The degree of end-group functionalization was estimated to be 90%. In this specific case, the polymer backbone (A) is predominantly: AcO-[PEG/3000]-OAc.

For Comparative G1, no distinct peak to be assigned to acetate end-groups was observed in ¹HNMR. Thus, for Comparative G1, the degree of end-group functionalization is 0%, the polymer backbone (A) is essentially PEG/3000, which is the precursor (A0).
The characterization of polymer backbone (A) for other inventive and comparative polymers are summarized in Table 5.

### Polymer biodegradation

Biodegradation in wastewater was tested three times using the manometric respirometry OECD 301F method. 30 mg/mL test substances were inoculated into wastewater taken from Mannheim Wastewater Treatment Plant and incubated in a closed flask at 25 °C for 28 days. The consumption of oxygen during this time was measured as the change in pressure inside the flask using an OxiTop C (WTW). Evolved CO₂ was absorbed using an NaOH solution. The amount of oxygen consumed by the microbial population during biodegradability of the test substance, after correction using a blank, is expressed as a percentage of the ThOD (Theoretical Oxygen Demand).

The biodegradation test results (% at 28 days) for both comparative and inventive polymers are summarized in Table 6 (Group A to Group I). Within each polymer group, inventive and comparative graft polymers have the save backbone to graft ratio. Clearly, inventive graft polymers show improved biodegradability vs comparative graft polymers.

**Table 6. Polymer structure and biodegradability.**

| Group | Samples | Polymer backbone (A) ^{[1]} | Polymeric sidechains (B) | | Ratio ^{[6]} | Biodeg 28d ^{[4]} |
|---|---|---|---|---|---|---|
| | | | B1-1 ^{[2]} | B2-1 ^{[3]} | (A0) : B1-1 : B2-1 | % |
| A | Comparative-A1 | PEG/1500 | VAc | - | 75 : 25 : 0 | 61 |
| | Inventive-A1 | AcO-[PEG/1500]-OAc | VAc | - | 75 : 25 : 0 | 76 |
| | Inventive-A2 | AcO-[PEG/1500]-OAc | VAc | - | 75 : 25 : 0 | 79 |
| B | Comparative-B1 | PEG/1500 | VAc | - | 60 : 40 : 0 | 50 |
| | Comparative-B2 | PEG/1500 | VAc | - | 60 : 40 : 0 | 47 |
| | Inventive-B1 | AcO-[PEG/1500]-OAc | VAc | - | 60 : 40 : 0 | 65 |
| | Inventive-B2 | AcO -[PEG/1500]- AcO | VAc | - | 60 : 40 : 0 | 72 |
| C | Comparative-C1 | PEG/1500 | VAc/V L | - | 75 : (20+5) : 0 | 45 |
| | Inventive-C1 | AcO-[PEG/1500]-OAc | VAc/V L | - | 75 : (20+5) : 0 | 71 |
| D | Comparative-D1 | PEG/2000 | VAc | NVP | 70 : 10 : 20 | 46 |
| | Inventiv-D1 | AcO-[PEG/2000]-OAc | VAc | NVP | 70 : 10 : 20 | 54 |
| E | Comparative-E1 | PEG/3000 | VAc | NVP | 70: 10: 20 | 38 |
| | Inventiv-E1 | AcO-[PEG/3000]-OAc | VAc | NVP | 70 : 10 : 20 | 51 |
| F | Comparative-F1 | PEG/3000 | VAc | NVP | 75 : 10 : 15 | 41 |
| | Inventiv-F1 | AcO-[PEG/3000]-OAc | VAc | NVP | 75 : 10 : 15 | 49 |
| G | Comparative-G1 | PEG/3000 | VAc | - | 60:40:0 | 22 |
| | Comparative-G2 | PEG/3000 | VAc | - | 60:40:0 | 28 |
| | Inventiv-G1 | AcO-[PEG/3000]-OAc | VAc | - | 60:40:0 | 50 |
| | Inventiv-G2 | AcO-[PEG/3000]-OAc | VAc | - | 60:40:0 | 45 |
| | Inventiv-G3 | AcO-[PEG/3000]-OAc | VAc | - | 60:40:0 | 51 |
| H | Inventiv-H1 | AcO-[EO-PO-EO/2900]-OAc | VAc | - | 75:25:0 | 70 |

| | | | | | | |
|---|---|---|---|---|---|---|
| ^{[1]} PEG = polyethylene glycol; EO-PO-EO = tri-block polymer of ethylene oxide (EO) and propylene oxide (PO), where EO blocks are at the two ends of the triblock ^{[2]} VAc = vinyl acetate; VL = vinyl laurate ^{[3]} NVP = N-vinyl pyrrolidone ^{[4]} According to OECD 301 F, 28 days data reported. ^{[6]} Composition based on the amount of raw materials. | | | | | | |

Clay anti-redeposition performance of graft polymers:
The following fabrics were provided for the Clay anti-redeposition performance test:
1. EQPE1: Polyester test fabrics available from Warwick EQUEST in Consett England.
2. EQPC1: Flat Polycotton test fabrics available from Warwick EQUEST in Consett England.
3. Cotton M-0403: Knitted cotton available from Testex GmbH & Co.KG in Bad Münstereifel Germany.

A heavy-duty liquid detergent formulation according to Table 7 was prepared for performance testing.

**Table 7. Heavy duty liquid detergent formulation**

| Ingredient | Amount [wt%] |
|---|---|
| Sodium dodecylbenzenesulfonate | 6.9 |
| Sodium laureth sulfate | 11.3 |
| Lutensol AO7 (C₁₃C₁₅-Oxo alcohol + 7 EO) | 7.0 |
| Fatty Acid C₁₂-₁₈ | 1.0 |
| 1,2-Propylene Glycol | 6.0 |
| Ethanol | 2.0 |
| Water | Balance |

"Washed and FE Treated" fabrics were prepared according to the following method: 400 g of fabrics were washed in a WE Miniwasher (3.5 L water) twice using the short program (45 minute wash cycle followed by three rinse cycles; total program is 90 minutes) at 60 °C with 18.6 g Ariel^{™} Compact powder detergent, twice using the short program, at 60 °C without detergent, and then three times using the short program at 40 °C with 8.2 g LenorTM Concentrate (a fabric enhancer) into each main wash. Fabrics are dried in a tumble dryer on extra dry until dry.

"Washed" fabrics were prepared according to the following method: 400 g of fabrics were washed in a WE Miniwasher (3.5 L water) twice using the short program (45 minute wash cycle followed by three rinse cycles; total program is 90 minutes) at 60 °C with 18.6 g ArielTM Compact powder detergent and twice using the short program, at 60°C without detergent. Fabrics were dried in a tumble dryer on extra dry until dry.
Clay anti-redeposition method for heavy duty liquid (HDL) formulation
Four fabric samples were prepared: (1) Polycotton, washed; (2) Knitted Cotton, washed; (3) NA Polyester, washed; and (4) FE treated, knitted washed and FE treated.

Each sample was run in a 96 well plate simulated washing system that uses magnetized bearings to simulate the agitation of a typical full scale washing machine according to the following conditions: 750 ppm detergent of Table 7, 150 µL of water per well (25 °C, water hardness of 1.0 mM (3:1 Ca²⁺ : Mg²⁺ molar ratio)), wash pH of 8.03, 3000 ppm Arizona test dust (clay supplied by PTI, Powder Technology Inc).

Each polymer listed in **Table 5** was added at 15 ppm of the wash solution. Each fabric was washed for 60 minutes and dried in the dark under ambient conditions. For each wash condition, there were two 96 well plates, and eight internal replicates per 96 well plate, for a total of 16 replicates per wash condition.

When the samples were dry, L*, a*, b* and CIE WI (Whiteness Index) were measured on each 96 well plate spot using a Spectrolino imaging system (Gretag Macbeth, Spectro Scan 3.273). For each treatment, the average CIE WI was determined. Delta CIE WI, as reported in Table 9, is the difference of the average CIE WI of a respective sample vs. the average CIE WI of a control sample without the tested polymer.
The whiteness index (WI) as determined on several different fibre materials was calculated as follows: "Comparable scaling indicator" (for example listed) = (Sum (WI all fabric tested with technology A) × 100 )/Sum (all WI fabric tested without polymer) with this comparison being set at "100" for the test using no graft polymer. For the whiteness index, the CIE whiteness index formula was used, and delta WI was calculated as follows: delta WI on a substrate = WI technology - WI without polymer.
Clay anti-redeposition performance test was carried out using 3000 ppm clay, 750 ppm HDL and 15 ppm polymer. All amounts are based on 100% active substance.

A single Unit Dose detergent formulation according to Table 8 was prepared for Clay anti-redeposition performance testing.

**Table 8. Single Unit Dose detergent formulation.**

| Ingredient | amount [wt%] |
|---|---|
| Sodium dodecylbenzenesulfonate | 25 |
| Lutensol AO7 (C₁₃C₁₅-Oxo alcohol + 7 EO) | 30 |
| Glycerol | 9.0 |
| 1,2-Propylene glycol | 6.0 |
| Edenor cocofatty acid K12-18 | 8.0 |
| Ethanolamine | 6.8 |
| Ethanol | 2 |
| Water | Balance |

### Clay anti-redeposition method for Single Unit Dose (SUD) formulation

Four fabric samples were prepared: (1) Polycotton, washed; (2) Knitted Cotton, washed; (3) NA Polyester, washed; and (4) FE treated, knitted washed and FE treated.

Each sample was run in a 96 well plate simulated washing system that uses magnetized bearings to simulate the agitation of a typical full scale washing machine according to the following conditions: 2000 ppm detergent of Table 8, 150 µL water per well (25°C, water hardness of 2.5 mM (3:1 Ca²⁺ : Mg²⁺ molar ratio)), wash pH of 8.03, 3000 ppm Arizona test dust (clay supplied by PTI, Powder Technology Inc) and 46.9 ppm of a commercial pod film (^{©}Ariel Color All in one).

Each polymer listed in Table 5 was added at 119 ppm to the wash solution. Each fabric is washed for 60 minutes and dried in the dark under ambient conditions. For each wash condition, there were two 96 well plates, and eight internal replicates per 96 well plate, for a total of 16 replicates per wash condition.

When the samples were dry, L*, a*, b* and CIE WI (Whiteness Index) were measured on each 96 well plate spot using a Spectrolino imaging system (Gretag Macbeth, Spectro Scan 3.273). For each treatment, the average CIE WI was determined. Delta CIE WI, as reported in Table 9, is the difference of the average CIE WI of a respective sample vs. the average CIE WI of a control sample without the tested polymer.
The whiteness index (WI) as determined on several different fibre materials was calculated as follows: "Comparable scaling indicator" (for example listed) = (Sum (WI all fabric tested with technology A) × 100)/Sum (all WI fabric tested without polymer) with this comparison being set at "100" for the test using no graft polymer. For the whiteness index, the CIE whiteness index formula was used, and delta WI was calculated as follows: delta WI on a substrate = WI technology - WI without polymer.
Clay anti-redeposition test was carried out using 3000 ppm clay, 2000 ppm SUD and 119 ppm polymer. All amounts are based on 100 % active polymer content.

**Table 9.**

| Example # | Example | DWI Clay HDL vs no polymer | DWI Clay SUD vs no polymer |
|---|---|---|---|
| 2 | Inventive-A1 | 17.8 | 6.4 |
| 3 | Inventive-A2 | 11.6 | 3.1 |
| 4 | Inventive-B1 | 26.0 | 10.2 |
| 5 | Inventive-B2 | 31.7 | 7.5 |
| 11 | Inventive-C1 | 15.7 | 9.1 |
| 14 | Inventive-D1 | 25.3 | 23.2 |
| 15 | Inventive-E1 | 29.0 | 31.7 |
| 16 | Inventive-F1 | 24.7 | 16.2 |
| 6 | Inventive-G1 | 21.6 | 14.9 |
| 7 | Inventive-G2 | 32.5 | 20.1 |
| 8 | Inventive-G3 | 42.8 | 16.1 |
| 10 | Inventive-H1 | 19.6 | 10.0 |

### Polymer whiteness benefit in liquid detergent and performance stability.

### Method for Evaluating Whiteness Benefit of Polymers

Whiteness maintenance, also referred to as whiteness preservation, is the ability of a detergent to keep white items from whiteness loss when they are washed in the presence of soils. White garments can become dirty/dingy looking over time when soils are removed from dirty clothes and suspended in the wash water, then these soils can re-deposit onto clothing, making the clothing less white each time they are washed.

The whiteness benefit of polymers of the present disclosure is evaluated using automatic Tergotometer with 10 pots for laundry formulation testing.

SBL2004 test soil strips supplied by WFK Testgewebe GmbH are used to simulate consumer soil levels (mix of body soil, food, dirt etc.). On average, every 1 SBL2004 strip is loaded with 8g soil. The SBL2004 test soil strips were cut into 5×5 cm squares for use in the test.
White Fabric swatches below purchased from WFK Testgewebe GmbH are used as whiteness tracers.

| Code | Fiber Content | % Fiber Content | Construction | Size | WFK Code |
|---|---|---|---|---|---|
| CK | Cotton | 100 | Weft Knit | (5×5cm) | 19502_5×5_stamped |
| PC | Polyester/cotton | 65/35 | Weave | (5×5cm) | 19503_5×5_stamped |
| PE | Polyester | 100 | Weft Knit | (5×5cm) | 19508_5×5_stamped |
| PS | Polyester/Spandex^{™} | 95/5 | Weft Knit | (5×5cm) | 19507_5×5_stamped |

Additional ballast (background fabric swatches) are also used to simulate a fabric load and provide mechanical energy during the real laundry process. Ballast loads are comprised of cotton and polycotton knit swatches at 5×5 cm size.
4 cycles of wash are needed to complete the test:
Cycle 1: Desired amount of detergent is fully dissolved by mixing with 1L of water (at defined hardness) in each tergotometer port. 60 grams of fabrics, including whiteness tracers (4 types, each with 4 replicates), 21 pieces 5×5 cm SBL2004, and ballast are washed and rinsed in the tergotometer pot under defined conditions.
   In the test of water-soluble unit dose composition, wash concentration is 2000ppm. Additional 47 ppm PVOH film is also added to the tergotometer pot. The wash temperature is 30°C, water hardness is 20gpg.
Cycle 2: The whiteness tracers and ballast from each pot are then washed and rinsed again together with a new set of SBL2004 (5×5cm, 21 pieces) follow the process of cycle 1. All other conditions remain same as cycle 1.
Cycle 3: The whiteness tracers and ballast from each pot are then washed and rinsed again together with a new set of SBL2004 (5×5cm, 21 pieces) follow the process of cycle 1. All other conditions remain same as cycle 1.
Cycle 4: The whiteness tracers and ballast from each port are then washed and rinsed again together with a new set of SBL2004 (5×5cm, 21 pieces) follow the process of cycle 1. All other conditions remain same as cycle 1.
After Cycle 4, all whiteness tracers & ballast are tumbled dried between 60-65°C until dry, then WI(CIE) of the dry tracers is measured using Konica Minolta CM-3610D spectrophotometer.

The following liquid water-soluble unit dose composition A (without inventive graft polymer), compositions B (with inventive graft polymer I), were prepared using traditional methods known to those of ordinary skill in the art by mixing the listed ingredients (Table 10).

**Table 10.**

| | A | B |
|---|---|---|
| LAS (wt%) | 25.34 | 25.34 |
| AES (wt%) | 12.85 | 12.85 |
| AE NI (wt%) | 3.72 | 3.72 |
| Suds Suppressor (wt%) | 0.26 | 0.26 |
| Inventiv-G1 (wt%) | 0 | 5.50 |
| HEDP (wt%) | 2.27 | 2.27 |
| Monoethanolamine (wt%) | 10.51 | 10.51 |
| 1,2 PropaneDiol (wt%) | 16.76 | 16.76 |
| DiPropyleneGlycol (wt%) | 0.85 | 0.85 |
| K₂SO₃ (wt%) | 0.37 | 0.37 |
| MgCl₂ (wt%) | 0.32 | 0.32 |
| Citric Acid (wt%) | 0.71 | 0.71 |
| Fatty Acid (wt%) | 5.44 | 5.44 |
| Glycerine (wt%) | 5.67 | 5.67 |
| Brightener (wt%) | 0.34 | 0.34 |
| Dye (wt%) | 0.009 | 0.009 |
| Enzymes (including Protease, Amylase, and Mannanase) (wt%) | 0.080 | 0.080 |
| Preservative (wt%) | 0.003 | 0.003 |
| Perfume (wt%) | 2.20 | 2.20 |
| Hueing Dye (wt%) | 0.047 | 0.047 |
| Water / minors (wt%) | Balance | Balance |

The whiteness maintenance performance was tested according to the method for evaluating the whiteness benefits of polymers described above, with ΔWCIE vs nil polymer (composition A) reported in Tabel 11. This result suggests that inventive graft polymers deliver strong whiteness performance. The same whiteness maintenance performance test was conducted on composition B after being stored at 35°C for 10 weeks, 33 weeks, and 52 weeks, and no performance drop was detected compared to freshly made composition B.

**Table 11. Whiteness benefit of polymers.**

| | Graft polymer | ΔWCIE (PE) |
|---|---|---|
| Composition A (comparative composition) | - | 0.0 (Ref) |
| Composition B (inventive composition) | Inventiv-G1 | +24.7 |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A fabric and home care composition comprising a graft polymer, wherein the graft polymer comprises:
(A) a polymer backbone (A) as a graft base, wherein the polymer backbone (A) has the structure:
R¹-O-[P-O]ₓ-[Q-O]_{y}-[P-O]_{z}-R²
wherein:
P, Q is, each independently, selected from CH₂-CH₂, CH₂-CH(CH₃), CH₂-CH(CH₂CH₃), CH(CH₃)-CH(CH₃), CH₂-CH(CH₂CH₂CH₃), CH(CH₃)-CH(CH₂CH₃);
x, y, z is, each independently, an average number between 0 and 450, and the sum of x, y, z is between 10 and 450, preferably between 20 and 200, preferably between 30 and 120, more preferably between 40 to 90, such as 80, 70, 60;
R¹, R² is, each independently, selected from H or -(C=O)-R³; with at least one of the R¹ or R² being -(C=O)-R³;
R³ is, each independently, a C₁-C₂₀ alkyl; and
(B) polymeric sidechains (B) grafted onto the polymer backbone (A), wherein the polymeric sidechains (B) comprise at least one structural unit -[B1]- and optionally one or more structural unit selected from -[B2]-, -[B3]- and -[B4]-, wherein:
-[B1]- is -CH₂-CH(O-CO-R³)-, wherein R³ is, each independently, C₁-C₂₂ alkyl;
-[B2]- is -CH₂-CH(W)-, wherein W is an organic group that comprises at least one nitrogen atom, selected from an organic group comprising a pyrrolidone ring, a piperidone ring, or a caprolactam ring.
-[B3]- is -CH₂-CH(OH)-.
-[B4]- is 0 to 5 wt% of -CH₂-CH(Y)-, wherein Y is H or an organic group comprising 1 to 20 carbon atoms, wherein -[B4]- is different from - [B1]-, -[B2]-, -[B3]-, the weight percent being based on the sum of - [B1]-, -[B2]-, -[B3]- and -[B4]-.

2. The fabric and home care composition according to claim 1, wherein the graft polymer has a weight-average molecular weight Mw of from 1,000 to 100,000 g/mol.

3. The fabric and home care composition according to any preceding claim, wherein at least 10% of R¹ and/or R² is -(C=O)-R³.

4. The fabric and home care composition according to any preceding claim, wherein the graft polymer has a polydispersity Mw/Mn of less than 7, with Mw being the weight average molecular weight and Mn being the number average molecular weight.

5. The fabric and home care composition according to any preceding claim, wherein the graft polymer comprises from 20 to 95 wt%, preferably from 50 to 75 wt%, of the polymer backbone (A), and from 5 to 80 wt%, preferably from 25 to 50 wt%, of the polymeric sidechains (B), relative to the total weight of the graft polymer.

6. The fabric and home care composition according to any preceding claim, wherein the polymer backbone (A) has a number average molecular weight Mn of at most 20,000 g/mol, preferably at most 8,000 g/mol, preferably at most 7,000 g/mol, preferably at most 5,000 g/mol, preferably at most 4,000 g/mol, such as at most 3,500 g/mol, at most 3,000 g/mol or at most 2,500 g/mol, and preferably at least 500 g/mol, more preferably at least 1,000 g/mol, most preferably at least 1,500 g/mol.

7. The fabric and home care composition according to any preceding claim, wherein the total molecular weight of -CH₂-CH₂-O- moieties in the polymer backbone (A) is at least 40 wt%, preferably at least 70 wt%, more preferably at least 80 wt%, based on the molecular weight of the polymer backbone (A).

8. The fabric and home care composition according to any preceding claim, wherein the P in the polymer backbone (A) is -CH₂-CH₂-.

9. The fabric and home care composition according to any preceding claim, wherein both P and Q in the polymer backbone (A) are -CH₂-CH₂-.

10. The fabric and home care composition according to any preceding claim, wherein P in the polymer backbone (A) is -CH₂-CH₂-, and Q in the polymer backbone (A) is -CH₂-CH(CH₃).

11. The fabric and home care composition according to any preceding claim, wherein at least one of the R¹ or R² in the polymer backbone (A), is -(C=O)-R³ and wherein R³ is, each independently, a C₁-C₁₂ alkyl; preferably, R³ is selected from -CH₃, -CH₂CH₃; more preferably, R³ is -CH₃.

12. The fabric and home care composition according to any preceding claim, wherein:
-[B1]- is -CH₂-CH(O-CO-R³)-, wherein R³ is, each independently, C₁-C₂₀ alkyl, preferably, each independently, derived from polymerization of vinyl ester monomer (B1-1) selected from vinyl acetate, vinyl propionate, vinyl laurate, vinyl valerate, vinyl pivalate, vinyl neodecanoate, vinyl decanoate, more preferably selected from vinyl acetate, vinyl propionate and vinyl laurate, most preferably vinyl acetate;
-[B2]- is -CH₂-CH(W)-, wherein W is an organic group that comprises at least one nitrogen atom derived from vinyl pyrrolidone, vinyl piperidone, and vinyl caprolactam.

13. The fabric and home care composition according to any preceding claim, wherein the polymeric sidechains (B) comprise at least one of the following combinations (I) to (IV):
I)
(B1-1) comprises at least 90 wt% vinyl acetate, and preferably is vinyl acetate and optionally hydrolyzed.
(B2-1) comprises N-vinyl caprolactam, and N-vinylpyrrolidone, and
(B4-1) is not present;
II)
(B1-1) comprises at least 90 wt% vinyl acetate, and preferably is vinyl acetate,
(B2-1) comprises N-vinylpyrrolidone, and
(B4-1) is not present;
III)
(B1-1) comprises at least 90 wt% vinyl acetate, and preferably is vinyl acetate,
(B2-1) comprises N-vinyl caprolactam, and
(B4-1) is not present;
IV)
(B1-1) comprises at least 90 wt% vinyl acetate, and preferably is vinyl acetate,
(B2-1) is not present; and
(B4-1) is present.

14. The fabric and home care composition according to any preceding claim, wherein the composition further comprises a fabric home care ingredient selected from a surfactant, an enzyme, a modified polyamine, a polyester soil release polymer, and any combination thereof, and wherein the composition has a pH between 2 and 11, wherein the pH of the composition is measured as a 10wt% product concentration in demineralized water at 20°C.

15. Process of making a fabric and home care composition, the process comprising the steps:
(1) providing a graft polymer obtained by the polymerization of:
(a) at least one vinyl ester monomer (B1-1);
(b) optionally at least one ethylenically unsaturated nitrogen-containing monomer (B2-1); and
in the presence of:
(i) a polymer backbone precursor (A0),
H-O-[P-O]ₓ-[Q-O]_{y}-[P-O]_{z} -H (A0)
wherein:
P, Q is, each independently, selected from CH₂-CH₂, CH₂-CH(CH₃), CH₂-CH(CH₂CH₃), CH(CH₃)-CH(CH₃), CH₂-CH(CH₂CH₂CH₃), CH(CH₃)-CH(CH₂CH₃); and
x, y, z is, each independently, an average number of from 0 to 450, and the sum of x, y, z is from 10 to 450, preferably from 20 to 200, preferably from 30 to 120, more preferably from 40 to 90, such as 80, 70, or 60; and
(ii) from 10 to 15,000 mg/kg, relative to the amount of the polymer backbone precursor (A0), of at least one salt selected from an alkali metal salt and/or an earth alkaline metal salt, calculated as weight of metal; and
(2) contacting the graft polymer provided in step 1 with at least one fabric home care ingredient.
